# EUROPEAN PATENT SPECIFICATION

(11) **EP 2 854 376 B1**
(45) Date of publication and mention of the grant of the patent: **10.01.2018**
(21) Application number: 13882058.4
(22) Date of filing: 16.08.2013
(51) Int. Cl.: H04L 29/08

(54) **TRANSMISSION METHOD, DEVICE AND SYSTEM FOR MEDIA STREAM**
VERFAHREN, VORRICHTUNG UND SYSTEM ZUR ÜBERTRAGUNG EINES MEDIENSTROMS
PROCÉDÉ, DISPOSITIF ET SYSTÈME DE TRANSMISSION POUR UN FLUX MULTIMÉDIA

(43) Date of publication of application: 01.04.2015
(73) Proprietor: Huawei Technologies Co., Ltd., Longgang District Shenzhen, Guangdong 518129 (CN)
(72) Inventor: XU, Mingyuan, Shenzhen Guangdong 518129 (CN); YAN, Qiang, Shenzhen Guangdong 518129 (CN)
(74) Representative: Körber, Martin Hans
(86) International application number: PCT/CN2013/081686
(87) International publication number: WO 2015/021650

(56) References cited:
- CN-A- 102 308 560
- CN-A- 102 333 124
- US-A- 6 118 787
- US-A1- 2011 224 811
- US-A1- 2012 218 374
- US-A1- 2013 120 455

## Description

### TECHNICAL FIELD

The present invention relates to the field of communications technologies, and in particular, to a method, an apparatus and a system for transmitting a media stream.

### BACKGROUND

Cloud computing (cloud computing) is a new way of utilizing resources on Internet and performs on-demand computation for users depending on heterogeneous and autonomous services on Internet.

The existing desktop cloud is also a type of cloud in the definition of cloud computing. The desktop cloud separates a desktop environment of a user terminal (that is, a user application interface) from a physical machine by using a cloud computing mode, so as to become a service that can provide the user application interface for outsiders. Computing and storage resources required by the user application interface environment are gathered on a central server, to replace local computing and storage resources of a terminal. The computing and storage resources on the central server are also shared and scalable, so that different user application interface environment resources are allocated and delivered on demand, so as to achieve objectives of improving a resource utilization rate and reducing the total cost of ownership.

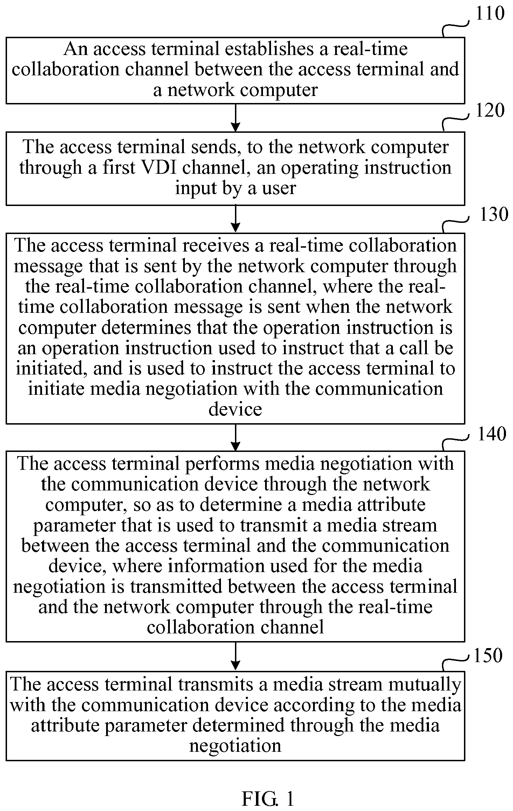

A thin client (Thin Client, TC for short) is a most common device that accesses the desktop cloud, which generally is a device that is embedded with an independent embedded operating system and can be connected over various protocols to a virtual machine running on a server. FIG. 1 shows a schematic diagram of a user accessing a desktop cloud system by using a personal computer (Personal Computer, PC for short) or a TC in the prior art. In the desktop cloud system, a cloud server is virtualized into multiple virtual machines, which are also known as network computers (Network Computer, NC for short), and an application required by the user runs inside a certain NC. The user is connected to the cloud server through a browser on the PC or the TC, and the cloud server allocates one NC to the user according to a scheduling policy of the cloud server. One virtualized desktop infrastructure (Virtualized Desktop Infrastructure, VDI for short) channel is established between the TC/PC and the NC, and used to transfer a user application interface inside the NC to the TC/PC for display, and also transfer data input by the user on the TC/PC side to the NC by using a device such as a mouse and a keyboard. The application, data and the like required by the user are all stored in the NC, and the TC/PC is only equivalent to a "display" of the NC.

Further, to meet a requirement of video and audio communication between users, a deployment solution of the prior art is specifically as follows: During audio communication, when an audio stream sent by a peer party of the communication reaches an NC, the NC first decodes the received audio stream into original audio data, then compresses the original audio data into VDI data, and transfers the VDI data to a TC/PC through a VDI channel, and the TC/PC decompresses the VDI data to obtain the original audio data and then presents the original audio data to a user. During video communication, after a video stream reaches an NC, the NC first decodes the video stream, performs layout and rendering in a video window of the NC, and then presents a whole user application interface on a TC/PC through a VDI channel. When the TC/PC obtains a local media stream, the TC/PC transfers the media stream obtained by a microphone and a camera to the NC through the VDI channel, and the NC decompresses VDI data to obtain the media stream, encodes the media stream, and then transfers the encoded media stream to the peer party of the communication.

Therefore, the solution for transmitting a media stream in the prior art reveals the following defects: 1) The NC needs to perform conversion and transmission on media data, and the conversion and transmission process causes obvious delay of the media stream; and 2) The media data needs to be transferred between the TC/PC and the NC through the VDI channel, which increases bandwidth occupancy between the TC/PC and the NC, and causes bandwidth waste.

US 2012 218374 A1 introduces a method providing SIP session management of a real-time communication to a softphone client in a virtual machine. The method includes: accepting an invitation to join a SIP session; receiving, by a server-based softphone in the SIP session, a real-time communication that is encoded with at least one SIP session aspect; transmitting the real-time communication and the at least one SIP session aspect to a client-based softphone; and using the at least one SIP session aspect for SIP session management.

### SUMMARY

The present invention provides a method, an apparatus and a system for transmitting a media stream, so as to solve problems in the prior art that the delay of a media stream is obvious because an NC needs to perform conversion and transmission on media data, and bandwidth occupancy between a TC/PC and the NC is increased and bandwidth is wasted because the media stream needs to be transferred back and forth between the TC/PC and the NC through a VDI channel. The scope of the invention is defined by the appended claims. According to a first aspect, an embodiment of the present invention provides a method for transmitting a media stream, wherein the method includes:
establishing, by an access terminal, a real-time collaboration channel between the access terminal and a network computer;
receiving, by the access terminal, an operation instruction from a user application interface, said operation instruction being arranged to instruct an initiation of a call to a communication device;
sending, by the access terminal to the network computer, the operation instruction through a first virtualized desktop infrastructure, VDI, channel established between the access terminal and the network computer;
receiving, by the access terminal through the real-time collaboratin channel, a real-time collaboration message from the network computer, wherein the real-time collaboration message is arranged to instruct the access terminal to initiate a media negotiation with the communication device to be called;
performing, by the access terminal through the network computer, the media negotiation with the communication device through the real-time collaboration channel to determine a media attribute parameter; and
transmitting, by the access terminal, the media stream to the communication device according to the media attribute parameter.

In a first possible implementation manner, the establishing, by the access terminal, the real-time collaboration channel includes:
establishing, by the access terminal, a WebSocket channel between the access terminal and the network computer through a web socket WebSocket server; or,
establishing, by the access terminal, a second VDI channel between the access terminal and the network computer; or,
establishing, by the access terminal, a point-to-point data channel between a browser in the access terminal and a browser in the network computer by using a data channel mechanism in a browser
web real-time communication WebRTC application of the access terminal.

With reference to the first aspect or the first possible implementation manner of the first aspect, in a second possible implementation manner, the performing, by the access terminal through the network computer, the media negotiation includes:
obtaining, by the access terminal, a first media attribute parameter supported by the access terminal, where the first media attribute parameter includes a media format supported by the access terminal, and an IP address and a port number that are used to receive media;
sending, by the access terminal, the first media attribute parameter to the network computer through the real-time collaboration channel, so as to enable the network computer to send a connection request message carrying the first media attribute parameter to the communication device to be called; and
receiving, by the access terminal from the network computer through the real-time collaboration channel, a second media attribute parameter, wherein the second media attribute parameter includes an IP address and a port number of the communication device that are used to receive media, and a media format that is supported by both the access terminal and the communication device and is determined by the communication device according to the first media attribute parameter; and
the transmitting, by the access terminal, the media stream to the communication device according to the media attribute parameter specifically includes:
   sending, by the access terminal, first media to the communication device by using the IP address and the port number of the communication device that are used to receive media, and receiving second media that is sent by the communication device by using the IP address and the port number of the access terminal that are used to receive media, where both the first media and the second media are encoded by adopting the media format included in the second media attribute parameter.

With reference to the first aspect or the second possible implementation manner of the first aspect, in a third possible implementation manner, the obtaining, by the access terminal, the first media attribute parameter supported by the access terminal specifically includes:
invoking, by the access terminal, a new peer connection interface function in a browser application programming interface API of the access terminal; and
generating, by the access terminal, a peer connection interface by using the new peer connection interface function, and obtaining, by using a create offer function included in the peer connection interface, the first media attribute parameter supported by the access terminal.

According to a second aspect, an embodiment of the present invention provides a method for transmitting a media stream, wherein the method includes:
establishing, by the network computer, a real-time collaboration channel between the network computer and an access terminal;
receiving, by the network computer from the access terminal through a first VDI channel established between the network coputer and the access terminal, an operation instruction being arranged to instruct an initiation of a call to a communication device;
when the network computer determines that the operation instruction is an operation instruction used to instruct the initiation of the call, sending, by the network computer, a real-time collaboration message to the access terminal through the real-time collaboration channel, wherein the real-time collaboration message is arranged to instruct the access terminal to initiate a media negotiation with the communication device; and
forwarding, by the network computer to the access terminal through the real-time collaboration channel, information for the media negotiation between the access terminal and the communication device, for determining a media attribute parameter for a media stream transmission between the access terminal and the communication device.

In a first possible implementation manner, the establishing, by the network computer, a real-time collaboration channel includes:
establishing, by the network computer, a WebSocket channel between the network computer and the access terminal through a web socket WebSocket server; or,
establishing, by the network computer, a second VDI channel between the network computer and the access terminal; or,
establishing, by the network computer, a point-to-point data channel between a browser in the network computer and a browser in the access terminal by using a data channel mechanism in a browser web real-time communication WebRTC application of the network computer.

With reference to the second aspect or the first possible implementation manner of the second aspect, in a second possible implementation manner, the forwarding, by the network computer, information for the media negotiation between the access terminal and the communication device includes:
receiving, by the network computer from the access terminal through the real-time collaboration channel, a first media attribute parameter that is supported by the access terminal, wherein the first media attribute parameter includes a media format supported by the access terminal, and an IP address and a port number that are used to receive media;
sending, by the network computer, a connection request message to the communication device according to the operation instruction wherein the connection request message includes the first media attribute parameter;
receiving, by the network computer from the communication device, a connect reply message, wherein the connect reply message includes a second media attribute parameter supported by the communication device, and the second media attribute parameter includes an IP address and a port number of the communication device that are used to receive media, and a media format that is supported by both the access terminal and the communication device and is determined by the communication device according to the first media attribute parameter; and
sending, by the network computer, the second media attribute parameter to the access terminal through the real-time collaboration channel for sending from the access terminal first media to the communication device by using the IP address and the port number of the communication device that are used to receive media, and for receiving by the access terminal second media from the communication device by using the IP address and the port number of the access terminal that are used to receive media, where both the first media and the second media are encoded by adopting the media format included in the second media attribute parameter.

With reference to the second aspect or the second possible implementation manner of the second aspect, in a third possible implementation manner, wherein, before the sending, by the network computer, the connection request message to the communication device according to the operation instruction, the method further includes:
invoking, by the network computer, a WebRTC signaling message protocol stack; and
performing, by the network computer, encapsulation processing on the first media attribute parameter by using the signaling message protocol stack, to generate the connection request message, where the connection request message includes the first media attribute parameter.

According to a third aspect, an embodiment of the present invention provides a method for transmitting a media stream, wherein the method includes:
establishing, by an access terminal, a real-time collaboration channel between the access terminal and a network computer;
receiving, by the access terminal from the network computer through the real-time collaboratin channel, a real-time collaboration message, wherein the real-time collaboration message includes a first media attribute parameter that is supported by a communication device and is obtained by parsing a call request of the communication device, and wherein the real-time collaboration message is arranged to instruct the access terminal to perform a media negotiation with the communication device according to the first media attribute parameter supported by the communication device;
performing, by the access terminal through the network computer, the media negotiation with the communication device through the real-time collaboration channel to determine a media attribute parameter for transmitting a media stream; and
transmitting, by the access terminal, the media stream to the communication device according to the media attribute parameter.

In a first possible implementation manner, the establishing, by the access terminal, the real-time collaboration channel includes:
establishing, by the access terminal, a WebSocket channel between the access terminal and the network computer through a web socket WebSocket server; or,
establishing, by the access terminal, a second VDI channel between the access terminal and the network computer; or,
establishing, by the access terminal, a point-to-point data channel between a browser in the access terminal and a browser in the network computer by using a data channel mechanism in a browser web real-time communication WebRTC application of the access terminal.

With reference to the third aspect or the first possible implementation manner of the third aspect, in a second possible implementation manner, the first media attribute parameter includes a media format supported by the communication device, and an IP address and a port number that are used to receive media;
the performing, by the access terminal through the network computer, the media negotiation includes:
   determining, by the access terminal according to the first media attribute parameter, a second media attribute parameter supported by the access terminal, where the second media attribute parameter includes an IP address and a port number of the access terminal that are used to receive media, and a media format that is supported by both the access terminal and the communication device and is determined by the access terminal according to the first media attribute parameter;
   sending, by the access terminal, the second media attribute parameter to the network computer through the real-time collaboration channel, so as to enable the network computer to forward the second media attribute parameter to the communication device; and
   the transmitting, by the access terminal, the media stream to the communication device according to the media attribute parameter specifically includes:
      sending, by the access terminal, first media to the communication device by using the IP address and the port number of the communication device that are used to receive media, and receiving second media that is sent by the communication device by using the IP address and the port number of the access terminal that are used to receive media, where both the first media and the second media are encoded by adopting the media format included in the second media attribute parameter.

With reference to the third aspect or the second possible implementation manner of the third aspect, in a third possible implementation manner, the determining, by the access terminal, the second media attribute parameter according to the first media attribute parameter specifically includes:
invoking, by the access terminal, a new peer connection interface function in a browser application programming interface API of the access terminal; and
generating, by the access terminal, a peer connection interface by using the new peer connection interface function, and obtaining the second media attribute parameter by using a create answer function included in the peer connection interface.

According to a fourth aspect, an embodiment of the present invention provides a method for transmitting a media stream, wherein the method includes:
establishing, by an network computer, a real-time collaboration channel between the network computer and an access terminal;
receiving, by the network computer from a communication device, a call request for calling a user corresponding to the access terminal;
obtaining, by the network computer, by parsing the call request a first media attribute parameter, which is supported by the communication device;
sending, by the network computer according to the call request, a real-time collaboration message to the access terminal through the real-time collaboration channel, where the real-time collaboration message includes the first media attribute parameter and is arranged for instructing the access terminal to perform a media negotiation with the communication device according to the first media attribute parameter; and
forwarding, by the network computer to the access terminal through the real-time collaboration channel, information for performing media negotiation between the access terminal and the communication device, for determining, through the media negotiation, a media attribute parameter for transmitting a media stream between the access terminal and the communication device.

In a first possible implementation manner, the establishing, by the network computer, the real-time collaboration channel includes:
establishing, by the network computer, a WebSocket channel between the network computer and the access terminal through a web socket WebSocket server; or,
establishing, by the network computer, a second VDI channel between the network computer and the access terminal; or,
establishing, by the network computer, a point-to-point data channel between a browser in the network computer and a browser in the access terminal by using a data channel mechanism in a browser web real-time communication WebRTC application of the network computer.

With reference to the fourth aspect or the first possible implementation manner of the fourth aspect, in a second possible implementation manner, the first media attribute parameter includes a media format supported by the communication device, and an IP address and a port number that are used to receive media; and the forwarding, by the network computer, the information for performing the media negotiation between the access terminal and the communication device includes:
receiving, by the network computer from the access terminal through the real-time collaboration channel, a second media attribute parameter, wherein the second media attribute parameter includes an IP address and a port number of the access terminal that are used to receive media, and a media format that is supported by both the access terminal and the communication device and is determined by the access terminal according to the first media attribute parameter; and forwarding, by the network computer, the second media attribute parameter to the communication device.

With reference to the fourth aspect or the second possible implementation manner of the fourth aspect, in a third possible implementation manner, before the forwarding, by the network computer, the second media attribute parameter to the communication device, the method further includes:
invoking, by the network computer, a WebRTC signaling message protocol stack;
performing, by the network computer, encapsulation processing on the second media attribute parameter by using the signaling message protocol stack, to generate a call response; and
sending, by the network computer, the call response to the communication device, where the call response includes the second media attribute parameter.

According to a fifth aspect, an embodiment of the present invention provides an apparatus for transmitting a media stream, wherein the apparatus includes:
a collaboration channel establishing unit, configured to establish a real-time collaboration channel between the apparatus and a network computer;
a sending unit, configured to send, to the network computer through a first VDI channel, established between the apparatus and the network computer, an operation instruction received by the apparatus from a user application interface and being arranged to instruct an initiation of a call to a communication device;
a receiving unit, configured to receive from the network computer through the real-time collaboration channel a real-time collaboration message arranged to instruct the apparatus to initiate a media negotiation with the communication device to be called;
a negotiation determining unit, configured to perform the media negotiation with the communication device through the real-time collaboration channel to determine a media attribute parameter; and
the media transmitting unit, configured to transmit the media stream to the communication device according to the media attribute parameter.

In a first possible implementation manner, the collaboration channel establishing unit is specifically configured to:
establish a WebSocket channel between the apparatus and the network computer through a web socket WebSocket server; or,
establish a second VDI channel between the apparatus and the network computer; or,
establish a point-to-point data channel between a browser in the apparatus and a browser in the network computer by using a data channel mechanism in a browser web real-time communication WebRTC application of the apparatus.

According to a sixth aspect, an embodiment of the present invention provides an apparatus for transmitting a media stream, wherein the apparatus includes:
a collaboration channel establishing unit, configured to establish a real-time collaboration channel between the apparatus and an access terminal;
a receiving unit, configured to receive from the access terminal ghrough a first VDI channel established between the apparatus and the access terminal an operation instruction being arranged to instruct an inintiation of a call to a communication device; and
a sending unit, configured to: when it is determined that the operation instruction is an operation instruction used to instruct the initiation of the call, send a real-time collaboration message to the access terminal through the real-time collaboration channel, wherein the real-time collaboration message is arranged to instruct the access terminal to initiate media negotiation with the communication device, wherein
the sending unit is further configured to forward to the access terminal through the real-time collaboratin channel information for the media negotiation between the access terminal and the communication device and for determining a media attribute parameter for a media stream transmission between the access terminal and the communication device.

In a first possible implementation manner, the collaboration channel establishing unit is specifically configured to:
establish a WebSocket channel between the apparatus and the access terminal through a web socket WebSocket server; or,
establish a second VDI channel between the apparatus and the access terminal; or,
establish a point-to-point data channel between a browser in the apparatus and a browser in the access terminal by using a data channel mechanism in a browser web real-time communication WebRTC application of the apparatus.

According to a seventh aspect, an embodiment of the present invention provides an apparatus for transmitting a media stream, wherein the apparatus includes:
a collaboration channel establishing unit, configured to establish a real-time collaboration channel between the apparatus and a network computer;
a receiving unit, configured to receive from the network computer through the real-time collaboration channel, a real-time collaboration message, wherein the real-time collaboration message comprises a first media attribute parameter that is supported by a communication device and is obtained by parsing a call request of the communication device, and wherein the real-time collaboration message is arranged to instruct the apparatus to perform a media negotiation with the communication device according to the first media attribute parameter supported by the communication device;
a negotiation determining unit, configured to perform the media negotiation with the communication device through the real-time collaboration channel to determine a media attribute parameter for transmitting a media stream; and
the media transmitting unit, configured to transmit the media stream to the communication device according to the media attribute parameter.

In a first possible implementation manner, the collaboration channel establishing unit is specifically configured to:
establish a WebSocket channel between the apparatus and the network computer through a web socket WebSocket server; or,
establish a second VDI channel between the apparatus and the network computer; or,
establish a point-to-point data channel between a browser in the apparatus and a browser in the network computer by using a data channel mechanism in a browser web real-time communication WebRTC application of the apparatus.

According to an eighth aspect, an embodiment of the present invention provides an apparatus for transmitting a media stream, wherein the apparatus includes:
a collaboration channel establishing unit, configured to establish a real-time collaboration channel between the apparatus and an access terminal; and
a receiving unit, configured to receive from a communication device a call request for calling a user corresponding to the access terminal, and configured to transmit the call request to a sending unit;
wherein the apparatus is configured to obtain by parsing the call request a first media attribute parameter, which is supported by the communication device; and
wherein the apparatus further comprises:
   the sending unit, configured to send, according to the call request, a real-time collaboration message to the access terminal through the real-time collaboration channel, wherein the real-time collaboration message includes the first media attribute parameter and is arranged for instructiong the access terminal to perform media negotiation with the communication device according to the first media attribute parameter; and
   the sending unit is further configured to forward to the access terminal through the real-time collaboration channel information for performing a media negotiation between the access terminal and the communication device for determining, through the media negotiation, a media attribute parameter for transmitting a media stream between the access terminal and the communication device.

In a first possible implementation manner, the collaboration channel establishing unit is specifically configured to:
establish a WebSocket channel between the apparatus and the access terminal through a web socket WebSocket server; or,
establish a second VDI channel between the apparatus and the access terminal; or,
establish a point-to-point data channel between a browser in the apparatus and a browser in the access terminal by using a data channel mechanism in a browser web real-time communication WebRTC application of the apparatus.

Therefore, by applying the method and the apparatus for transmitting a media stream provided in the embodiments of the present invention, an access terminal receives, through a real-time collaboration channel established to a network computer, a real-time collaboration message that is sent by the network computer, initiates, through the network computer, media negotiation with a communication device according to the real-time collaboration message, and transmits a media stream mutually with the communication device according to a media attribute parameter determined through the media negotiation. Because of the technical characteristics that the access terminal exchanges the media attribute parameter with the communication device through the network computer, to complete the media negotiation between the access terminal and the communication device, and the access terminal transmits the media stream to the communication device, the access terminal and the communication device can directly transmit the media stream to each other, and no longer perform transmission by using the NC, thereby avoiding the problems in the prior art that the delay of the media stream is obvious and communication quality is reduced because the NC needs to perform conversion and transmission on media data, and bandwidth occupancy between a TC/PC and the NC is increased and bandwidth is wasted because a media stream needs to be transferred back and forth between the TC/PC and the NC through a VDI channel. Therefore, the delay of the media stream is reduced, and the bandwidth is saved.

### BRIEF DESCRIPTION OF DRAWINGS

FIG. 1 is a flowchart of a method for transmitting a media stream according to Embodiment 1 of the present invention;
FIG. 2 is a signaling diagram of a method for transmitting a media stream according to an embodiment of the present invention;
FIG. 3 is a signaling diagram of another method for transmitting a media stream according to an embodiment of the present invention;
FIG. 4 is a flowchart of a method for transmitting a media stream according to Embodiment 2 of the present invention;
FIG. 5 is a flowchart of a method for transmitting a media stream according to Embodiment 3 of the present invention;
FIG. 6 is a flowchart of a method for transmitting a media stream according to Embodiment 4 of the present invention;
FIG. 7 is a signaling diagram of still another method for transmitting a media stream according to an embodiment of the present invention;
FIG. 8 is a structural diagram of an apparatus for transmitting a media stream according to Embodiment 5 of the present invention;
FIG. 9 is a structural diagram of another apparatus for transmitting a media stream according to Embodiment 5 of the present invention;
FIG. 10 is a structural diagram of an apparatus for transmitting a media stream according to Embodiment 6 of the present invention;
FIG. 11 is a structural diagram of another apparatus for transmitting a media stream according to Embodiment 6 of the present invention;
FIG. 12 is a structural diagram of an apparatus for transmitting a media stream according to Embodiment 7 of the present invention;
FIG. 13 is a structural diagram of another apparatus for transmitting a media stream according to Embodiment 7 of the present invention;
FIG. 14 is a structural diagram of an apparatus for transmitting a media stream according to Embodiment 8 of the present invention;
FIG. 15 is a structural diagram of another apparatus for transmitting a media stream according to Embodiment 8 of the present invention;
FIG. 16 is a hardware structural diagram of an apparatus for transmitting a media stream according to Embodiment 9 of the present invention;
FIG. 17 is a hardware structural diagram of an apparatus for transmitting a media stream according to Embodiment 10 of the present invention;
FIG. 18 is a hardware structural diagram of an apparatus for transmitting a media stream according to Embodiment 11 of the present invention;
FIG. 19 is a hardware structural diagram of an apparatus for transmitting a media stream according to Embodiment 12 of the present invention;
FIG. 20 is a schematic diagram of a system for transmitting a media stream according to Embodiment 13 of the present invention; and
FIG. 21 is a schematic diagram of another system for transmitting a media stream according to Embodiment 14 of the present invention.

### DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the embodiments to be described are a part rather than all of the embodiments of the present. To facilitate understanding of the embodiments of the present invention, the following further describes specific embodiments with reference to the accompanying drawings. The embodiments do not constitute any limitation to the embodiments of the present invention.

### Embodiment 1

The following describes in detail a method for transmitting a media stream provided in Embodiment 1 of the present invention by using FIG. 1 as an example. FIG. 1 is a flowchart of a method for transmitting a media stream according to Embodiment 1 of the present invention. The embodiment of the present invention is implemented by an access terminal of an initiator, and in the embodiment of the present invention, the access terminal of the initiator may specifically be a desktop cloud terminal. A first VDI channel is established between the access terminal and a network computer allocated by a cloud server to the access terminal. As shown in FIG. 1, the embodiment specifically includes the following steps:
Step 110: The access terminal establishes a real-time collaboration channel between the access terminal and the network computer.

Specifically, the access terminal establishes the real-time collaboration channel between the access terminal and the network computer NC (for example, NC1).

Before step 110 is executed, the access terminal establishes a first VDI channel between the access terminal and NC1, where the VDI channel transmits data input by a user application interface and by a user by using a device such as a keyboard and a mouse. That the access terminal establishes a first VDI channel between the access terminal and NC1 is the prior art, which is not repeated again herein.

Further, in the embodiment of the present invention, the establishing, by the access terminal, the real-time collaboration channel between the access terminal and NC1 specifically includes:
establishing, by the access terminal, a WebSocket channel between the access terminal and NC1 through a web socket WebSocket server, where the established WebSocket channel is used to transmit a real-time collaboration message; or,
after establishing the first VDI channel between the access terminal and NC1 (the first VDI channel is used to transmit data input by a user application interface and by a user by using a device such as a keyboard and a mouse), establishing, by the access terminal, a second VDI channel according to the ICA protocol, where the established second VDI channel is used to transmit a real-time collaboration message; or,
establishing, by the access terminal, a point-to-point data channel between a browser in the access terminal and a browser in NC1 by using a data channel mechanism in a browser web real-time communication WebRTC application of the access terminal, where the point-to-point data channel is used to transmit a real-time collaboration message.

Step 120: The access terminal sends, to the network computer through the first VDI channel, an operation instruction input by a user.

Specifically, the access terminal receives, through the first VDI channel, and displays a user application interface transmitted by a network computer NC (for example, NC1), where NC1 is specifically allocated by a cloud server to the access terminal. A user performs an operation on the user application interface on the access terminal, and when the user expects to initiate a call to a communication device (for example, call a mobile phone of a certain user or call a certain conference server to join a conference), the user inputs, by using an input device such as a keyboard and a mouse, an operation instruction used to instruct that a communication device be called, for example, clicks a "Call" button or clicks a "Join Conference" button by using a mouse. The access terminal sends the operation instruction to NC1 through the first VDI channel.

Step 130: The access terminal receives a real-time collaboration message that is sent by the network computer through the real-time collaboration channel, where the real-time collaboration message is sent when the network computer determines that the operation instruction is an operation instruction used to instruct that a call be initiated, and is used to instruct the access terminal to initiate media negotiation with the communication device.

Specifically, after NC1 receives, through the first VDI channel, the operation instruction input by the user, NC1 parses the operation instruction, and determines that the user expects to initiate a call to the communication device, for example, determines, according to the operation instruction, that an operation of clicking the "Call" button triggers the operation instruction. NC1 sends the real-time collaboration message to the access terminal through the real-time collaboration channel established in step 110, and the access terminal receives the real-time collaboration message sent by NC1, where the real-time collaboration message is used to instruct the access terminal to initiate media negotiation with the communication device.

Step 140: The access terminal performs media negotiation with the communication device through the network computer, so as to determine a media attribute parameter that is used to transmit a media stream between the access terminal and the communication device, where information used for the media negotiation is transmitted between the access terminal and the network computer through the real-time collaboration channel. Specifically, the access terminal initiates the media negotiation to the communication device according to the received real-time collaboration message.

Further, in this step, the performing, by the access terminal through the network computer, media negotiation with the communication device to determine a media attribute parameter that is used to transmit a media stream between the access terminal and the communication device specifically includes:
obtaining, by the access terminal, a first media attribute parameter supported by the access terminal itself, where the first media attribute parameter includes a media format supported by the access terminal itself and an IP address and a port number that are used to receive media; sending,
by the access terminal, the first media attribute parameter to NC1 through the real-time collaboration channel, so as to enable NC1 to send a connection request message carrying the first media attribute parameter to the communication device; and receiving, by the access terminal, a second media attribute parameter that is sent by NC 1 through the real-time collaboration channel and received by NC1 from the communication device, where the second media attribute parameter includes an IP address and a port number of the communication device that are used to receive media, and a media format that is supported by both the access terminal and the communication device and is determined by the communication device according to the first media attribute parameter.

Further, in this step, the obtaining, by the access terminal, a first media attribute parameter supported by the access terminal specifically includes:
invoking, by the access terminal, a new peer connection interface function webkitRTCPeerConnection() in a browser application programming interface (Application Programming Interface, API for short) of the access terminal itself; and generating, by the access terminal, a peer connection interface peerConnection interface by using the webkitRTCPeerConnection() function, where in the embodiment of the present invention, a technology based on web real-time communication (Web Real Time Communication, WebRTC for short) is applied to a desktop cloud system. The peerConnection interface defines a related method for performing WebRTC media negotiation with the communication device, and the access terminal obtains, by using a create offer function createrOffer() included in the peerConnection interface, the first media attribute parameter supported by the access terminal.

It may be understood that, when performing communication interaction with the communication device, NC1 needs to forward a communication message through a WebRTC server.

The communication device receives the connection request message sent by NC1, parses the connection request message and extracts the first media attribute parameter included in the connection request message. When the communication device determines that the communication device supports the first media attribute parameter, the communication device sends a connect reply message to NC1, and NC1 receives the connect reply message, where the connect reply message includes the second media attribute parameter that is supported by the communication device and determined by the communication device according to the first media attribute parameter.

The obtaining, by the communication device, a second media attribute parameter specifically is: invoking, by the communication device according to the connection request message, a new peer connection interface function webkitRTCPeerConnection() in a browser application programming interface (Application Programming Interface, API for short) of the communication device; and generating, by the communication device, a peer connection interface peerConnection interface by using the webkitRTCPeerConnection(), and obtaining, by using a create answer function creatAnswer() included in the peerConnection interface, the second media attribute parameter supported by the communication device.

The obtaining, by the communication device, a second media attribute parameter supported by the access terminal is implemented specifically through the following steps: obtaining, by the communication device, a third media attribute parameter by using creatAnswer(), where the third media attribute parameter specifically includes all media attribute parameters supported by the communication device; and selecting, by the communication device from the third media attribute parameter according to the first media attribute parameter, one or more media attribute parameters same as the first media attribute parameter as the second media attribute parameters supported by the communication device.

Step 150: The access terminal transmits a media stream mutually with the communication device according to the media attribute parameter determined through the media negotiation.

Specifically, the access terminal transmits the media stream mutually with the communication device by using the media attribute parameter determined through communication negotiation with the communication device. Further, in this step, the transmitting, by the access terminal, a media stream mutually with the communication device according to the media attribute parameter determined through the media negotiation specifically includes:
sending, by the access terminal, first media to the communication device by using the IP address and the port number of the communication device that are used to receive media, and receiving second media that is sent by the communication device by using the IP address and the port number of the access terminal that are used to receive media, where both the first media and the second media are encoded by adopting the media format included in the second media attribute parameter.

In this step, when the access terminal transmits media mutually with the communication device, the access terminal further sends a connection success message to NC1, and then the access terminal transmits media mutually with the communication device. Video and audio conversation may be performed between users.

Optionally, in the embodiment of the present invention, before the establishing, by the access terminal, a real-time collaboration channel between the access terminal and the network computer in step 110, the method further includes a step: The access terminal receives a HyperText Markup Language HTML webpage, obtains a media control application from the HTML webpage, and configures the media control application into the access terminal. Through the foregoing step, the access terminal may be provided with the media control application, and the access terminal completes the foregoing step 110 to step 150 by using the media control application. The specific step is as follows:
receiving, by the access terminal, a HyperText Markup Language HTML webpage that is sent by a web interface module in an application server by invoking a configuration file, where the HTML webpage includes the media control application; and
obtaining, by the access terminal, the media control application through the HTML webpage, and configuring the media control application into the access terminal, so that the access terminal completes, by using the media control application, transmitting the real-time collaboration message and information used for the media negotiation to the network computer, further obtains the first media attribute parameter through the media control, further performs media negotiation with the communication device by using the media control application, and transmits a media stream mutually with the communication device according to the media attribute parameter determined through the media negotiation.

Specifically, after the access terminal accesses a desktop cloud system, the access terminal receives the HTML webpage that is sent by the web interface (Web Interface) module in the application server by invoking the configuration file, where the HTML webpage includes the media control application. The access terminal obtains the media control application through the HTML webpage, and configures the media control application locally, and the access terminal completes the functions described in the foregoing step 110 to step 150 by using the media control application.

In the embodiment of the present invention, a user first accesses the web interface module of the application server in the desktop cloud system by using the access terminal, thereby accessing the desktop cloud system. The web interface module is connected to a resource pool of the desktop cloud system, where the resource pool includes a desktop scheduling center and a WebRTC media control entity, and the resource pool further stores a resource list required by the user, where the resource list required by the user stores the media control application. When a user accesses the web interface module by using the access terminal, the web interface module accesses the resource list of the user in the resource pool, and obtains a resource and a media control application that are required by the user according to a user configuration and a user attribute. The web interface module sets the layout and tag attributes of the HTML webpage in a configuration console, so that the obtained resource and media control application are laid out in the same HTML webpage, and the HTML webpage is sent to the access terminal. The access terminal displays the HTML webpage, the access terminal downloads, according to the operation of the user for the HTML webpage, the media control application locally through the HTML webpage, and meanwhile, the access terminal accesses the desktop cloud system by using the web interface module, and establishes a connection to the cloud server through the desktop scheduling center according to an instruction input by the user.

It may be understood that, before the access terminal accesses the desktop cloud system, an administrator further configures the resource pool, that is, the administrator places the media control application into the resource pool, modifies a configuration file of the resource list required by the user, and stores the media control application into the resource list required by the user. Further, the user may also modify the configuration file of the resource list required by the user, and store the media control application into the resource list required by the user.

Optionally, in the embodiment of the present invention, the method further includes a step: If the communication device determines that the communication device does not support the first media attribute parameter, the access terminal receives a connection failure message forwarded by NC1 and sent by the communication device. Through the step, the access terminal no longer transmits the media stream mutually with the communication device. The specific step is as follows:
after determining that the communication device does not support the first media attribute parameter, no longer determining, by the communication device according to the first media attribute parameter, the second media attribute parameter supported by the communication device, generating, by the communication device, a connection failure message, and forwarding the connection failure message to NC1 through the WebRTC server, so that NC1 sends the connection failure message to the access terminal, and the access terminal determines, according to the connection failure message, that the communication device does not support the first media attribute parameter, and no longer transmits the media stream mutually with the communication device.

In the embodiment of the present invention, that the communication device does not support the first media attribute parameter specifically refers to that the media attribute parameter supported by the communication device does not match the first media attribute parameter, so that the communication device does not support the first media attribute parameter.

In the embodiment of the present invention, the access terminal specifically is a terminal that can access a desktop cloud system, such as a PC/TC. The communication device differs in different current environments, and the communication device specifically is a desktop cloud terminal, a media access device, a conference server, or the like.

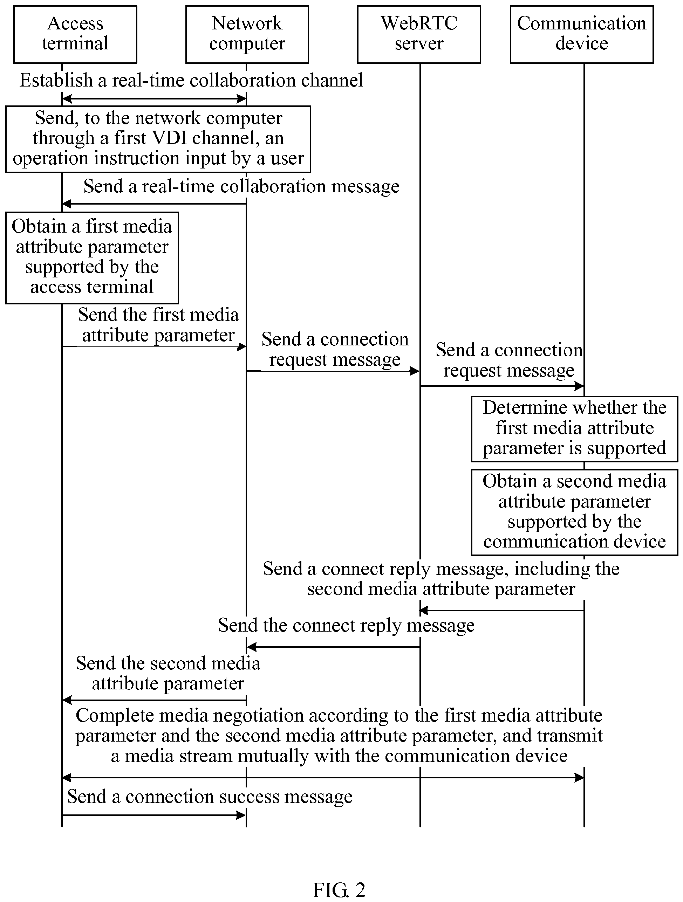

Therefore, by applying the method for transmitting a media stream provided in the embodiment of the present invention, an access terminal receives, through a real-time collaboration channel established to a network computer, a real-time collaboration message that is sent by the network computer, initiates, through the network computer, media negotiation with a communication device according to the real-time collaboration message, and transmits a media stream mutually with the communication device according to a media attribute parameter determined through the media negotiation. Because of the technical characteristics that the access terminal exchanges the media attribute parameter with the communication device through the network computer, to complete the media negotiation between the access terminal and the communication device, and the access terminal transmits the media stream to the communication device, the access terminal and the communication device can directly transmit the media stream to each other, and no longer perform transmission by using the NC, thereby avoiding the problems in the prior art that the delay of the media stream is obvious and communication quality is reduced because the NC needs to perform conversion and transmission on media data, and bandwidth occupancy between a TC/PC and the NC is increased and bandwidth is wasted because a media stream needs to be transferred back and forth between the TC/PC and the NC through a VDI channel. Therefore, the delay of the media stream is reduced, and the bandwidth is saved. Further, FIG. 2 is a signaling diagram of a method for transmitting a media stream according to an embodiment of the present invention. The signaling diagram shown in FIG. 2 is a processing process for an access terminal to transmit a media stream to a communication device. The method for transmitting a media stream in FIG. 2 may be executed according to the process described in the foregoing embodiment.

As shown in FIG. 2, the access terminal establishes a real-time collaboration channel between the access terminal and a network computer allocated by a cloud server to the access terminal, the access terminal sends, through a first VDI channel to the network computer, an operation instruction input by a user, and after determining that the operation instruction is an operation instruction used to instruct that a call be initiated, the network computer sends a real-time collaboration message to the access terminal, where the real-time collaboration message is used to instruct the access terminal to initiate media negotiation with the communication device.

The access terminal obtains a first media attribute parameter supported by the access terminal. The access terminal sends the first media attribute parameter to the network computer through the real-time collaboration channel, so as to enable the network computer to send a connection request message carrying the first media attribute parameter to the communication device to be called through a WebRTC server, and further to enable the communication device to determine whether the communication device supports the first media attribute parameter.

When the communication device determines that the communication device supports the first media attribute parameter, the communication device obtains a second media attribute parameter supported by the communication device, and sends a connect reply message to the network computer through the WebRTC server, where the connect reply message includes the second media attribute parameter.

The access terminal receives the second media attribute parameter that is sent by the network computer through the real-time collaboration channel.

The access terminal completes the media negotiation according to the first media attribute parameter and the second media attribute parameter, transmits a media stream mutually with the communication device, and sends a connection success message to the network computer.

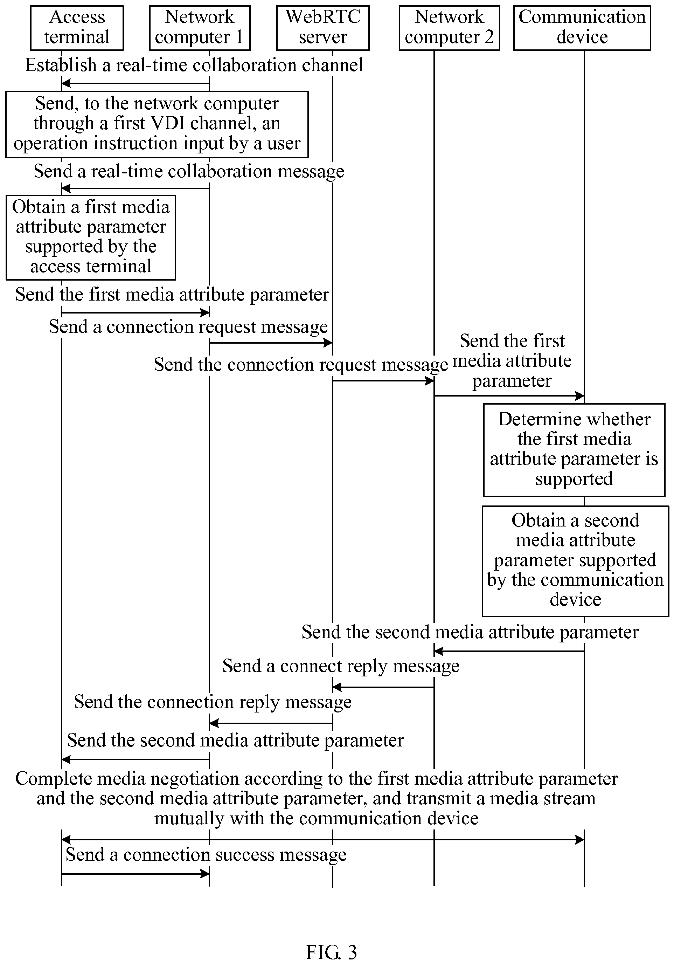

Further, the communication device in the signaling diagram shown in FIG. 2 is specifically a desktop cloud terminal, a media access device, a conference server, or the like. In the embodiment of the present invention, when the communication device is also a desktop cloud terminal, as shown in FIG. 3, a signaling diagram shown in FIG. 3 is a processing process for the access terminal to transmit a media stream to the communication device, the communication device is also correspondingly connected to a certain network computer allocated by the cloud server to the communication device, and the inside of the communication device also includes a media control application. The working principle and the working process of the media control application in the communication device are the same as those of the media control application in the access terminal, which are not repeated again herein.

### Embodiment 2

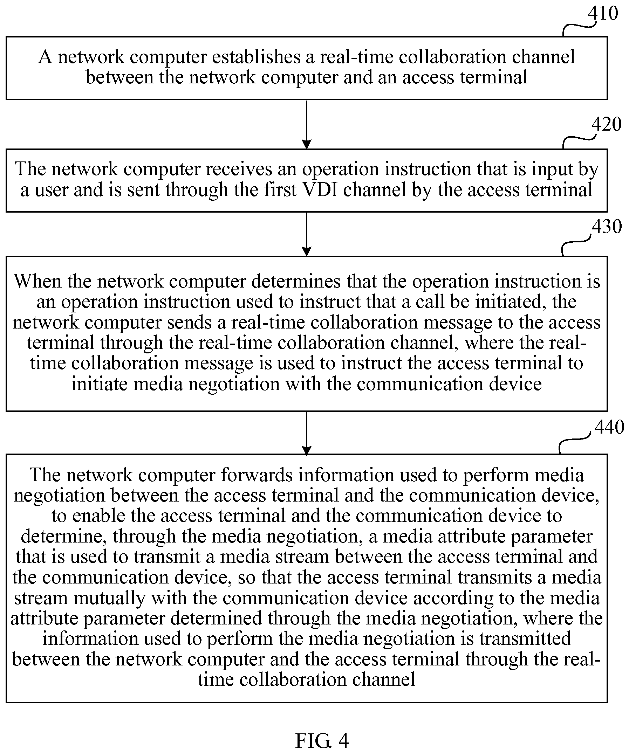

The following describes in detail a method for transmitting a media stream provided in Embodiment 2 of the present invention by using FIG. 4 as an example. FIG. 4 is a flowchart of a method for transmitting a media stream according to Embodiment 2 of the present invention. The embodiment of the present invention is implemented by a network computer in a cloud server. A first VDI channel is established between the network computer and an access terminal, and as shown in FIG. 4, the embodiment specifically includes the following steps:
Step 410: The network computer establishes a real-time collaboration channel between the network computer and the access terminal.

Specifically, the network computer NC (for example, NC1) establishes the real-time collaboration channel between the network computer and the access terminal.

Before step 110 is executed, NC1 establishes a first VDI channel between NC1 and the access terminal, where the VDI channel transmits data input by a user application interface and by a user by using a device such as a keyboard and a mouse. That NC 1 establishes a first VDI channel between NC 1 and the access terminal is the prior art, which is not repeated again herein.

Further, in the embodiment of the present invention, the establishing, by NC1, the real-time collaboration channel between NC1 and the access terminal specifically includes:
establishing, by NC 1, a WebSocket channel between NC 1 and the access terminal through a web socket WebSocket server; or,
after establishing the first VDI channel between NC1 and the access terminal (the VDI channel is used to transmit data input by a user application interface and by a user by using a device such as a keyboard and a mouse), establishing, by NC1, a second VDI channel according to the ICA protocol; or,
establishing, by NC1, a point-to-point data channel between a browser in NC1 and a browser in the access terminal by using a data channel mechanism in a browser web real-time communication WebRTC application of NC1.

Step 420: The network computer receives an operation instruction that is input by a user and is sent by the access terminal through the first VDI channel.

Specifically, NC 1 allocated by the cloud server to the access terminal receives, through the first VDI channel, the operation instruction that is input by the user and sent by the access terminal.

The access terminal accesses the desktop cloud system, NC1 transmits the user application interface to the access terminal through the first VDI channel, the access terminal receives and displays the user application interface transmitted by NC1, and the user operates the user application interface. When the user expects to establish a video and audio call to a user corresponding to the communication device (for example, call a mobile phone of a certain user or call a certain conference server to join a conference), the user inputs, by using an input device such as a keyboard and a mouse, an operation instruction used to instruct that the communication device be called, for example, clicks the "Call" button or clicks the "Join Conference" button by using a mouse. NC 1 receives, through the first VDI channel, the operation instruction sent by the access terminal.

Step 430: When the network computer determines that the operation instruction is an operation instruction used to instruct that a call be initiated, the network computer sends a real-time collaboration message to the access terminal through the real-time collaboration channel, where the real-time collaboration message is used to instruct the access terminal to initiate media negotiation with the communication device.

Specifically, when NC1 receives, through the first VDI channel, the operation instruction input by the user,

NC1 parses the operation instruction, and determines that the user expects to initiate a call to the communication device, for example, determines, according to the operation instruction, that the operation of clicking the "Call" button triggers the operation instruction. NC1 sends the real-time collaboration message to the access terminal through the real-time collaboration channel established in step 410, where the real-time collaboration message is sent when NC1 determines that the operation instruction is an operation instruction used to instruct that a call be initiated, and is used to instruct the access terminal to initiate media negotiation with the communication device.

Step 440: The network computer forwards information used to perform media negotiation between the access terminal and the communication device, to enable the access terminal and the communication device to determine, through the media negotiation, a media attribute parameter that is used to transmit a media stream between the access terminal and the communication device, so that the access terminal transmits a media stream mutually with the communication device according to the media attribute parameter determined through the media negotiation, where the information used to perform the media negotiation is transmitted between the network computer and the access terminal through the real-time collaboration channel.

Specifically, the access terminal initiates the media negotiation to the communication device according to the received real-time collaboration message. NC1 forwards information used to perform media negotiation between the access terminal and the communication device, to enable the access terminal and the communication device to determine, through the media negotiation, a media attribute parameter that is used to transmit a media stream between the access terminal and the communication device, so that the access terminal transmits the media stream mutually with the communication device according to the media attribute parameter determined through the media negotiation, where the information used to perform media negotiation is transmitted between NC1 and the access terminal through the real-time collaboration channel established in step 410.

Further, in this step, the forwarding, by the network computer, information used to perform media negotiation between the access terminal and the communication device, to enable the access terminal and the communication device to determine, through the media negotiation, a media attribute parameter that is used to transmit a media stream between the access terminal and the communication device specifically includes:
receiving, by NC1, a first media attribute parameter that is supported by the access terminal and is sent by the access terminal through the real-time collaboration channel, where the first media attribute parameter includes a media format supported by the access terminal, and an IP address and a port number that are used to receive a media; sending, by NC1, a connection request message to the communication device according to the operation instruction that is input by the user and used to instruct that the communication device be called, where the connection request message includes the first media attribute parameter; receiving, by NC1, a connect reply message that is sent by the communication device when the communication device determines that the communication device supports the first media attribute parameter, where the connect reply message includes a second media attribute parameter supported by the communication device, and the second media attribute parameter includes an IP address and a port number of the communication device that are used to receive media, and a media format that is supported by both the access terminal and the communication device and is determined by the communication device according to the first media attribute parameter; and sending, by NC1, the second media attribute parameter to the access terminal through the real-time collaboration channel, so that the access terminal sends first media to the communication device by using the IP address and the port number of the communication device that are used to receive media, and receives second media that is sent by the communication device by using the IP address and the port number of the access terminal that are used to receive media, where both the first media and the second media are encoded by adopting the media format included in the second media attribute parameter.

It may be understood that, when performing communication interaction with the communication device, NC1 needs to forward a message through a WebRTC server.

In Embodiment 1, the process for the access terminal and the communication device to perform media negotiation according to the received first media attribute parameter and second media attribute parameter is described in detail, which is not repeated again herein.

Optionally, in the embodiment of the present invention, before step 420 of establishing, by the network computer, a real-time collaboration channel between the network computer and the access terminal, the method further includes a step: The access terminal accesses a desktop cloud system. In Embodiment 1, the process for the access terminal to access a desktop cloud system is described in detail, which is not repeated again herein.

Optionally, in the embodiment of the present invention, before the sending, by the network computer, a connection request message to the communication device according to the operation instruction that is input by the user and used to instruct that a call be initiated, the method further includes a step: The network computer performs encapsulation processing on the first media attribute parameter to generate a connection request message. The specific step is as follows:
invoking, by NC1, a WebRTC signaling message protocol stack; and performing, by NC1, encapsulation processing on the first media attribute parameter by using the signaling message protocol stack, to generate a connection request message, where the connection request message includes the first media attribute parameter.

It may be understood that only after performing encapsulation processing on the first media attribute parameter, NC1 may forward the encapsulated first media attribute parameter to the communication device through the WebRTC server. In the embodiment of the present invention, a message header (for example: from XX to XX) may be added to the first media attribute parameter. The added message header may enable the WebRTC server to determine a transmission path of the connection request message, so that the WebRTC server forwards the connection request message to the communication device.

Optionally, in the embodiment of the present invention, the method further includes a step: If the communication device determines that the communication device does not support the first media attribute parameter, NC1 receives a connection failure message sent by the communication device and NC1 further sends the connection failure message to the access terminal. Through the step, the access terminal no longer transmits the media stream mutually with the communication device. The specific step is as follows:
after determining that the communication device does not support the first media attribute parameter, no longer determining, by the communication device according to the first media attribute parameter, the second media attribute parameter supported by the communication device, generating, by the communication device, a connection failure message, and forwarding the connection failure message to NC1 through the WebRTC server, so that NC1 forwards the received connection failure message to the access terminal, and the access terminal determines, according to the connection failure message, that the communication device does not support the first media attribute parameter, and no longer transmits the media stream mutually with the communication device.

In the embodiment of the present invention, that the communication device does not support the first media attribute parameter specifically refers to that the media attribute parameter supported by the communication device does not match the first media attribute parameter, so that the communication device does not support the first media attribute parameter.

In the embodiment of the present invention, the access terminal specifically is a terminal that can access a desktop cloud system, such as a PC/TC. The communication device differs in different current environments, and the communication device specifically is a desktop cloud terminal, a media access device, a conference server, or the like.

Therefore, by applying the method for transmitting a media stream provided in the embodiment of the present invention, an access terminal receives, through a real-time collaboration channel established to a network computer, a real-time collaboration message that is sent by the network computer, initiates, through the network computer, media negotiation with a communication device according to the real-time collaboration message, and transmits a media stream mutually with the communication device according to a media attribute parameter determined through the media negotiation. Because of the technical characteristics that the access terminal exchanges the media attribute parameter with the communication device through the network computer, to complete the media negotiation between the access terminal and the communication device, and the access terminal transmits the media stream to the communication device, the access terminal and the communication device can directly transmit the media stream to each other, and no longer perform transmission by using the NC, thereby avoiding the problems in the prior art that the delay of the media stream is obvious and communication quality is reduced because the NC needs to perform conversion and transmission on media data, and bandwidth occupancy between a TC/PC and the NC is increased and bandwidth is wasted because a media stream needs to be transferred back and forth between the TC/PC and the NC through a VDI channel. Therefore, the delay of the media stream is reduced, and the bandwidth is saved.

Further, FIG. 2 is a signaling diagram of a method for transmitting a media stream according to an embodiment of the present invention. The signaling diagram shown in FIG. 2 is a processing process for an access terminal to transmit a media stream to a communication device. The method for transmitting a media stream in FIG. 2 may be executed according to the process described in the foregoing embodiment.

As shown in FIG. 2, the access terminal establishes a real-time collaboration channel between the access terminal and a network computer allocated by a cloud server to the access terminal, the access terminal sends, through a first VDI channel to the network computer, an operation instruction input by a user, and after determining that the operation instruction is an operation instruction used to instruct that a call be initiated, the network computer sends a real-time collaboration message to the access terminal, where the real-time collaboration message is used to instruct the access terminal to initiate media negotiation with the communication device.

The access terminal obtains a first media attribute parameter supported by the access terminal. The access terminal sends the first media attribute parameter to the network computer through the real-time collaboration channel, so as to enable the network computer to send a connection request message carrying the first media attribute parameter to the communication device to be called, and further to enable the communication device to determine whether the communication device supports the first media attribute parameter.

When the communication device determines that the communication device supports the first media attribute parameter, the communication device obtains a second media attribute parameter supported by the communication device, and sends a connect reply message to the network computer, where the connect reply message includes the second media attribute parameter.

The access terminal receives the second media attribute parameter that is sent by the network computer through the real-time collaboration channel.

The access terminal completes the media negotiation according to the first media attribute parameter and the second media attribute parameter, transmits a media stream mutually with the communication device, and sends a connection success message to the network computer.

Further, the communication device in the signaling diagram shown in FIG. 2 is specifically a desktop cloud terminal, a media access device, a conference server, or the like. In the embodiment of the present invention, when the communication device is also a desktop cloud terminal, as shown in FIG. 3, a signaling diagram shown in FIG. 3 is a processing process for the access terminal to transmit a media stream to the communication device, the communication device is also correspondingly connected to a certain network computer allocated by the cloud server to the communication device, and the inside of the communication device also includes a media control application. The working principle and the working process of the media control application in the communication device are the same as those of the media control application in the first terminal, which are not repeated again herein.

### Embodiment 3

The foregoing multiple embodiments describe a method for transmitting a media stream by using an initiator being a desktop cloud terminal as an example, and the following describes a method for transmitting a media stream by using a recipient being a desktop cloud terminal as an example.

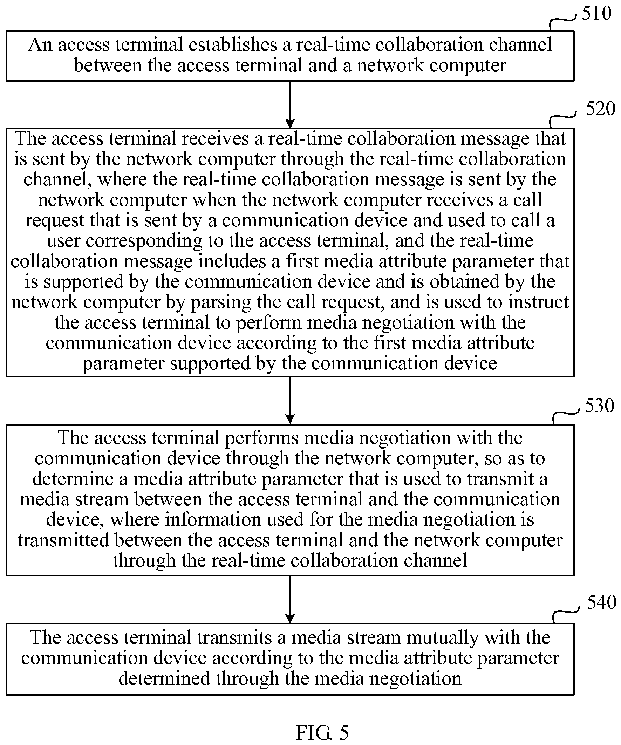

The following describes in detail a method for transmitting a media stream provided in Embodiment 3 of the present invention by using FIG. 5 as an example. FIG. 5 is a flowchart of a method for transmitting a media stream according to Embodiment 3 of the present invention. The embodiment of the present invention is implemented by an access terminal of the recipient. A first VDI channel is established between the access terminal and a network computer allocated by a cloud server to the access terminal. As shown in FIG. 5, the embodiment specifically includes the following steps:
Step 510: The access terminal establishes a real-time collaboration channel between the access terminal and
the network computer.

Specifically, the access terminal establishes the real-time collaboration channel between the access terminal and the network computer NC (for example, NC1).

Before step 510 is executed, the access terminal establishes a first VDI channel between the access terminal and NC 1, where the VDI channel transmits data input by a user application interface and by a user by using a device such as a keyboard and a mouse. That the access terminal establishes a first VDI channel between the access terminal and NC1 is the prior art, which is not repeated again herein.

Further, in the embodiment of the present invention, the establishing, by the access terminal, the real-time collaboration channel between the access terminal and NC1 specifically includes:
establishing, by the access terminal, a WebSocket channel between the access terminal and NC 1 through a web socket WebSocket server; or,
after establishing the first VDI channel between the access terminal and NC 1 (the VDI channel is used to transmit data input by a user application interface and by a user by using a device such as a keyboard and a mouse), establishing, by the access terminal, a second VDI channel according to the ICA protocol; or,
establishing, by the access terminal, a point-to-point data channel between a browser in the access terminal and a browser in NC1 by using a data channel mechanism in a browser web real-time communication WebRTC application of the access terminal.

Step 520: The access terminal receives a real-time collaboration message that is sent by the network computer through the real-time collaboration channel, where the real-time collaboration message is sent by the network computer when the network computer receives a call request that is sent by a communication device and used to call a user corresponding to the access terminal, and the real-time collaboration message includes a first media attribute parameter that is supported by the communication device and is obtained by the network computer by parsing the call request, and is used to instruct the access terminal to perform media negotiation with the communication device according to the first media attribute parameter supported by the communication device.

Specifically, the access terminal receives a real-time collaboration message that is sent by NC1 through the real-time collaboration channel established in step 510, where the real-time collaboration message is sent by NC1 when receiving a call request that is sent by the communication device and used to call a user corresponding to the access terminal, and the real-time collaboration message includes the first media attribute parameter that is supported by the communication device and is obtained by the network computer by parsing the call request.

It may be understood that, when performing communication interaction with NC1, the communication device needs to forward a communication message through a WebRTC server. When the communication device sends the first media attribute parameter to NC1 through the WebRTC server, the WebRTC server may add the first media attribute parameter into a connection request message for sending.

In the embodiment of the present invention, the first media attribute parameter specifically refers to information necessary for the communication device to establish a video and audio call and transmit a media stream, where the first media attribute parameter includes a media format supported by the communication device, and an IP address and a port number that are used to receive media.

That the communication device obtains the first media attribute parameter supported by the communication device is the same as that the access terminal obtains the first media attribute parameter supported by the access terminal described in Embodiment 1, which is not repeated again herein.

Step 530: The access terminal performs media negotiation with the communication device through the network computer, so as to determine a media attribute parameter that is used to transmit a media stream between the access terminal and the communication device, where information used for the media negotiation is transmitted between the access terminal and the network computer through the real-time collaboration channel. Specifically, the access terminal performs media negotiation with the communication device through NC1, to determine a media attribute parameter that is used to transmit a media stream between the access terminal and the communication device. The access terminal transmits, through the real-time collaboration channel established in step 510, the information used for media negotiation.

Further, in this step, the performing, by the access terminal through the network computer, media negotiation with the communication device to determine a media attribute parameter that is used to transmit a media stream between the access terminal and the communication device specifically includes:
determining, by the access terminal according to the first media attribute parameter, a second media attribute parameter supported by the access terminal, where the second media attribute parameter includes an IP address and a port number of the access terminal that are used to receive media, and a media format that is supported by both the access terminal and the communication device and is determined by the access terminal according to the first media attribute parameter; and sending, by the access terminal, the second media attribute parameter to NC1 through the real-time collaboration channel, so as to enable NC1 to forward the second media attribute parameter to the communication device. The communication device completes media negotiation according to the received second media attribute parameter.

It may be understood that, when performing communication interaction with the communication device, NC1 needs to forward a communication message through a WebRTC server. When sending the second media attribute parameter to the communication device through the WebRTC server, NC 1 may add the second media attribute parameter into a connect reply message for sending.

The determining, by the access terminal according to the first media attribute parameter, a second media attribute parameter supported by the access terminal specifically is: invoking, by the access terminal, a new peer connection interface function webkitRTCPeerConnection() in a browser application programming interface (Application Programming Interface, API for short) of the access terminal; and generating, by the access terminal, a peer connection interface peerConnection interface by using the webkitRTCPeerConnection(), and obtaining, by using a create answer function creatAnswer() included in the peerConnection interface, the second media attribute parameter supported by the access terminal.

The obtaining, by the access terminal, a second media attribute parameter supported by the access terminal is implemented specifically through the following steps: obtaining, by the access terminal, a third media attribute parameter by using the creatAnswer(), where the third media attribute parameter specifically includes all media attribute parameters supported by the access terminal; and selecting, by the access terminal from the third media attribute parameter according to the first media attribute parameter, one or more media attribute parameters same as the first media attribute parameter as the second media attribute parameters supported by the access terminal.

Step 540: The access terminal transmits a media stream mutually with the communication device according to the media attribute parameter determined through the media negotiation.

Specifically, the access terminal transmits a media stream mutually with the communication device according to the first and second media attribute parameters determined through the media negotiation.

Further, in this step, the transmitting, by the access terminal, a media stream mutually with the communication device according to the media attribute parameter determined through the media negotiation specifically includes:
sending, by the access terminal, first media to the communication device by using the IP address and the port number of the communication device that are used to receive media, and receiving second media that is sent by the communication device by using the IP address and the port number of the access terminal that are used to receive media, where both the first media and the second media are encoded by adopting the media format included in the second media attribute parameter.

In this step, when the communication device transmits media mutually with the access terminal, the communication device further sends a connection success message to the WebRTC server, and then the communication device transmits media mutually with the access terminal. Video and audio conversation may be performed between users.

Optionally, in the embodiment of the present invention, before the establishing, by the access terminal, a real-time collaboration channel between the access terminal and the network computer in step 510, the method further includes a step: The access terminal receives a HyperText Markup Language HTML webpage, obtains a media control application from the HTML webpage, and configures the media control application into the access terminal. Through the foregoing step, the access terminal may be provided with the media control application, and the access terminal completes the foregoing step 510 to step 540 by using the media control application. The specific step is as follows:
receiving, by the access terminal, a HyperText Markup Language HTML webpage that is sent by a web interface module in an application server by invoking a configuration file, where the HTML webpage includes the media control application; and
obtaining, by the access terminal, the media control application through the HTML webpage, and configuring the media control application into the access terminal, so that the access terminal completes, by using the media control application, transmitting the real-time collaboration message and information used for the media negotiation to the network computer, further obtains the first media attribute parameter by using the media control application, further performs media negotiation with the communication device by using the media control application, and transmits a media stream mutually with the communication device according to the media attribute parameter determined through the media negotiation.

It may be understood that, in Embodiment 1, the process for an access terminal of an initiator to access a desktop cloud system, receive an HTML webpage, obtain a media control application, and configure the media control application locally is described in detail. In the embodiment of the present invention, the process for the access terminal of the recipient to access a desktop cloud system, receive an HTML webpage, obtain a media control application, and configure the media control application locally is the same as that for an access terminal of an initiator, which is not repeated again herein.

Optionally, in the embodiment of the present invention, the method further includes a step: If the access terminal determines that the access terminal does not support the first media attribute parameter, the access terminal sends a connection failure message to the communication device through a network computer. Through the step, the access terminal no longer transmits the media stream mutually with the communication device. The specific step is as follows:
invoking, by the access terminal, a set peer-end media parameter function (setRemoteDescription()) in a browser application programming interface API of the access terminal according to the first media attribute parameter, and determining whether the access terminal supports the first media attribute parameter by using the setRemoteDescription(). If the access terminal determines that the access terminal does not support the first media attribute parameter, the access terminal rejects transmitting the media stream mutually with the communication device, and sends the connection failure message to the communication device through NC1.

In the embodiment of the present invention, that the access terminal does not support the first media attribute parameter specifically refers to that the media attribute parameter supported by the access terminal does not match the first media attribute parameter, so that the access terminal does not support the first media attribute parameter.

In the embodiment of the present invention, the access terminal specifically is a terminal that can access a desktop cloud system, such as a PC/TC. The communication device differs in different current environments, and the communication device specifically is a desktop cloud terminal, a media access device, a conference server, or the like.

Therefore, by applying the method for transmitting a media stream provided in the embodiment of the present invention, an access terminal receives, through a real-time collaboration channel established to a network computer, a real-time collaboration message that is sent by the network computer, initiates, through the network computer, media negotiation with a communication device according to the real-time collaboration message, and transmits a media stream mutually with the communication device according to a media attribute parameter determined through the media negotiation. Because of the technical characteristics that the access terminal exchanges the media attribute parameter with the communication device through the network computer, to complete the media negotiation between the access terminal and the communication device, and the access terminal transmits the media stream to the communication device, the access terminal and the communication device can directly transmit the media stream to each other, and no longer perform transmission by using the NC, thereby avoiding the problems in the prior art that the delay of the media stream is obvious and communication quality is reduced because the NC needs to perform conversion and transmission on media data, and bandwidth occupancy between a TC/PC and the NC is increased and bandwidth is wasted because a media stream needs to be transferred back and forth between the TC/PC and the NC through a VDI channel. Therefore, the delay of the media stream is reduced, and the bandwidth is saved.

### Embodiment 4

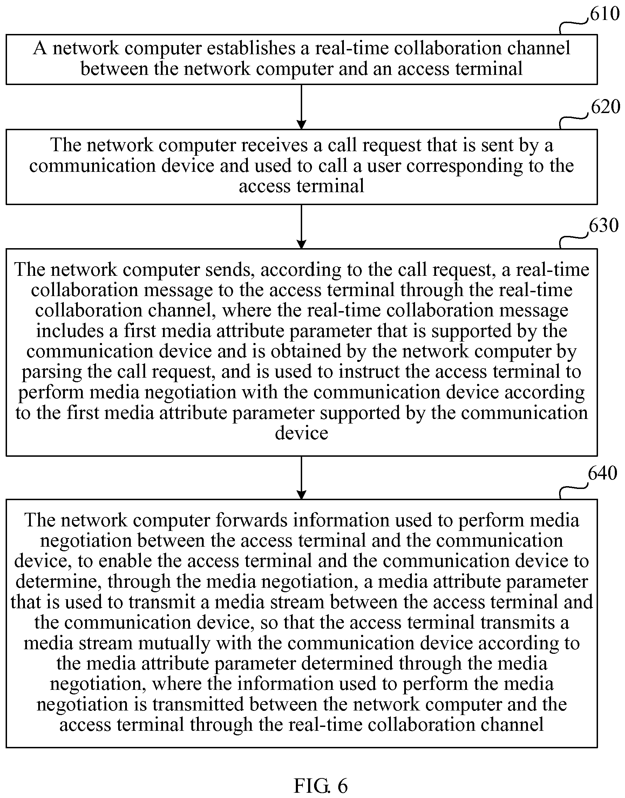

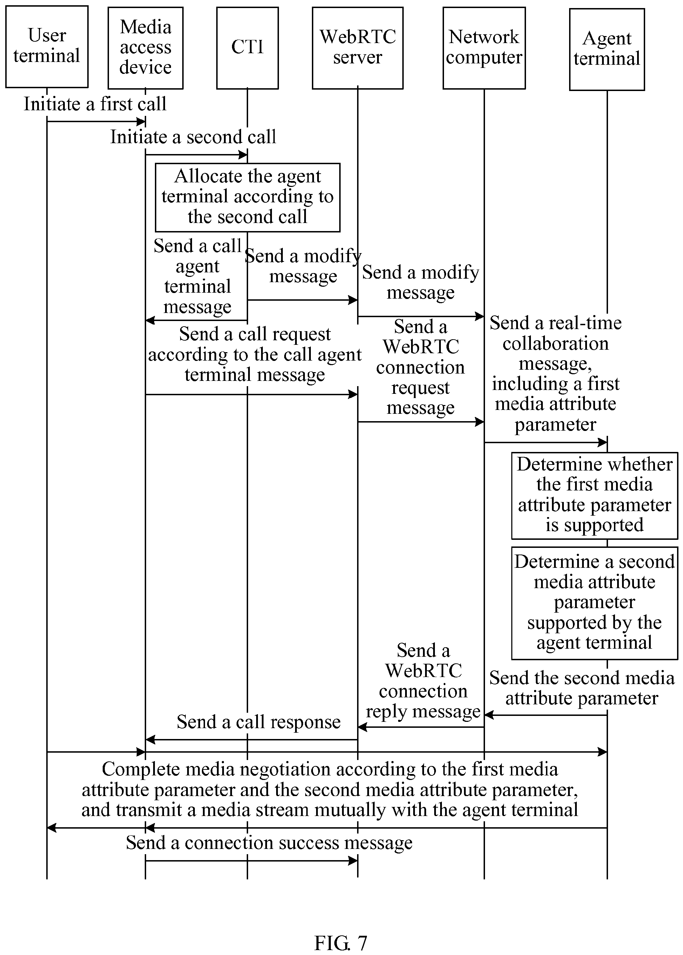

The following describes in detail a method for transmitting a media stream provided in Embodiment 4 of the present invention by using FIG. 6 as an example. FIG. 7 is a flowchart of a method for transmitting a media stream according to Embodiment 4 of the present invention. The embodiment of the present invention is implemented by a network computer in a cloud server. A first VDI channel is established between the network computer and an access terminal, and as shown in FIG. 6, the embodiment specifically includes the following steps:
Step 610: The network computer establishes a real-time collaboration channel between the network computer and the access terminal.

Specifically, the network computer NC (for example, NC1) establishes the real-time collaboration channel between the network computer and the access terminal.

Before step 110 is executed, NC1 establishes a first VDI channel between NC1 and the access terminal, where the VDI channel transmits data input by a user application interface and by a user by using a device such as a keyboard and a mouse. That NC1 establishes a first VDI channel between NC1 and the access terminal is the prior art, which is not repeated again herein.

Further, in the embodiment of the present invention, the establishing, by NC1, the real-time collaboration channel between NC1 and the access terminal specifically includes:
establishing, by NC1, a WebSocket channel between NC1 and the access terminal through a web socket WebSocket server; or,
after establishing the first VDI channel between NC 1 and the access terminal (the VDI channel is used to transmit data input by a user application interface and by a user by using a device such as a keyboard and a mouse), establishing, by NC1, a second VDI channel according to the ICA protocol; or,
establishing, by NC1, a point-to-point data channel between a browser in NC1 and a browser in the access terminal by using a data channel mechanism in a browser web real-time communication WebRTC application of NC1.

Step 620: The network computer receives a call request that is sent by a communication device and used to call a user corresponding to the access terminal.

Specifically, the access terminal accesses a desktop cloud system, NC 1 transmits a user application interface to the access terminal, the access terminal receives and displays the user application interface transmitted by NC1, and NC 1 receives a call request that is sent by a communication device about to communicate with the access terminal and used to call a user corresponding to the access terminal.

Step 630: The network computer sends, according to the call request, a real-time collaboration message to the access terminal through the real-time collaboration channel, where the real-time collaboration message includes a first media attribute parameter that is supported by the communication device and is obtained by the network computer by parsing the call request, and is used to instruct the access terminal to perform media negotiation with the communication device according to the first media attribute parameter supported by the communication device.

Specifically, when NC1 receives the call request that is sent by the communication device about to communicate with the access terminal and used to call a user corresponding to the access terminal, NC1 parses the call request, and determines that the communication device expects to establish a video and audio call to the user corresponding to the access terminal. NC1 sends a real-time collaboration message to the access terminal through the real-time collaboration channel established in step 610, where the real-time collaboration message includes a first media attribute parameter obtained by NC1 by parsing the call request and supported by the communication device, so that the access terminal performs media negotiation with the communication device according to the first media attribute parameter.

In the embodiment of the present invention, the first media attribute parameter specifically refers to information necessary for the communication device to establish a video and audio call and transmit a media stream, where the first media attribute parameter includes a media format supported by the communication device, and an IP address and a port number that are used to receive media.

It may be understood that, when performing communication interaction with NC1, the communication device needs to forward a communication message through a WebRTC server. When the communication device sends the first media attribute parameter to NC1 through the WebRTC server, the WebRTC server may add the first media attribute parameter into a connection request message for sending.

Step 640: The network computer forwards information used to perform media negotiation between the access terminal and the communication device, to enable the access terminal and the communication device to determine, through the media negotiation, a media attribute parameter that is used to transmit a media stream between the access terminal and the communication device, so that the access terminal transmits a media stream mutually with the communication device according to the media attribute parameter determined through the media negotiation, where the information used to perform the media negotiation is transmitted between the network computer and the access terminal through the real-time collaboration channel.

Specifically, the access terminal initiates the media negotiation to the communication device according to the received real-time collaboration message. NC1 forwards information used to perform media negotiation between the access terminal and the communication device, to enable the access terminal and the communication device to determine, through the media negotiation, a media attribute parameter that is used to transmit a media stream between the access terminal and the communication device, so that the access terminal transmits the media stream mutually with the communication device according to the media attribute parameter determined through the media negotiation, where the information used to perform media negotiation is transmitted between NC1 and the access terminal through the real-time collaboration channel established in step 610.

Further, in this step, the forwarding, by the network computer, information used to perform media negotiation between the access terminal and the communication device, to enable the access terminal and the communication device to determine, through the media negotiation, a media attribute parameter that is used to transmit a media stream between the access terminal and the communication device specifically includes:
receiving, by NC1, a second media attribute parameter that is sent by the access terminal through the real-time collaboration channel, where the second media attribute parameter includes an IP address and a port number of the access terminal that are used to receive media, and a media format that is supported by both the access terminal and the communication device and is determined by the access terminal according to the first media attribute parameter; and forwarding, by NC1, the second media attribute parameter to the communication device, so that the communication device sends first media to the access terminal by using the IP address and the port number of the access terminal that are used to receive media, and receives second media that is sent by the access terminal by using the IP address and the port number of the communication device that are used to receive media, where both the first media and the second media are encoded by adopting the media format included in the second media attribute parameter.

It may be understood that, when performing communication interaction with the communication device, NC1 needs to forward a communication message through a WebRTC server. When sending the second media attribute parameter to the communication device through the WebRTC server, NC 1 may add the second media attribute parameter into a connect reply message for sending.

Optionally, in the embodiment of the present invention, before step 610 of establishing, by the network computer, a real-time collaboration channel between the network computer and the access terminal, the method further includes a step: An access terminal of a recipient accesses a desktop cloud system. Because the process for an access terminal of a recipient to access a desktop cloud system is the same as the process for an access terminal of an initiator to access a desktop cloud system, and in Embodiment 1, and the process for an access terminal of an initiator to access a desktop cloud system is described in detail, the process for an access terminal of a recipient to access a desktop cloud system is not repeated again herein.

Optionally, in the embodiment of the present invention, before the forwarding, by the network computer, the second media attribute parameter to the communication device, the method further includes a step: The network computer performs encapsulation processing on the second media attribute parameter to generate a call response. The specific step is as follows:
invoking, by NC1, a WebRTC signaling message protocol stack; and performing, by NC1, encapsulation processing on the second media attribute parameter by using the signaling message protocol stack, to generate a call response, where the call response includes the second media attribute parameter.

It may be understood that, only after performing encapsulation processing on the second media attribute parameter, NC 1 may forward the encapsulated second media attribute parameter to the communication device through the WebRTC server. In the embodiment of the present invention, a message header (for example: from XX to XX) may be added to the second media attribute parameter. The added message header may enable the WebRTC server to determine a transmission path of the call response, so that the WebRTC server forwards the call response to the communication device.

Optionally, in the embodiment of the present invention, the method further includes a step: If the access terminal determines that the access terminal does not support the first media attribute parameter, NC1 receives a connection failure message sent by the access terminal, and forwards the connection failure message to the communication device. Through the step, the access terminal establishes no media transmission channel between the access terminal and the communication device. The specific step is as follows:
when the access terminal determines, according to the first media attribute parameter, that the access terminal does not support the first media attribute parameter, rejecting, by the access terminal, transmitting a media stream mutually with the communication device, generating, by the access terminal, a connection failure message, and sending the connection failure message to NC1, so that NC1 sends the received connection failure message to a communication terminal.

In the embodiment of the present invention, that the access terminal does not support the first media attribute parameter specifically refers to that the media attribute parameter supported by the access terminal does not match the second media attribute parameter, so that the access terminal does not support the first media attribute parameter.

Therefore, by applying the method for transmitting a media stream provided in the embodiment of the present invention, an access terminal receives, through a real-time collaboration channel established to a network computer, a real-time collaboration message that is sent by the network computer, initiates, through the network computer, media negotiation with a communication device according to the real-time collaboration message, and transmits a media stream mutually with the communication device according to a media attribute parameter determined through the media negotiation. Because of the technical characteristics that the access terminal exchanges the media attribute parameter with the communication device through the network computer, to complete the media negotiation between the access terminal and the communication device, and the access terminal transmits the media stream to the communication device, the access terminal and the communication device can directly transmit the media stream to each other, and no longer perform transmission by using the NC, thereby avoiding the problems in the prior art that the delay of the media stream is obvious and communication quality is reduced because the NC needs to perform conversion and transmission on media data, and bandwidth occupancy between a TC/PC and the NC is increased and bandwidth is wasted because a media stream needs to be transferred back and forth between the TC/PC and the NC through a VDI channel. Therefore, the delay of the media stream is reduced, and the bandwidth is saved.

To facilitate understanding of Embodiment 3 of the present invention and Embodiment 4 of the present invention, the following further describes specific embodiments with reference to accompanying drawings. The embodiments do not constitute any limitation to the embodiments of the present invention.

FIG. 7 is a signaling diagram of still another method for transmitting a media stream according to an embodiment of the present invention. The signaling diagram shown in FIG. 7 is a processing process for an access terminal to transmit a media stream to a communication device. As shown in FIG. 7, the access terminal is specifically an agent terminal in a CTI platform, and the communication device is specifically a media access device that can communicate with a user terminal. The following describes a method for transmitting a media stream by using examples.

A user initiates a first call to a user corresponding to an agent terminal by using a user terminal, where the first call is received by a media access device. The media access device initiates a second call to the CTI according to the first call initiated by the user, the CTI allocates the agent terminal to the user according to the second call, and the CTI sends, through a WebRTC server, a modify message to NC1 in corresponding communication with the agent terminal, so that NC1 determines that a state of the agent terminal in corresponding communication with NC1 is modified. Meanwhile, the CTI further sends a call agent terminal message to the media access device, and the media access device sends, through the WebRTC server, a call request of a user corresponding to a user call agent terminal to NC1 according to the call agent terminal message. When the call request is forwarded through the WebRTC server, the WebRTC server encapsulates the call request into a WebRTC connection request message.

According to the call request, NC1 sends a real-time collaboration message to the agent terminal in corresponding communication with NC1, where the real-time collaboration message includes a first media attribute parameter obtained by NC1 by parsing the call request and supported by the media access device. If the agent terminal determines that the agent terminal supports the first media attribute parameter, the agent terminal determines, according to the first media attribute parameter, a second media attribute parameter supported by the agent terminal.

The agent terminal sends the second media attribute parameter to NC1 through the real-time collaboration channel, and NC1 receives the second media attribute parameter sent by the agent terminal; and sends a call response to the media access device through the WebRTC server. When the call response is forwarded through the WebRTC server, the WebRTC server encapsulates the call response into a WebRTC connect reply message. The agent terminal completes the media negotiation according to the first media attribute parameter and the second media attribute parameter, and transmits a media stream mutually with the media access device.

### Embodiment 5

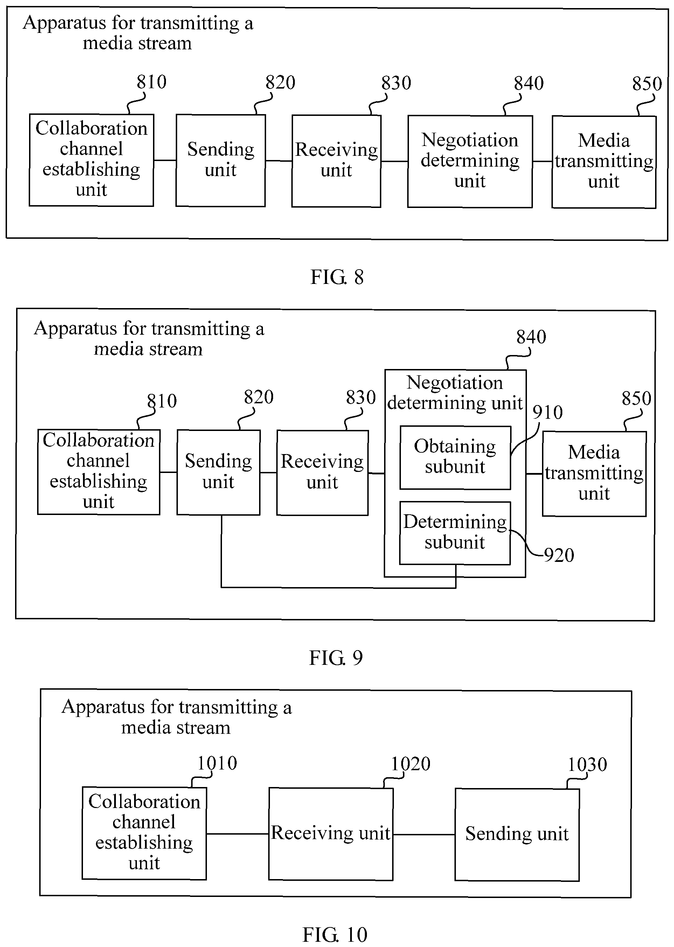

The methods described in the foregoing multiple embodiments may all implement a method for transmitting a media stream. Correspondingly, Embodiment 5 of the present invention further provides an apparatus for transmitting a media stream, so as to implement the method for transmitting a media stream in Embodiment 1. As shown in FIG. 8, a first virtualized desktop infrastructure VDI channel is established between the apparatus and a network computer allocated by a cloud server to the apparatus. The apparatus includes: a collaboration channel establishing unit 810, a sending unit 820, a receiving unit 830, a negotiation determining unit 840 and a media transmitting unit 850.

The collaboration channel establishing unit 810 in the apparatus is configured to establish a real-time collaboration channel between the apparatus and the network computer.

The sending unit 820 is configured to send, to the network computer through the first VDI channel, an operation instruction input by a user.

The receiving unit 830 is configured to receive a real-time collaboration message that is sent by the network computer through the real-time collaboration channel established by the collaboration channel establishing unit, where the real-time collaboration message is sent when the network computer determines that the operation instruction is an operation instruction used to initiate a call, and is used to instruct the apparatus to initiate media negotiation with the communication device.

The negotiation determining unit 840 is configured to perform media negotiation with the communication device through the network computer, so as to determine a media attribute parameter that is used to transmit a media stream between the apparatus and the communication device, and configured to transmit the media attribute parameter determined through the media negotiation to the media transmitting unit, where the real-time collaboration channel established between the apparatus and the network computer by the collaboration channel establishing unit transmits information used for the media negotiation.

The media transmitting unit 850 is configured to receive the media attribute parameter determined through the media negotiation from the negotiation determining unit, and transmit a media stream mutually with the communication device according to the media attribute parameter determined through the media negotiation. The collaboration channel establishing unit 810 is specifically configured to establish a WebSocket channel between the apparatus and the network computer through a web socket WebSocket server; or,
establish a second virtualized desktop infrastructure VDI channel between the apparatus and the network computer; or,
establish a point-to-point data channel between a browser in the apparatus and a browser in the network computer by using a data channel mechanism in a browser web real-time communication WebRTC application of the apparatus.

Further, as shown in FIG. 9, the negotiation determining unit 840 further includes: an obtaining subunit 910 and a determining subunit 920.

The obtaining subunit 910 is configured to obtain a first media attribute parameter supported by the apparatus, and configured to transmit the first media attribute parameter to the sending unit, where the first media attribute parameter includes a media format supported by the apparatus, and an IP address and a port number that are used to receive media.

The sending unit 820 is further configured to receive the first media attribute parameter from the obtaining subunit, and send the first media attribute parameter to the network computer through the real-time collaboration channel established by the collaboration channel establishing unit, so as to enable the network computer to send a connection request message carrying the first media attribute parameter to the communication device to be called.

The receiving unit 830 is further configured to receive a second media attribute parameter that is received by the network computer from the communication device and is sent by the network computer through the real-time collaboration channel established by the collaboration channel establishing unit, and transmit the second media attribute parameter to the determining subunit of the negotiation determining unit, where the second media attribute parameter includes an IP address and a port number of the communication device that are used to receive media, and a media format that is supported by both the apparatus and the communication device and is determined by the communication device according to the first media attribute parameter.

The determining subunit 920 is configured to receive the second media attribute parameter from the receiving unit, and configured to transmit the second media attribute parameter to the media transmitting unit.

The media transmitting unit 850 is specifically configured to send first media to the communication device by using the IP address and the port number of the communication device that are used to receive media, and receive second media that is sent by the communication device by using the IP address and the port number of the apparatus that are used to receive media, where both the first media and the second media are encoded by adopting the media format included in the second media attribute parameter.

The obtaining subunit 910 is specifically configured to invoke a new peer connection interface function in a browser application programming interface API of the apparatus; and
generate a peer connection interface by using the new peer connection interface function, and obtain, by using a create offer function included in the peer connection interface, the first media attribute parameter supported by the apparatus.

Therefore, by applying the apparatus for transmitting a media stream provided in the embodiment of the present invention, the apparatus receives, through a real-time collaboration channel established to a network computer, a real-time collaboration message that is sent by the network computer, initiates, through the network computer, media negotiation with a communication device according to the real-time collaboration message, and transmits a media stream mutually with the communication device according to a media attribute parameter determined through the media negotiation. Because of the technical characteristics that the apparatus exchanges the media attribute parameter with the communication device through the network computer, to complete the media negotiation between the apparatus and the communication device, and the apparatus transmits the media stream to the communication device, so that the apparatus and the communication device can directly transmit the media stream to each other, and no longer perform transmission by using the NC, thereby avoiding the problems in the prior art that the delay of the media stream is obvious and communication quality is reduced because the NC needs to perform conversion and transmission on media data, and bandwidth occupancy between a TC/PC and the NC is increased and bandwidth is wasted because a media stream needs to be transferred back and forth between the TC/PC and the NC through a VDI channel. Therefore, the delay of the media stream is reduced, and the bandwidth is saved.

### Embodiment 6

The methods described in the foregoing multiple embodiments may all implement a method for transmitting a media stream. Correspondingly, Embodiment 6 of the present invention further provides an apparatus for transmitting a media stream, so as to implement the method for transmitting a media stream in Embodiment 2. As shown in FIG. 10, a first virtualized desktop infrastructure VDI channel is established between the apparatus and the access terminal. The apparatus includes: a collaboration channel establishing unit 1010, a receiving unit 1020 and a sending unit 1030. The apparatus is allocated by a cloud server to the access terminal.

The collaboration channel establishing unit 1010 in the apparatus is configured to establish a real-time collaboration channel between the apparatus and the access terminal.

The receiving unit 1020 is configured to receive an operation instruction that is input by a user and is sent by the access terminal through the first VDI channel.

The sending unit 1030 is configured to: when it is determined that the operation instruction is an operation instruction used to instruct that a call be initiated, send a real-time collaboration message to the access terminal through the real-time collaboration channel established by the collaboration channel establishing unit, where the real-time collaboration message is used to instruct the access terminal to initiate media negotiation with the communication device.

The sending unit 1030 is further configured to forward information used to perform media negotiation between the access terminal and the communication device, to enable the access terminal and the communication device to determine, through the media negotiation, a media attribute parameter that is used to transmit a media stream between the access terminal and the communication device, so that the access terminal transmits a media stream mutually with the communication device according to the media attribute parameter determined through the media negotiation, where the information used to perform the media negotiation is transmitted between the apparatus and the access terminal through the real-time collaboration channel established by the collaboration channel establishing unit.

The collaboration channel establishing unit 1010 is specifically configured to establish a WebSocket channel between the apparatus and the access terminal through a web socket WebSocket server; or,
establish a second VDI channel between the apparatus and the access terminal; or,
establish a point-to-point data channel between a browser in the apparatus and a browser in the access terminal by using a data channel mechanism in a browser web real-time communication WebRTC application of the apparatus.

The receiving unit 1020 is specifically configured to receive a first media attribute parameter that is supported by the access terminal and is sent by the access terminal through the real-time collaboration channel established by the collaboration channel establishing unit, and configured to transmit the first media attribute parameter to the sending unit, where the first media attribute parameter includes a media format supported by the access terminal, and an IP address and a port number that are used to receive media.

The sending unit 1030 is specifically configured to receive the first media attribute parameter from the receiving unit, and send a connection request message to the communication device according to the operation instruction that is input by the user and used to instruct that a call be initiated, where the connection request message includes the first media attribute parameter.

The receiving unit 1020 is further specifically configured to receive a connect reply message that is sent by the communication device when the communication device determines that the communication device supports the first media attribute parameter, where the connect reply message includes a second media attribute parameter supported by the communication device, and configured to transmit the second media attribute parameter to the sending unit, where the second media attribute parameter includes an IP address and a port number of the communication device that are used to receive media, and a media format that is supported by both the access terminal and the communication device and is determined by the communication device according to the first media attribute parameter.

The sending unit 1030 is further specifically configured to receive the second media attribute parameter from the receiving unit, and send the second media attribute parameter to the access terminal through the real-time collaboration channel established by the collaboration channel establishing unit, so that the access terminal sends first media to the communication device by using the IP address and the port number of the communication device that are used to receive media, and receives second media that is sent by the communication device by using the IP address and the port number of the access terminal that are used to receive media, where both the first media and the second media are encoded by adopting the media format included in the second media attribute parameter.

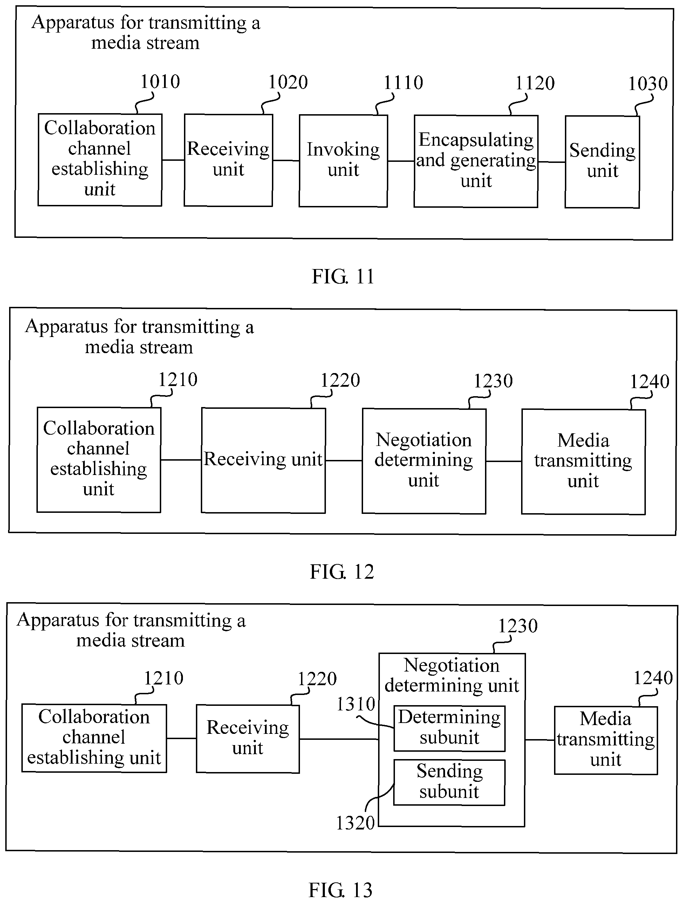

Further, as shown in FIG. 11, the apparatus further includes: an invoking unit 1110, configured to invoke a WebRTC signaling message protocol stack; and
an encapsulating and generating unit 1120, configured to perform encapsulation processing on the first media attribute parameter by using the signaling message protocol stack invoked by the invoking unit, to generate the connection request message, where the connection request message includes the first media attribute parameter.

Therefore, by applying the apparatus for transmitting a media stream provided in the embodiment of the present invention, an access terminal receives, through a real-time collaboration channel established to the apparatus, a real-time collaboration message that is sent by the apparatus, initiates, by using the apparatus, media negotiation with a communication device according to the real-time collaboration message, and transmits a media stream mutually with the communication device according to a media attribute parameter determined through the media negotiation. Because of the technical characteristics that the access terminal exchanges the media attribute parameter with the communication device through the apparatus, to complete the media negotiation between the access terminal and the communication device, and the access terminal transmits the media stream to the communication device, the access terminal and the communication device can directly transmit the media stream to each other, and no longer perform transmission by using the NC, thereby avoiding the problems in the prior art that the delay of the media stream is obvious and communication quality is reduced because the NC needs to perform conversion and transmission on media data, and bandwidth occupancy between a TC/PC and the NC is increased and bandwidth is wasted because a media stream needs to be transferred back and forth between the TC/PC and the NC through a VDI channel. Therefore, the delay of the media stream is reduced, and the bandwidth is saved.

### Embodiment 7

The methods described in the foregoing multiple embodiments may all implement a method for transmitting a media stream. Correspondingly, Embodiment 7 of the present invention further provides an apparatus for transmitting a media stream, so as to implement the method for transmitting a media stream in Embodiment 3. As shown in FIG. 12, a first virtualized desktop infrastructure VDI channel is established between the apparatus and a network computer allocated by a cloud server to the apparatus. The apparatus includes: a collaboration channel establishing unit 1210, a receiving unit 1220, a negotiation determining unit 1230 and a media transmitting unit 1240.

The collaboration channel establishing unit 1210 in the apparatus is configured to establish a real-time collaboration channel between the apparatus and the network computer.

The receiving unit 1220 is configured to receive a real-time collaboration message that is sent by the network computer through the real-time collaboration channel established by the collaboration channel establishing unit, where the real-time collaboration message is sent by the network computer when the network computer receives a call request that is sent by a communication device and used to call a user corresponding to the apparatus, and the real-time collaboration message includes a first media attribute parameter that is supported by the communication device and is obtained by the network computer by parsing the call request, and is used to instruct the apparatus to perform media negotiation with the communication device according to the first media attribute parameter supported by the communication device.

The negotiation determining unit 1230 is configured to perform media negotiation with the communication device through the network computer, so as to determine a media attribute parameter that is used to transmit a media stream between the apparatus and the communication device, and configured to transmit the media attribute parameter determined through the media negotiation to the media transmitting unit, where the real-time collaboration channel established between the apparatus and the network computer by the collaboration channel establishing unit transmits information used for the media negotiation.

The media transmitting unit 1240 is configured to receive the media attribute parameter determined through the media negotiation from the negotiation determining unit, and transmit a media stream mutually with the communication device according to the media attribute parameter determined through the media negotiation. The collaboration channel establishing unit 1210 is specifically configured to establish a WebSocket channel between the apparatus and the network computer through a web socket WebSocket server; or,
establish a second VDI channel between the apparatus and the network computer; or,
establish a point-to-point data channel between a browser in the apparatus and a browser in the network computer by using a data channel mechanism in a browser web real-time communication WebRTC application of the apparatus.

The first media attribute parameter included in the real-time collaboration message received by the receiving unit 1220 includes a media format supported by the communication device, and an IP address and a port number that are used to receive media.

Further, as shown in FIG. 13, the negotiation determining unit 1230 further includes: a determining subunit 1310 and a sending subunit 1320.

The determining subunit 1310 is configured to determine, according to the first media attribute parameter, a second media attribute parameter supported by the apparatus, and configured to transmit the second media attribute parameter to the sending subunit, where the second media attribute parameter includes an IP address and a port number of the apparatus that are used to receive media, and a media format that is supported by both the apparatus and the communication device and is determined by the apparatus according to the first media attribute parameter.

The sending subunit 1320 is configured to receive the second media attribute parameter from the determining subunit, and transmit the second media attribute parameter to the media transmitting unit, and configured to send the second media attribute parameter to the network computer through the real-time collaboration channel established by the collaboration channel establishing unit, so as to enable the network computer to forward the second media attribute parameter to the communication device.

The media transmitting unit is specifically configured to send first media to the communication device by using the IP address and the port number of the communication device that are used to receive media, and receive second media that is sent by the communication device by using the IP address and the port number of the apparatus that are used to receive media, where both the first media and the second media are encoded by adopting the media format included in the second media attribute parameter.

The determining subunit 1310 is specifically configured to invoke a new peer connection interface function in a browser application programming interface API of the apparatus, generate a peer connection interface by using the new peer connection interface function, and obtain the second media attribute parameter by using a create answer function included in the peer connection interface.

Therefore, by applying the apparatus for transmitting a media stream provided in the embodiment of the present invention, the apparatus receives, through a real-time collaboration channel established to a network computer, a real-time collaboration message that is sent by the network computer, initiates, through the network computer, media negotiation with a communication device according to the real-time collaboration message, and transmits a media stream mutually with the communication device according to a media attribute parameter determined through the media negotiation. Because of the technical characteristics that the apparatus exchanges the media attribute parameter with the communication device through the network computer, to complete the media negotiation between the apparatus and the communication device, and the apparatus transmits the media stream to the communication device, so that the apparatus and the communication device can directly transmit the media stream to each other, and no longer perform transmission by using the NC, thereby avoiding the problems in the prior art that the delay of the media stream is obvious and communication quality is reduced because the NC needs to perform conversion and transmission on media data, and bandwidth occupancy between a TC/PC and the NC is increased and bandwidth is wasted because a media stream needs to be transferred back and forth between the TC/PC and the NC through a VDI channel. Therefore, the delay of the media stream is reduced, and the bandwidth is saved.

### Embodiment 8

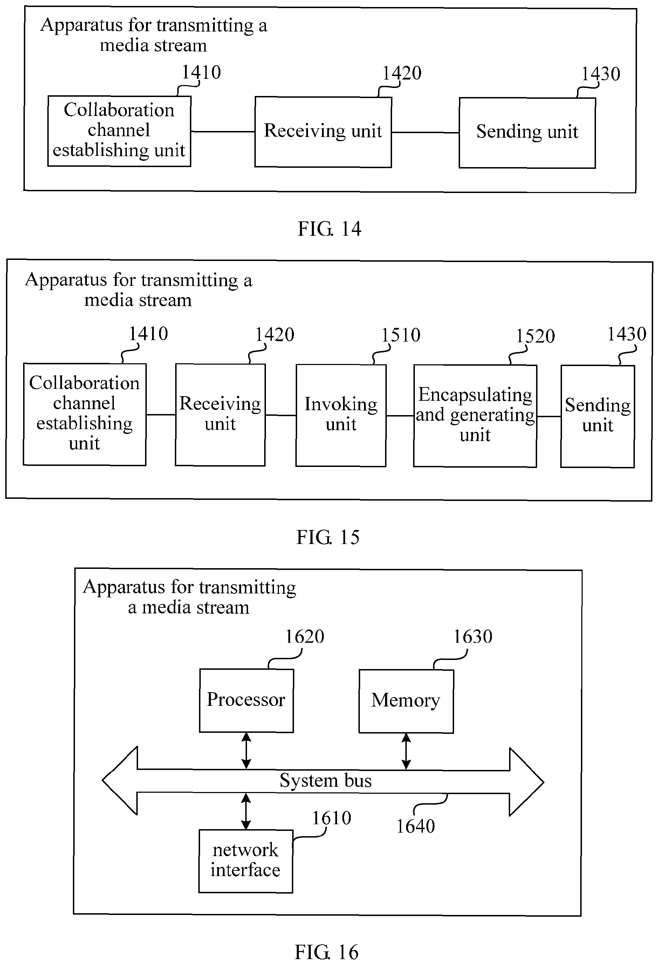

The methods described in the foregoing multiple embodiments may all implement a method for transmitting a media stream. Correspondingly, Embodiment 8 of the present invention further provides an apparatus for transmitting a media stream, so as to implement the method for transmitting a media stream in Embodiment 4. As shown in FIG. 14, a first virtualized desktop infrastructure VDI channel is established between the apparatus and the access terminal. The apparatus includes: a collaboration channel establishing unit 1410, a receiving unit 1420 and a sending unit 1430. The apparatus is allocated by a cloud server to the access terminal.

The collaboration channel establishing unit 1410 in the apparatus is configured to establish a real-time collaboration channel between the apparatus and the access terminal.

The receiving unit 1420 is configured to receive a call request that is sent by a communication device and used to call a user corresponding to the access terminal, and configured to transmit the call request to the sending unit.

The sending unit 1430 is configured to receive the call request from the receiving unit, and send, according to the call request, a real-time collaboration message to the access terminal through the real-time collaboration channel established by the collaboration channel establishing unit, where the real-time collaboration message includes a first media attribute parameter that is supported by the communication device and is obtained by the apparatus by parsing the call request, and is used to instruct the access terminal to perform media negotiation with the communication device according to the first media attribute parameter supported by the communication device.

The sending unit 1430 is further configured to forward information used to perform media negotiation between the access terminal and the communication device, to enable the access terminal and the communication device to determine, through the media negotiation, a media attribute parameter that is used to transmit a media stream between the access terminal and the communication device, so that the access terminal transmits a media stream mutually with the communication device according to the media attribute parameter determined through the media negotiation, where the information used to perform the media negotiation is transmitted between the apparatus and the access terminal through the real-time collaboration channel established by the collaboration channel establishing unit.

The collaboration channel establishing unit 1410 is specifically configured to establish a WebSocket channel between the apparatus and the access terminal through a web socket WebSocket server; or,
establish a second VDI channel between the apparatus and the access terminal; or,
establish a point-to-point data channel between a browser in the apparatus and a browser in the access terminal by using a data channel mechanism in a browser web real-time communication WebRTC application of the apparatus.

The first media attribute parameter included in the real-time collaboration message sent by the sending unit 1430 includes a media format supported by the communication device, and an IP address and a port number that are used to receive media.

The receiving unit 1420 is further configured to receive a second media attribute parameter that is sent by the access terminal through the real-time collaboration channel established by the collaboration channel establishing unit, and configured to transmit the second media attribute parameter to the sending unit, where the second media attribute parameter includes an IP address and a port number of the access terminal that are used to receive media and a media format that is supported by both the access terminal and the communication device and is determined by the access terminal according to the first media attribute parameter.

The sending unit 1430 is specifically configured to forward the second media attribute parameter received by the receiving unit to the communication device, so that the communication device sends first media to the access terminal by using the IP address and the port number of the access terminal that are used to receive media, and receives second media that is sent by the access terminal by using the IP address and the port number of the communication device that are used to receive media, where both the first media and the second media are encoded by adopting the media format included in the second media attribute parameter.

Further, as shown in FIG. 15, the apparatus further includes: an invoking unit 1510, configured to invoke a WebRTC signaling message protocol stack.

The encapsulating and generating unit 1520 is configured to perform, by using the signaling message protocol stack invoked by the invoking unit, encapsulation processing on the second media attribute parameter received by the receiving unit, to generate a call response, and configured to transmit the call response to the sending unit.

The sending unit 1430 is specifically configured to send the call response generated by the encapsulating and generating unit to the communication device, where the call response includes the second media attribute parameter.

Therefore, by applying the apparatus for transmitting a media stream provided in the embodiment of the present invention, an access terminal receives, through a real-time collaboration channel established to the apparatus, a real-time collaboration message that is sent by the apparatus, initiates, by using the apparatus, media negotiation with a communication device according to the real-time collaboration message, and transmits a media stream mutually with the communication device according to a media attribute parameter determined through the media negotiation. Because of the technical characteristics that the access terminal exchanges the media attribute parameter with the communication device through the apparatus, to complete the media negotiation between the access terminal and the communication device, and the access terminal transmits the media stream to the communication device, the access terminal and the communication device can directly transmit the media stream to each other, and no longer perform transmission by using the NC, thereby avoiding the problems in the prior art that the delay of the media stream is obvious and communication quality is reduced because the NC needs to perform conversion and transmission on media data, and bandwidth occupancy between a TC/PC and the NC is increased and bandwidth is wasted because a media stream needs to be transferred back and forth between the TC/PC and the NC through a VDI channel. Therefore, the delay of the media stream is reduced, and the bandwidth is saved.

### Embodiment 9

In addition, the apparatus for transmitting a media stream provided in Embodiment 5 of the present invention may further adopt the following implementation manner, so as to implement the method for transmitting a media stream in the foregoing embodiment of the present invention. As shown in FIG. 16, a first virtualized desktop infrastructure VDI channel is established between the apparatus and a network computer allocated by a cloud server to the apparatus, and the apparatus for transmitting a media stream includes: a network interface 1610, a processor 1620 and a memory 1630. A system bus 1640 is configured to connect the network interface 1610, the processor 1620 and the memory 1630.

The network interface 1610 is configured to perform interaction communication with the network computer. The memory 1630 may be a permanent memory, for example, a hard disk drive and a flash memory, and the memory 1630 is configured to store an application program, where the application program includes an instruction that can be used to enable the processor 1620 to access and execute the following:
establishing a real-time collaboration channel between the apparatus and the network computer;
sending, to the network computer through the first VDI channel, an operation instruction input by a user;
receiving a real-time collaboration message that is sent by the network computer through the real-time collaboration channel, where the real-time collaboration message is sent when the network computer determines that the operation instruction is an operation instruction used to instruct that a call be initiated, and is used to instruct the apparatus to initiate media negotiation with the communication device;
performing media negotiation with the communication device through the network computer, so as to determine a media attribute parameter that is used to transmit a media stream between the apparatus and the communication device, where information used for the media negotiation is transmitted between the apparatus and the network computer through the real-time collaboration channel; and
transmitting a media stream mutually with the communication device according to the media attribute parameter determined through the media negotiation.

Further, in the application program stored by the memory 1630, an instruction that can be used to enable the processor 1620 to execute a process of establishing a real-time collaboration channel between the apparatus and the network computer is specifically an instruction of executing the following process:
establishing a WebSocket channel between the apparatus and the network computer through a web socket WebSocket server; or, establishing a second VDI channel between the apparatus and the network computer; or,
establishing a point-to-point data channel between a browser in the apparatus and a browser in the network computer by using a data channel mechanism in a browser web real-time communication WebRTC application of the apparatus.

Further, in the application program stored by the memory 1630, an instruction that can be used to enable the processor 1620 to execute a process of performing media negotiation with the communication device through the network computer, so as to determine a media attribute parameter that is used to transmit a media stream between the apparatus and the communication device is specifically an instruction of executing the following processes:
obtaining a first media attribute parameter supported by the apparatus, where the first media attribute parameter includes a media format supported by the apparatus, and an IP address and a port number that are used to receive media;
sending the first media attribute parameter to the network computer through the real-time collaboration channel, so as to enable the network computer to send a connection request message carrying the first media attribute parameter to the communication device to be called; and
receiving, a second media attribute parameter that is received by the network computer from the communication device and is sent by the network computer through the real-time collaboration channel, where the second media attribute parameter includes an IP address and a port number of the communication device that are used to receive media, and a media format that is supported by both the apparatus and the communication device and is determined by the communication device according to the first media attribute parameter.

Further, in the application program stored by the memory 1630, an instruction that can be used to enable the processor 1620 to execute a process of transmitting a media stream mutually with the communication device according to the media attribute parameter determined through the media negotiation is specifically an instruction of executing the following process:
sending first media to the communication device by using the IP address and the port number of the communication device that are used to receive media, and receiving second media that is sent by the communication device by using the IP address and the port number of the apparatus that are used to receive media, where both the first media and the second media are encoded by adopting the media format included in the second media attribute parameter.

Further, in the application program stored by the memory 1630, an instruction that can be used to enable the processor 1620 to execute a process of obtaining a first media attribute parameter supported by the apparatus is specifically an instruction of executing the following processes:
invoking a new peer connection interface function in a browser application programming interface API of the apparatus; and
generating a peer connection interface by using the new peer connection interface function, and obtaining, by using a create offer function included in the peer connection interface, the first media attribute parameter supported by the apparatus.

Therefore, by applying the apparatus for transmitting a media stream provided in the embodiment of the present invention, the apparatus receives, through a real-time collaboration channel established to a network computer, a real-time collaboration message that is sent by the network computer, initiates, through the network computer, media negotiation with a communication device according to the real-time collaboration message, and transmits a media stream mutually with the communication device according to a media attribute parameter determined through the media negotiation. Because of the technical characteristics that the apparatus exchanges the media attribute parameter with the communication device through the network computer, to complete the media negotiation between the apparatus and the communication device, and the apparatus transmits the media stream to the communication device, so that the apparatus and the communication device can directly transmit the media stream to each other, and no longer perform transmission by using the NC, thereby avoiding the problems in the prior art that the delay of the media stream is obvious and communication quality is reduced because the NC needs to perform conversion and transmission on media data, and bandwidth occupancy between a TC/PC and the NC is increased and bandwidth is wasted because a media stream needs to be transferred back and forth between the TC/PC and the NC through a VDI channel. Therefore, the delay of the media stream is reduced, and the bandwidth is saved.

### Embodiment 10

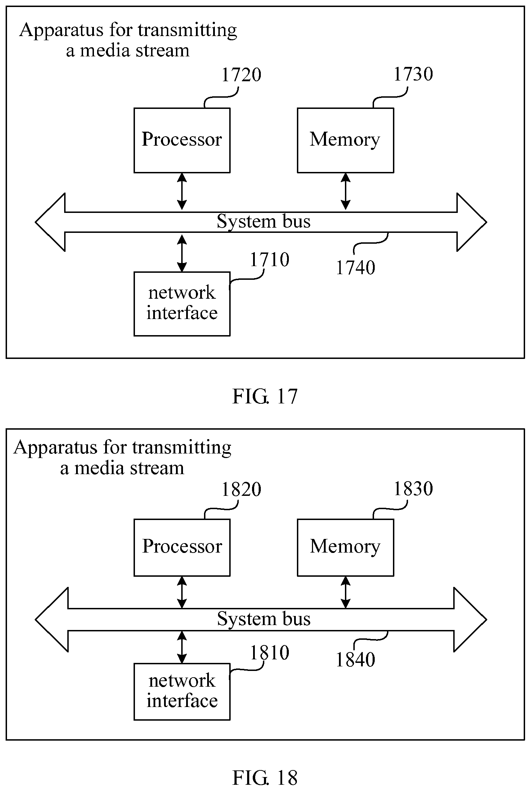

In addition, the apparatus for transmitting a media stream provided in Embodiment 6 of the present invention may further adopt the following implementation manner, so as to implement the method for transmitting a media stream in the foregoing embodiment of the present invention. As shown in FIG. 17, a first virtualized desktop infrastructure VDI channel is established between the apparatus and the access terminal, and the apparatus for transmitting a media stream includes: a network interface 1710, a processor 1720 and a memory 1730. A system bus 1740 is configured to connect the network interface 1710, the processor 1720 and the memory 1730. The apparatus is allocated by a cloud server to an access terminal.

The network interface 1710 is configured to perform interaction communication with the access terminal, a WebRTC server and a communication device.

The memory 1730 may be a permanent memory, for example, a hard disk drive and a flash memory, and the memory 1730 is configured to store an application program, where the application program includes an instruction that can be used to enable the processor 1720 to access and execute the following:
establishing a real-time collaboration channel between the apparatus and the access terminal;
receiving an operation instruction that is input by a user and is sent by the access terminal through the first VDI channel;
when it is determined that the operation instruction is an operation instruction used to instruct that a call be initiated, sending a real-time collaboration message to the access terminal through the real-time collaboration channel, where the real-time collaboration message is used to instruct the access terminal to initiate media negotiation with the communication device; and
forwarding information used to perform media negotiation between the access terminal and the communication device, to enable the access terminal and the communication device to determine, through the media negotiation, a media attribute parameter that is used to transmit a media stream between the access terminal and the communication device, so that the access terminal transmits a media stream mutually with the communication device according to the media attribute parameter determined through the media negotiation, where the information used to perform the media negotiation is transmitted between the apparatus and the access terminal through the real-time collaboration channel. Further, in the application program stored by the memory 1730, an instruction that can be used to enable the processor 1720 to execute a process of establishing a real-time collaboration channel between the apparatus and the access terminal is specifically an instruction of executing the following processes:
   establishing a WebSocket channel between the apparatus and the access terminal through a web socket WebSocket server; or,
   establishing a second VDI channel between the apparatus and the access terminal; or, establishing a point-to-point data channel between a browser in the apparatus and a browser in the access terminal by using a data channel mechanism in a browser web real-time communication WebRTC application of the apparatus.

Further, in the application program stored by the memory 1730, an instruction that can be used to enable the processor 1720 to execute a process of forwarding information used to perform media negotiation between the access terminal and the communication device, to enable the access terminal and the communication device to determine, through the media negotiation, a media attribute parameter that is used to transmit a media stream between the access terminal and the communication device is specifically an instruction of executing the following processes:
receiving a first media attribute parameter that is supported by the access terminal and is sent by the access terminal through the real-time collaboration channel, where the first media attribute parameter includes a media format supported by the access terminal, and an IP address and a port number that are used to receive media;
sending a connection request message to the communication device according to the operation instruction that is input by the user and used to instruct that a call be initiated, where the connection request message includes the first media attribute parameter;
receiving a connect reply message that is sent by the communication device when the communication device determines that the communication device supports the first media attribute parameter, where the connect reply message includes a second media attribute parameter supported by the communication device, and the second media attribute parameter includes an IP address and a port number of the communication device that are used to receive media, and a media format that is supported by both the access terminal and the communication device and is determined by the communication device according to the first media attribute parameter; and
sending the second media attribute parameter to the access terminal through the real-time collaboration channel, so that the access terminal sends first media to the communication device by using the IP address and the port number of the communication device that are used to receive media, and receives second media that is sent by the communication device by using the IP address and the port number of the access terminal that are used to receive media, where both the first media and the second media are encoded by adopting the media format included in the second media attribute parameter.

Further, the application program stored by the memory 1730 further includes an instruction that can be used to enable the processor 1720 to execute the following processes:
invoking a WebRTC signaling message protocol stack; and
performing encapsulation processing on the first media attribute parameter by using the signaling message protocol stack, to generate the connection request message, where the connection request message includes the first media attribute parameter.

Therefore, by applying the apparatus for transmitting a media stream provided in the embodiment of the present invention, an access terminal receives, through a real-time collaboration channel established to the apparatus, a real-time collaboration message that is sent by the apparatus, initiates, by using the apparatus, media negotiation with a communication device according to the real-time collaboration message, and transmits a media stream mutually with the communication device according to a media attribute parameter determined through the media negotiation. Because of the technical characteristics that the access terminal exchanges the media attribute parameter with the communication device through the apparatus, to complete the media negotiation between the access terminal and the communication device, and the access terminal transmits the media stream to the communication device, the access terminal and the communication device can directly transmit the media stream to each other, and no longer perform transmission by using the NC, thereby avoiding the problems in the prior art that the delay of the media stream is obvious and communication quality is reduced because the NC needs to perform conversion and transmission on media data, and bandwidth occupancy between a TC/PC and the NC is increased and bandwidth is wasted because a media stream needs to be transferred back and forth between the TC/PC and the NC through a VDI channel. Therefore, the delay of the media stream is reduced, and the bandwidth is saved.

### Embodiment 11

In addition, the apparatus for transmitting a media stream provided in Embodiment 7 of the present invention may further adopt the following implementation manner, so as to implement the method for transmitting a media stream in the foregoing embodiment of the present invention. As shown in FIG. 18, a first virtualized desktop infrastructure VDI channel is established between the apparatus and a network computer allocated by a cloud server to the apparatus, and the apparatus for transmitting a media stream includes: a network interface 1810, a processor 1820 and a memory 1830. A system bus 1840 is configured to connect the network interface 1810, the processor 1820 and the memory 1830.

The network interface 1810 is configured to perform interaction communication with the network computer. The memory 1830 may be a permanent memory, for example, a hard disk drive and a flash memory, and the memory 1830 is configured to store an application program, where the application program includes an instruction that can be used to enable the processor 1820 to access and execute the following:
establishing a real-time collaboration channel between the apparatus and the network computer;
receiving a real-time collaboration message that is sent by the network computer through the real-time collaboration channel, where the real-time collaboration message is sent by the network computer when the network computer receives a call request that is sent by a communication device and used to call a user corresponding to the apparatus, and the real-time collaboration message includes a first media attribute parameter that is supported by the communication device and is obtained by the network computer by parsing the call request, and is used to instruct the apparatus to perform media negotiation with the communication device according to the first media attribute parameter supported by the communication device;
performing media negotiation with the communication device through the network computer, so as to determine a media attribute parameter that is used to transmit a media stream between the apparatus and the communication device, where information used for the media negotiation is transmitted between the apparatus and the network computer through the real-time collaboration channel; and
transmitting a media stream mutually with the communication device according to the media attribute parameter determined through the media negotiation.

Further, in the application program stored by the memory 1830, an instruction that can be used to enable the processor 1820 to execute a process of establishing a real-time collaboration channel between the apparatus and the network computer is specifically an instruction of executing the following process:
establishing a WebSocket channel between the apparatus and the network computer through a web socket WebSocket server; or,
establishing a second VDI channel between the apparatus and the network computer; or, establishing a point-to-point data channel between a browser in the apparatus and a browser in the network computer by using a data channel mechanism in a browser web real-time communication WebRTC application of the apparatus.

Further, the first media attribute parameter includes a media format supported by the communication device, and an IP address and a port number that are used to receive media.

Further, in the application program stored by the memory 1830, an instruction that can be used to enable the processor 1820 to execute a process of performing media negotiation with the communication device through the network computer, so as to determine a media attribute parameter that is used to transmit a media stream between the apparatus and the communication device is specifically an instruction of executing the following processes:
determining a second media attribute parameter supported by the apparatus according to the first media attribute parameter, where the second media attribute parameter includes an IP address and
a port number of the apparatus that are used to receive media, and a media format that is supported by both the apparatus and the communication device and is determined by the apparatus according to the first media attribute parameter; and
sending the second media attribute parameter to the network computer through the real-time collaboration channel, so as to enable the network computer to forward the second media attribute parameter to the communication device.

Further, in the application program stored by the memory 1830, an instruction that can be used to enable the processor 1820 to execute a process of transmitting a media stream mutually with the communication device according to the media attribute parameter determined through the media negotiation is specifically an instruction of executing the following process:
sending first media to the communication device by using the IP address and the port number of the communication device that are used to receive media, and receiving second media that is sent by the communication device by using the IP address and the port number of the apparatus that are used to receive media, where both the first media and the second media are encoded by adopting the media format included in the second media attribute parameter.

Further, in the application program stored by the memory 1830, an instruction that can be used to enable the processor 1820 to execute a process of determining the second media attribute parameter according to the first media attribute parameter is specifically an instruction of executing the following processes:
invoking a new peer connection interface function in a browser application programming interface API of the apparatus; and
generating a peer connection interface by using the new peer connection interface function, and obtaining the second media attribute parameter by using a create answer function included in the peer connection interface.

Therefore, by applying the apparatus for transmitting a media stream provided in the embodiment of the present invention, the apparatus receives, through a real-time collaboration channel established to a network computer, a real-time collaboration message that is sent by the network computer, initiates, through the network computer, media negotiation with a communication device according to the real-time collaboration message, and transmits a media stream mutually with the communication device according to a media attribute parameter determined through the media negotiation. Because of the technical characteristics that the apparatus exchanges the media attribute parameter with the communication device through the network computer, to complete the media negotiation between the apparatus and the communication device, and the apparatus transmits the media stream to the communication device, so that the apparatus and the communication device can directly transmit the media stream to each other, and no longer perform transmission by using the NC, thereby avoiding the problems in the prior art that the delay of the media stream is obvious and communication quality is reduced because the NC needs to perform conversion and transmission on media data, and bandwidth occupancy between a TC/PC and the NC is increased and bandwidth is wasted because a media stream needs to be transferred back and forth between the TC/PC and the NC through a VDI channel. Therefore, the delay of the media stream is reduced, and the bandwidth is saved.

### Embodiment 12

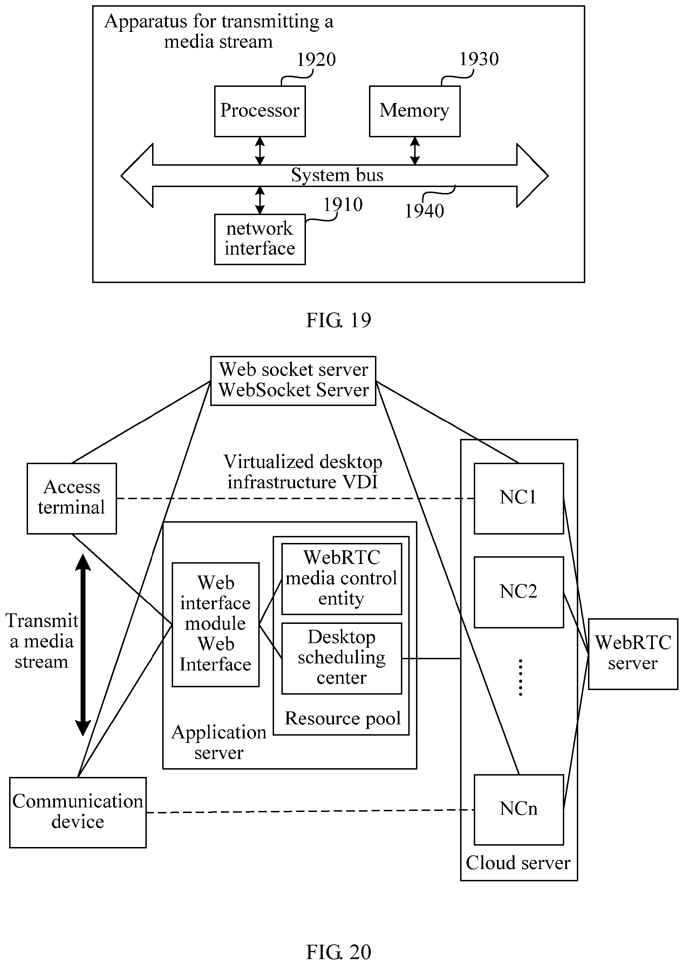

In addition, the apparatus for transmitting a media stream provided in Embodiment 8 of the present invention may further adopt the following implementation manner, so as to implement the method for transmitting a media stream in the foregoing embodiment of the present invention. As shown in FIG. 19, a first virtualized desktop infrastructure VDI channel is established between the apparatus and the access terminal, and the apparatus for transmitting a media stream includes: a network interface 1910, a processor 1920 and a memory 1930. A system bus 1940 is configured to connect the network interface 1910, the processor 1920 and the memory 1930. The apparatus is allocated by a cloud server to the access terminal.

The network interface 1910 is configured to perform interaction communication with the access terminal, a WebRTC server and a communication device.

The memory 1930 may be a permanent memory, for example, a hard disk drive and a flash memory, and the memory 1930 is configured to store an application program, where the application program includes an instruction that can be used to enable the processor 1620 to access and execute the following:
establishing a real-time collaboration channel between the apparatus and the access terminal;
receiving a call request that is sent by the communication device and used to call a user corresponding to the access terminal;
sending, according to the call request, a real-time collaboration message to the access terminal through the real-time collaboration channel, where the real-time collaboration message includes a first media attribute parameter that is supported by the communication device and is obtained by the apparatus by parsing the call request, and is used to instruct the access terminal to perform media negotiation with the communication device according to the first media attribute parameter supported by the communication device; and
forwarding information used to perform media negotiation between the access terminal and the communication device, to enable the access terminal and the communication device to determine, through the media negotiation, a media attribute parameter that is used to transmit a media stream between the access terminal and the communication device, so that the access terminal transmits a media stream mutually with the communication device according to the media attribute parameter determined through the media negotiation, where the information used to perform the media negotiation is transmitted between the apparatus and the access terminal through the real-time collaboration channel.

Further, in the application program stored by the memory 1930, an instruction that can be used to enable the processor 1920 to execute a process of establishing a real-time collaboration channel between the apparatus and the access terminal is specifically an instruction of executing the following process:
establishing a WebSocket channel between the apparatus and the access terminal through a web socket WebSocket server; or,
establishing a second VDI channel between the apparatus and the access terminal; or,
establishing a point-to-point data channel between a browser in the apparatus and a browser in the access terminal by using a data channel mechanism in a browser web real-time communication WebRTC application of the apparatus.

Further, the first media attribute parameter includes a media format supported by the communication device, and an IP address and a port number that are used to receive media.

Further, in the application program stored by the memory 1930, an instruction that can be used to enable the processor 1920 to execute a process of forwarding information used to perform media negotiation between the access terminal and the communication device, to enable the access terminal and the communication device to determine, through the media negotiation, a media attribute parameter that is used to transmit a media stream between the access terminal and the communication device is specifically an instruction of executing the following processes:
receiving a second media attribute parameter that is sent by the access terminal through the real-time collaboration channel, where the second media attribute parameter includes an IP address and a port number of the access terminal that are used to receive media, and a media format that is supported by both the access terminal and the communication device and is determined by the access terminal according to the first media attribute parameter; and
forwarding the second media attribute parameter to the communication device, so that the communication device sends first media to the access terminal by using the IP address and the port number of the access terminal that are used to receive media, and receives second media that is sent by the access terminal by using the IP address and the port number of the communication device that are used to receive media, where both the first media and the second media are encoded by adopting the media format included in the second media attribute parameter.

Further, the application program stored by the memory 1930 further includes an instruction that can be used to enable the processor 1920 to execute the following processes:
invoking a WebRTC signaling message protocol stack;
performing encapsulation processing on the second media attribute parameter by using the signaling message protocol stack, to generate a call response; and
sending the call response to the communication device, where the call response includes the second media attribute parameter.

Therefore, by applying the apparatus for transmitting a media stream provided in the embodiment of the present invention, an access terminal receives, through a real-time collaboration channel established to the apparatus, a real-time collaboration message that is sent by the apparatus, initiates, by using the apparatus, media negotiation with a communication device according to the real-time collaboration message, and transmits a media stream mutually with the communication device according to a media attribute parameter determined through the media negotiation. Because of the technical characteristics that the access terminal exchanges the media attribute parameter with the communication device through the apparatus, to complete the media negotiation between the access terminal and the communication device, and the access terminal transmits the media stream to the communication device, the access terminal and the communication device can directly transmit the media stream to each other, and no longer perform transmission by using the NC, thereby avoiding the problems in the prior art that the delay of the media stream is obvious and communication quality is reduced because the NC needs to perform conversion and transmission on media data, and bandwidth occupancy between a TC/PC and the NC is increased and bandwidth is wasted because a media stream needs to be transferred back and forth between the TC/PC and the NC through a VDI channel. Therefore, the delay of the media stream is reduced, and the bandwidth is saved.

### Embodiment 13

Correspondingly, Embodiment 13 of the present invention further provides a system for transmitting a media stream. As shown in FIG. 20, the system includes the apparatuses for transmitting a media stream provided in Embodiment 5 of the present invention and Embodiment 6 of the present invention;
or, the system includes the apparatuses for transmitting a media stream provided in Embodiment 9 of the present invention and Embodiment 10 of the present invention.

Further, the system further includes: a WebRTC server.

Further, the system further includes: an application server, where the application server includes a web interface module, and a resource pool; and the resource pool includes a desktop scheduling center and a WebRTC media control entity.

As shown in FIG. 20, by using both of an access terminal and a communication device being a desktop cloud terminal as an example, both of the access terminal and the communication device access a cloud server through a desktop scheduling center in a network interface resource pool. According to allocation of the cloud server, a WebSocket server is connected to corresponding network computer 1 to network computer N, to transfer a real-time collaboration message, and network computer 1 to network computer N transfer the message through the WebRTC server.

Therefore, by applying the system for transmitting a media stream provided in the embodiment of the present invention, an access terminal receives, through a real-time collaboration channel established to a network computer, a real-time collaboration message that is sent by the network computer, initiates, through the network computer, media negotiation with a communication device according to the real-time collaboration message, and transmits a media stream mutually with the communication device according to a media attribute parameter determined through the media negotiation. Because of the technical characteristics that the access terminal exchanges the media attribute parameter with the communication device through the network computer, to complete the media negotiation between the access terminal and the communication device, and the access terminal transmits the media stream to the communication device, the access terminal and the communication device can directly transmit the media stream to each other, and no longer perform transmission by using the NC, thereby avoiding the problems in the prior art that the delay of the media stream is obvious and communication quality is reduced because the NC needs to perform conversion and transmission on media data, and bandwidth occupancy between a TC/PC and the NC is increased and bandwidth is wasted because a media stream needs to be transferred back and forth between the TC/PC and the NC through a VDI channel. Therefore, the delay of the media stream is reduced, and the bandwidth is saved.

### Embodiment 14

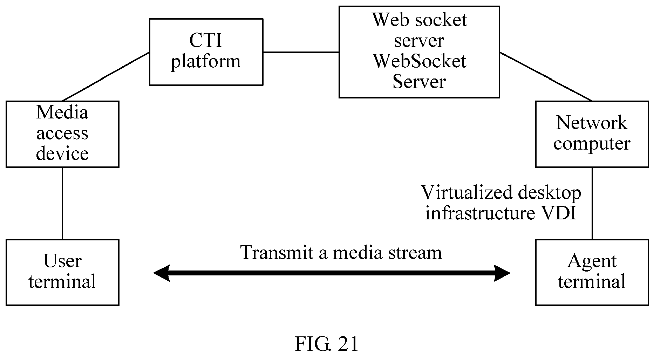

Correspondingly, Embodiment 14 of the present invention further provides a system for transmitting a media stream. As shown in FIG. 21, the system includes the apparatuses for transmitting a media stream provided in Embodiment 7 of the present invention and Embodiment 8 of the present invention;
or, the system includes the apparatuses for transmitting a media stream provided in Embodiment 11 of the present invention and Embodiment 12 of the present invention.

Further, the system further includes: a CTI platform.

Further, the system further includes: a WebRTC server.

In the embodiment of the present invention, an access terminal is specifically an agent terminal, and a communication device is specifically an access media device.

Therefore, by applying the system for transmitting a media stream provided in the embodiment of the present invention, an access terminal receives, through a real-time collaboration channel established to a network computer, a real-time collaboration message that is sent by the network computer, initiates, through the network computer, media negotiation with a communication device according to the real-time collaboration message, and transmits a media stream mutually with the communication device according to a media attribute parameter determined through the media negotiation. Because of the technical characteristics that the access terminal exchanges the media attribute parameter with the communication device through the network computer, to complete the media negotiation between the access terminal and the communication device, and the access terminal transmits the media stream to the communication device, the access terminal and the communication device can directly transmit the media stream to each other, and no longer perform transmission by using the NC, thereby avoiding the problems in the prior art that the delay of the media stream is obvious and communication quality is reduced because the NC needs to perform conversion and transmission on media data, and bandwidth occupancy between a TC/PC and the NC is increased and bandwidth is wasted because a media stream needs to be transferred back and forth between the TC/PC and the NC through a VDI channel. Therefore, the delay of the media stream is reduced, and the bandwidth is saved. A person skilled in the art may be further aware that, in combination with the examples described in the embodiments disclosed in this specification, units and algorithm steps may be implemented by electronic hardware, computer software, or a combination thereof. To clearly describe the interchangeability between the hardware and the software, the foregoing has generally described compositions and steps of each example according to functions. Whether the functions are performed by hardware or software depends on particular applications and design constraint conditions of the technical solutions. A person skilled in the art may use different methods to implement the described functions for each particular application, but it should not be considered that the implementation goes beyond the scope of the present invention.

In combination with the embodiments disclosed in this specification, method or algorithm steps may be implemented by hardware, a software module executed by a processor, or a combination thereof. The software module may reside in a random access memory (RAM), a memory, a read-only memory (ROM), an electrically programmable ROM, an electrically erasable programmable ROM, a register, a hard disk, a removable disk, a CD-ROM, or any other form of storage medium known in the art.

The foregoing specific embodiments clarify the objective, technical solutions, and benefits of the present invention in detail. It should be understood that the foregoing descriptions are merely specific embodiments of the present invention, but are not intended to limit the protection scope of the present invention, which is defined by the claims.

## Claims

1. A method for transmitting a media stream, wherein the method comprises:
establishing (110), by an access terminal, a real-time collaboration channel between the access terminal and a network computer;
receiving, by the access terminal, an operation instruction from a user application interface, said operation instruction being arranged to instruct an initiation of a call to a communication device;
sending (120), by the access terminal to the network computer, the operation instruction through a first virtualized desktop infrastructure, VDI, channel established between the access terminal and the network computer;
receiving (130), by the access terminal through the real-time collaboration channel, a real-time collaboration message from the network computer, wherein the real-time collaboration message is arranged to instruct the access terminal to initiate a media negotiation with the communication device to be called;
performing (140), by the access terminal through the network computer, the media negotiation with the communication device through the real-time collaboration channel to determine a media attribute parameter; and
transmitting (150), by the access terminal, the media stream to the communication device according to the media attribute parameter.

2. The method for transmitting a media stream according to claim 1, wherein the establishing, by the access terminal, the real-time collaboration channel comprises:
establishing, by the access terminal, a WebSocket channel between the access terminal and the network computer through a web socket WebSocket server; or,
establishing, by the access terminal, a second VDI channel between the access terminal and the network computer; or,
establishing, by the access terminal, a point-to-point data channel between a browser in the access terminal and a browser in the network computer by using a data channel mechanism in a browser web real-time communication WebRTC application of the access terminal.

3. The method for transmitting a media stream according to claim 1 or 2, wherein the performing, by the access terminal through the network computer, the media negotiation comprises:
obtaining, by the access terminal, a first media attribute parameter supported by the access terminal, wherein the first media attribute parameter comprises a media format supported by the access terminal, and an IP address and a port number that are used to receive media;
sending, by the access terminal, the first media attribute parameter to the network computer through the real-time collaboration channel, so as to enable the network computer to send a connection request message carrying the first media attribute parameter to the communication device to be called; and
receiving, by the access terminal from the network computer through the real-time collaboration channel, a second media attribute parameter, wherein the second media attribute parameter comprises an IP address and a port number of the communication device that are used to receive media, and a media format that is supported by both the access terminal and the communication device and is determined by the communication device according to the first media attribute parameter; and
the transmitting, by the access terminal, the media stream to the communication device according to the media attribute parameter specifically comprises:
sending, by the access terminal, first media to the communication device by using the IP address and the port number of the communication device that are used to receive media, and receiving second media that is sent by the communication device by using the IP address and the port number of the access terminal that are used to receive media, wherein both the first media and the second media are encoded by adopting the media format comprised in the second media attribute parameter.

4. The method for transmitting a media stream according to claim 3, wherein the obtaining, by the access terminal, the first media attribute parameter supported by the access terminal specifically comprises:
invoking, by the access terminal, a new peer connection interface function in a browser application programming interface API of the access terminal; and
generating, by the access terminal, a peer connection interface by using the new peer connection interface function, and obtaining, by using a create offer function comprised in the peer connection interface, the first media attribute parameter supported by the access terminal.

5. A method for transmitting a media stream, wherein the method comprises:
establishing (410), by a network computer, a real-time collaboration channel between the network computer and an access terminal;
receiving (420), by the network computer from the access terminal through a first VDI channel established between the network computer and the access terminal, an operation instruction being arranged to instruct an initiation of a call to a communication device;
when the network computer determines that the operation instruction is an operation instruction used to instruct the initiation of the call, sending (430), by the network computer, a real-time collaboration message to the access terminal through the real-time collaboration channel, wherein the real-time collaboration message is arranged to instruct the access terminal to initiate a media negotiation with the communication device to be called; and
forwarding (440), by the network computer to the access terminal through the real-time collaboration channel, information for the media negotiation between the access terminal and the communication device, for determining a media attribute parameter for a media stream transmission between the access terminal and the communication device.

6. The method for transmitting a media stream according to claim 5, wherein the establishing, by the network computer, the real-time collaboration channel specifically comprises:
establishing, by the network computer, a WebSocket channel between the network computer and the access terminal through a web socket WebSocket server; or,
establishing, by the network computer, a second VDI channel between the network computer and the access terminal; or,
establishing, by the network computer, a point-to-point data channel between a browser in the network computer and a browser in the access terminal by using a data channel mechanism in a browser web real-time communication WebRTC application of the network computer.

7. The method for transmitting a media stream according to claim 5 or 6, wherein the forwarding, by the network computer, information for the media negotiation between the access terminal and the communication device specifically comprises:
receiving, by the network computer from the access terminal through the real-time collaboration channel, a first media attribute parameter that is supported by the access terminal, wherein the first media attribute parameter comprises a media format supported by the access terminal, and an IP address and a port number that are used to receive media;
sending, by the network computer, a connection request message to the communication device according to the operation instruction, wherein the connection request message comprises the first media attribute parameter;
receiving, by the network computer from the communication device, a connect reply message, wherein the connect reply message comprises a second media attribute parameter supported by the communication device, and the second media attribute parameter comprises an IP address and a port number of the communication device that are used to receive media, and a media format that is supported by both the access terminal and the communication device and is determined by the communication device according to the first media attribute parameter; and
sending, by the network computer, the second media attribute parameter to the access terminal through the real-time collaboration channel for sending from the access terminal first media to the communication device by using the IP address and the port number of the communication device that are used to receive media, and for receiving by the access terminal second media from the communication device by using an IP address and a port number of the access terminal that are used to receive media, wherein both the first media and the second media are encoded by adopting the media format comprised in the second media attribute parameter.

8. The method for transmitting a media stream according to claim 7, wherein before the sending, by the network computer, the connection request message to the communication device according to the operation instruction, the method further comprises:
invoking, by the network computer, a WebRTC signaling message protocol stack; and
performing, by the network computer, encapsulation processing on the first media attribute parameter by using the signaling message protocol stack, to generate the connection request message, wherein the connection request message comprises the first media attribute parameter.

9. A method for transmitting a media stream, wherein the method comprises:
establishing (510), by an access terminal, a real-time collaboration channel between the access terminal and a network computer;
receiving (520), by the access terminal from the network computer through the real-time collaboration channel, a real-time collaboration message, wherein the real-time collaboration message comprises a first media attribute parameter that is supported by a communication device and that is obtained by parsing a call request of the communication device, and wherein the real-time collaboration message is arranged to instruct the access terminal to perform a media negotiation with the communication device according to the first media attribute parameter supported by the communication device;
performing (530), by the access terminal through the network computer, the media negotiation with the communication device through the real-time collaboration channel to determine a media attribute parameter for transmitting a media stream; and
transmitting (540), by the access terminal, the media stream to the communication device according to the media attribute parameter.

10. The method for transmitting a media stream according to claim 9, wherein the establishing, by the access terminal, the real-time collaboration channel comprises:
establishing, by the access terminal, a WebSocket channel between the access terminal and the network computer through a web socket WebSocket server; or,
establishing, by the access terminal, a second VDI channel between the access terminal and the network computer; or,
establishing, by the access terminal, a point-to-point data channel between a browser in the access terminal and a browser in the network computer by using a data channel mechanism in a browser web real-time communication WebRTC application of the access terminal.

11. The method for transmitting a media stream according to claim 9 or 10, wherein the first media attribute parameter comprises a media format supported by the communication device, and an IP address and a port number that are used to receive media;
the performing, by the access terminal through the network computer, the media negotiation comprises:
determining, by the access terminal according to the first media attribute parameter, a second media attribute parameter supported by the access terminal, wherein the second media attribute parameter comprises an IP address and a port number of the access terminal that are used to receive media, and a media format that is supported by both the access terminal and the communication device and is determined by the access terminal according to the first media attribute parameter; and
sending, by the access terminal, the second media attribute parameter to the network computer through the real-time collaboration channel, so as to enable the network computer to forward the second media attribute parameter to the communication device; and
the transmitting, by the access terminal, the media stream to the communication device according to the media attribute parameter specifically comprises:
sending, by the access terminal, first media to the communication device by using the IP address and the port number of the communication device that are used to receive media, and receiving second media that is sent by the communication device by using the IP address and the port number of the access terminal that are used to receive media, wherein both the first media and the second media are encoded by adopting the media format comprised in the second media attribute parameter.

12. The method for transmitting a media stream according to claim 11, wherein the determining, by the access terminal, the second media attribute parameter according to the first media attribute parameter specifically comprises:
invoking, by the access terminal, a new peer connection interface function in a browser application programming interface API of the access terminal; and
generating, by the access terminal, a peer connection interface by using the new peer connection interface function, and obtaining the second media attribute parameter by using a create answer function comprised in the peer connection interface.

13. A method for transmitting a media stream, wherein the method comprises:
establishing (610), by an network computer, a real-time collaboration channel between the network computer and an access terminal;
receiving (620), by the network computer from a communication device, a call request for calling a user corresponding to the access terminal;
obtaining, by the network computer, by parsing the call request a first media attribute parameter, which is supported by the communication device;
sending (630), by the network computer according to the call request, a real-time collaboration message to the access terminal through the real-time collaboration channel, wherein the real-time collaboration message comprises the first media attribute parameter and is arranged for instructing the access terminal to perform a media negotiation with the communication device according to the first media attribute parameter,; and
forwarding (640), by the network computer to the access terminal through the real-time collaboration channel, information for performing media negotiation between the access terminal and the communication device, for determining, through the media negotiation, a media attribute parameter for transmitting a media stream between the access terminal and the communication device.

14. The method for transmitting a media stream according to claim 13, wherein the establishing, by the network computer, the real-time collaboration channel comprises:
establishing, by the network computer, a WebSocket channel between the network computer and the access terminal through a web socket WebSocket server; or,
establishing, by the network computer, a second VDI channel between the network computer and the access terminal; or,
establishing, by the network computer, a point-to-point data channel between a browser in the network computer and a browser in the access terminal by using a data channel mechanism in a browser web real-time communication WebRTC application of the network computer.

15. The method for transmitting a media stream according to claim 13 or 14, wherein the first media attribute parameter comprises a media format supported by the communication device, and an IP address and a port number that are used to receive media; and
the forwarding, by the network computer, the information for performing the media negotiation between the access terminal and the communication device comprises:
receiving, by the network computer from the access terminal through the real-time collaboration channel, a second media attribute parameter, wherein the second media attribute parameter comprises an IP address and a port number of the access terminal that are used to receive media, and a media format that is supported by both the access terminal and the communication device and is determined by the access terminal according to the first media attribute parameter; and
forwarding, by the network computer, the second media attribute parameter to the communication device.

16. The method for transmitting a media stream according to claim 15, before the forwarding, by the network computer, the second media attribute parameter to the communication device, further comprising:
invoking, by the network computer, a WebRTC signaling message protocol stack;
performing, by the network computer, encapsulation processing on the second media attribute parameter by using the signaling message protocol stack, to generate a call response; and
sending, by the network computer, the call response to the communication device, wherein the call response comprises the second media attribute parameter.

17. An apparatus for transmitting a media stream, wherein the apparatus comprises:
a collaboration channel establishing unit (810), configured to establish a real-time collaboration channel between the apparatus and a network computer;
a sending unit (820), configured to send, to the network computer through a first virtualized desktop infrastructure, VDI, channel, established between the apparatus and the network computer, an operation instruction received by the apparatus from a user application interface and being arranged to instruct an initiation of a call to a communication device;
a receiving unit (830), configured to receive from the network computer through the real-time collaboration channel a real-time collaboration message arranged to instruct the apparatus to initiate a media negotiation with the communication device to be called;
a negotiation determining unit (840), configured to perform the media negotiation with the communication device through the real-time collaboration channel to determine a media attribute parameter; and
the media transmitting unit (850), configured to transmit the media stream to the communication device according to the media attribute parameter.

18. The apparatus for transmitting a media stream according to claim 17, wherein the collaboration channel establishing unit is specifically configured to:
establish a WebSocket channel between the apparatus and the network computer through a web socket WebSocket server; or,
establish a second VDI channel between the apparatus and the network computer; or,
establish a point-to-point data channel between a browser in the apparatus and a browser in the network computer by using a data channel mechanism in a browser web real-time communication WebRTC application of the apparatus.

19. An apparatus for transmitting a media stream, wherein the apparatus comprises:
a collaboration channel establishing unit (1010), configured to establish a real-time collaboration channel between the apparatus and an access terminal;
a receiving unit (1020), configured to receive from the access terminal through a first VDI channel established between the apparatus and the access terminal an operation instruction being arranged to instruct an initiation of a call to a communication device; and
a sending unit (1030), configured to: when it is determined that the operation instruction is an operation instruction used to instruct the initiation of the call, send a real-time collaboration message to the access terminal through the real-time collaboration channel, wherein the real-time collaboration message is arranged to instruct the access terminal to initiate a media negotiation with the communication device to be called, wherein
the sending unit is further configured to forward to the access terminal through the real-time collaboration channel information for the media negotiation between the access terminal and the communication device and for determining a media attribute parameter for a media stream transmission between the access terminal and the communication device.

20. The apparatus for transmitting a media stream according to claim 19, wherein the collaboration channel establishing unit is specifically configured to:
establish a WebSocket channel between the apparatus and the access terminal through a web socket WebSocket server; or,
establish a second VDI channel between the apparatus and the access terminal; or,
establish a point-to-point data channel between a browser in the apparatus and a browser in the access terminal by using a data channel mechanism in a browser web real-time communication WebRTC application of the apparatus.

21. An apparatus for transmitting a media stream, wherein the apparatus comprises:
a collaboration channel establishing unit (1210), configured to establish a real-time collaboration channel between the apparatus and a network computer;
a receiving unit (1220), configured to receive from the network computer through the real-time collaboration channel, a real-time collaboration message, wherein the real-time collaboration message comprises a first media attribute parameter that is supported by a communication device and is obtained by parsing a call request of the communication device, and wherein the real-time collaboration message is arranged to instruct the apparatus to perform a media negotiation with the communication device according to the first media attribute parameter supported by the communication device;
a negotiation determining unit (1230), configured to perform the media negotiation with the communication device through the real-time collaboration channel to determine a media attribute parameter for transmitting a media stream; and
the media transmitting unit (1240), configured to transmit the media stream to the communication device according to the media attribute parameter.

22. The apparatus for transmitting a media stream according to claim 21, wherein the collaboration channel establishing unit is specifically configured to:
establish a WebSocket channel between the apparatus and the network computer through a web socket WebSocket server; or,
establish a second VDI channel between the apparatus and the network computer; or,
establish a point-to-point data channel between a browser in the apparatus and a browser in the network computer by using a data channel mechanism in a browser web real-time communication WebRTC application of the apparatus.

23. An apparatus for transmitting a media stream, wherein the apparatus comprises:
a collaboration channel establishing unit (1410), configured to establish a real-time collaboration channel between the apparatus and an access terminal; and
a receiving unit (1420), configured to receive from a communication device a call request for calling a user corresponding to the access terminal, and configured to transmit the call request to a sending unit;
wherein the apparatus is configured to obtain by parsing the call request a first media attribute parameter, which is supported by the communication device; and
wherein the apparatus further comprises:
the sending unit (1430), configured to send, according to the call request, a real-time collaboration message to the access terminal through the real-time collaboration channel, wherein the real-time collaboration message comprises the first media attribute parameter and is arranged for instructing the access terminal to perform media negotiation with the communication device according to the first media attribute parameter; and
the sending unit is further configured to forward to the access terminal through the real-time collaboration channel information for performing a media negotiation between the access terminal and the communication device for determining, through the media negotiation, a media attribute parameter for transmitting a media stream between the access terminal and the communication device.

24. The apparatus for transmitting a media stream according to claim 23, wherein the collaboration channel establishing unit is specifically configured to:
establish a WebSocket channel between the apparatus and the access terminal through a web socket WebSocket server; or,
establish a second VDI channel between the apparatus and the access terminal; or
establish a point-to-point data channel between a browser in the apparatus and a browser in the access terminal by using a data channel mechanism in a browser web real-time communication WebRTC application of the apparatus.

## Patentansprüche

1. Verfahren zum Übertragen eines Medienstroms, wobei das Verfahren Folgendes umfasst:
Aufbauen (110) durch ein Zugangsendgerät eines Echtzeitzusammenarbeitskanals zwischen dem Zugangsendgerät und einem Netz-Computer;
Empfangen durch das Zugangsendgerät einer Betriebsanweisung von einer Anwenderanwendungsschnittstelle, wobei die Betriebsanweisung ausgelegt ist, eine Einleitung einer Verbindung zu einer Kommunikationsvorrichtung anzuweisen;
Senden (120) durch das Zugangsendgerät zu dem Netz-Computer der Betriebsanweisung über einen ersten Kanal einer virtualisierten Desktop-Infrastruktur, VDI-Kanal, der zwischen dem Zugangsendgerät und dem Netz-Computer aufgebaut ist;
Empfangen (130) durch das Zugangsendgerät über den Echtzeitzusammenarbeitskanal einer Echtzeitzusammenarbeitsnachricht von dem Netz-Computer, wobei die Echtzeitzusammenarbeitsnachricht ausgelegt ist, das Zugangsendgerät anzuweisen, eine Medienverhandlung mit der Kommunikationsvorrichtung, die gerufen werden soll, einzuleiten;
Ausführen (140) durch das Zugangsendgerät über den Netz-Computer der Medienverhandlung mit der Kommunikationsvorrichtung über den Echtzeitzusammenarbeitskanal, um einen Medienattributparameter zu bestimmen; und
Übertragen (150) durch das Zugangsendgerät des Medienstroms zu der Kommunikationsvorrichtung gemäß dem Medienattributparameter.

2. Verfahren zum Übertragen eines Medienstroms nach Anspruch 1, wobei das Aufbauen durch das Zugangsendgerät des Echtzeitzusammenarbeitskanals Folgendes umfasst:
Aufbauen durch das Zugangsendgerät eines WebSocket-Kanals zwischen dem Zugangsendgerät und dem Netz-Computer über einen Websocket-WebSocket-Server; oder
Aufbauen durch das Zugangsendgerät eines zweiten VDI-Kanals zwischen dem Zugangsendgerät und dem Netz-Computer; oder
Aufbauen durch das Zugangsendgerät eines Punkt-zu-Punkt-Datenkanals zwischen einem Browser in dem Zugangsendgerät und einem Browser in dem Netz-Computer durch Verwenden eines Datenkanalmechanismus in einer Browser-Web-Echtzeitkommunikations-Anwendung, Browser-WebRTC-Anwendung, des Zugangsendgeräts.

3. Verfahren zum Übertragen eines Medienstroms nach Anspruch 1 oder 2, wobei das Ausführen der Medienverhandlung durch das Zugangsendgerät über den Netz-Computer Folgendes umfasst:
Erhalten durch das Zugangsendgerät eines ersten Medienattributparameters, der durch das Zugangsendgerät unterstützt wird, wobei der erste Medienattributparameter ein Medienformat, das durch das Zugangsendgerät unterstützt wird, und eine IP-Adresse und eine Anschlussnummer, die verwendet werden, um Medien zu empfangen, umfasst;
Senden durch das Zugangsendgerät des ersten Medienattributparameters zu dem Netz-Computer über den Echtzeitzusammenarbeitskanal, um dem Netz-Computer zu ermöglichen, eine Verbindungsanforderungsnachricht, die den ersten Medienattributparameter führt, zu der Kommunikationsvorrichtung, die gerufen werden soll, zu senden; und
Empfangen durch das Zugangsendgerät von dem Netz-Computer über den Echtzeitzusammenarbeitskanal eines zweiten Medienattributparameters, wobei der zweite Medienattributparameter eine IP-Adresse und eine Anschlussnummer der Kommunikationsvorrichtung, die verwendet werden, um Medien zu empfangen, und ein Medienformat, das durch sowohl das Zugangsendgerät als auch die Kommunikationsvorrichtung unterstützt wird und durch die Kommunikationsvorrichtung gemäß dem ersten Medienattributparameter bestimmt wird, umfasst; und
wobei das Übertragen durch das Zugangsendgerät des Medienstroms zu der Kommunikationsvorrichtung gemäß dem Medienattributparameter insbesondere Folgendes umfasst:
Senden durch das Zugangsendgerät erster Medien zu der Kommunikationsvorrichtung durch Verwenden der IP-Adresse und der Anschlussnummer der Kommunikationsvorrichtung, die verwendet werden, um Medien zu empfangen, und Empfangen zweiter Medien, die durch die Kommunikationsvorrichtung durch Verwenden der IP-Adresse und der Anschlussnummer des Zugangsendgeräts, die verwendet werden, um Medien zu empfangen, gesendet werden, wobei sowohl die ersten Medien als auch die zweiten Medien durch Einsetzen des in dem zweiten Medienattributparameter enthaltenen Medienformat codiert sind.

4. Verfahren zum Übertragen eines Medienstroms nach Anspruch 3, wobei das Erhalten durch das Zugangsendgerät des ersten Medienattributparameters, der durch das Zugangsendgerät unterstützt wird, insbesondere Folgendes umfasst:
Aufrufen durch das Zugangsendgerät einer Funktion für eine neue Partnerverbindungsschnittstelle in einer Browser-Anwendungsprogrammierschnittstelle, Browser-API, des Zugangsendgeräts; und
Erzeugen durch das Zugangsendgerät einer Partnerverbindungsschnittstelle durch Verwenden der Funktion für eine neue Partnerverbindungsschnittstelle und Erhalten durch Verwenden einer Angebotserzeugungs-Funktion, die in der Partnerverbindungsschnittstelle enthalten ist, des ersten Medienattributparameters, der durch das Zugangsendgerät unterstützt wird.

5. Verfahren zum Übertragen eines Medienstroms, wobei das Verfahren Folgendes umfasst:
Aufbauen (410) durch einen Netz-Computer eines Echtzeitzusammenarbeitskanals zwischen dem Netz-Computer und einem Zugangsendgerät;
Empfangen (420) durch den Netz-Computer von dem Zugangsendgerät über einen ersten VDI-Kanal, der zwischen dem Netz-Computer und dem Zugangsendgerät aufgebaut ist, einer Betriebsanweisung, die ausgelegt ist, eine Einleitung einer Verbindung zu einer Kommunikationsvorrichtung anzuweisen;
wenn der Netz-Computer bestimmt, dass die Betriebsanweisung eine Betriebsanweisung ist, die verwendet wird, um die Einleitung der Verbindung anzuweisen, Senden (430) durch den Netz-Computer einer Echtzeitzusammenarbeitsnachricht zu dem Zugangsendgerät über den Echtzeitzusammenarbeitskanal, wobei die Echtzeitzusammenarbeitsnachricht ausgelegt ist, das Zugangsendgerät anzuweisen, eine Medienverhandlung mit der Kommunikationsvorrichtung, die gerufen werden soll, einzuleiten; und
Weiterleiten (440) durch den Netz-Computer zu dem Zugangsendgerät über den Echtzeitzusammenarbeitskanal von Informationen für die Medienverhandlung zwischen dem Zugangsendgerät und der Kommunikationsvorrichtung zum Bestimmen eines Medienattributparameters für eine Medienstromübertragung zwischen dem Zugangsendgerät und der Kommunikationsvorrichtung.

6. Verfahren zum Übertragen eines Medienstroms nach Anspruch 5, wobei das Aufbauen durch den Netz-Computer des Echtzeitzusammenarbeitskanals insbesondere Folgendes umfasst:
Aufbauen durch den Netz-Computer eines WebSocket-Kanals zwischen dem Netz-Computer und dem Zugangsendgerät über einen Websocket-WebSocket-Server; oder Aufbauen durch den Netz-Computer eines zweiten VDI-Kanals zwischen dem Netz-Computer und dem Zugangsendgerät; oder
Aufbauen durch den Netz-Computer eines Punkt-zu-Punkt-Datenkanals zwischen einem Browser in dem Netz-Computer und einem Browser in dem Zugangsendgerät durch Verwenden eines Datenkanalmechanismus in einer Browser-Web-Echtzeitkommunikations-Anwendung, Browser-WebRTC-Anwendung, des Netz-Computers.

7. Verfahren zum Übertragen eines Medienstroms nach Anspruch 5 oder 6, wobei das Weiterleiten durch den Netz-Computer von Informationen für die Medienverhandlung zwischen dem Zugangsendgerät und der Kommunikationsvorrichtung insbesondere Folgendes umfasst:
Empfangen durch den Netz-Computer von dem Zugangsendgerät über den Echtzeitzusammenarbeitskanal eines ersten Medienattributparameters, der durch das Zugangsendgerät unterstützt wird, wobei der erste Medienattributparameter ein Medienformat, das durch das Zugangsendgerät unterstützt wird, und eine IP-Adresse und eine Anschlussnummer, die verwendet werden, um Medien zu empfangen, umfasst;
Senden durch den Netz-Computer einer Verbindungsanforderungsnachricht zu der Kommunikationsvorrichtung gemäß der Betriebsanweisung, wobei die Verbindungsanforderungsnachricht den ersten Medienattributparameter umfasst;
Empfangen durch den Netz-Computer von der Kommunikationsvorrichtung einer Verbindungsantwortnachricht, wobei die Verbindungsantwortnachricht einen zweiten Medienattributparameter, der durch die Kommunikationsvorrichtung unterstützt wird, umfasst und der zweite Medienattributparameter eine IP-Adresse und eine Anschlussnummer der Kommunikationsvorrichtung, die verwendet werden, um Medien zu empfangen, und ein Medienformat, das sowohl durch das Zugangsendgerät als auch die Kommunikationsvorrichtung unterstützt wird und durch die Kommunikationsvorrichtung gemäß dem ersten Medienattributparameter bestimmt wird, umfasst; und
Senden durch den Netz-Computer des zweiten Medienattributparameters zu dem Zugangsendgerät über den Echtzeitzusammenarbeitskanal zum Senden von dem Zugangsendgerät erster Medien zu der Kommunikationsvorrichtung durch Verwenden der IP-Adresse und der Anschlussnummer der Kommunikationsvorrichtung, die verwendet werden, um Medien zu empfangen, und zum Empfangen durch das Zugangsendgerät zweiter Medien von der Kommunikationsvorrichtung durch Verwenden einer IP-Adresse und einer Anschlussnummer des Zugangsendgeräts, die verwendet werden, um Medien zu empfangen, wobei sowohl die ersten Medien als auch die zweiten Medien durch Einsetzen des Medienformats, das in dem zweiten Medienattributparameter enthalten ist, codiert sind.

8. Verfahren zum Übertragen eines Medienstroms nach Anspruch 7, wobei das Verfahren vor dem Senden durch den Netz-Computer der Verbindungsanforderungsnachricht zu der Kommunikationsvorrichtung gemäß der Betriebsanweisung ferner Folgendes umfasst:
Aufrufen durch den Netz-Computer eines WebRTC-Signalisierungsnachricht-Protokollstack; und
Ausführen durch den Netz-Computer von Einkapselungsverarbeitung auf dem ersten Medienattributparameter durch Verwenden des Signalisierungsnachricht-Protokollstack, um die Verbindungsanforderungsnachricht zu erzeugen, wobei die Verbindungsanforderungsnachricht den ersten Medienattributparameter umfasst.

9. Verfahren zum Übertragen eines Medienstroms, wobei das Verfahren Folgendes umfasst:
Aufbauen (510) durch ein Zugangsendgerät eines Echtzeitzusammenarbeitskanals zwischen dem Zugangsendgerät und einem Netz-Computer;
Empfangen (520) durch das Zugangsendgerät von dem Netz-Computer über den Echtzeitzusammenarbeitskanal einer Echtzeitzusammenarbeitsnachricht, wobei die Echtzeitzusammenarbeitsnachricht einen ersten Medienattributparameter, die durch eine Kommunikationsvorrichtung unterstützt wird und der durch Analysieren einer Verbindungsanforderung der Kommunikationsvorrichtung erhalten wird, umfasst, und wobei die Echtzeitzusammenarbeitsnachricht ausgelegt ist, das Zugangsendgerät anzuweisen, eine Medienverhandlung mit der Kommunikationsvorrichtung gemäß dem ersten Medienattributparameter, der durch die Kommunikationsvorrichtung unterstützt wird, auszuführen;
Ausführen (530) durch das Zugangsendgerät über den Netz-Computer der Medienverhandlung mit der Kommunikationsvorrichtung über den Echtzeitzusammenarbeitskanal, um einen Medienattributparameter zum Übertragen eines Medienstroms zu bestimmen; und
Übertragen (540) durch das Zugangsendgerät des Medienstroms zu der Kommunikationsvorrichtung gemäß dem Medienattributparameter.

10. Verfahren zum Übertragen eines Medienstroms nach Anspruch 9, wobei das Aufbauen durch das Zugangsendgerät des Echtzeitzusammenarbeitskanals Folgendes umfasst:
Aufbauen durch das Zugangsendgerät eines WebSocket-Kanals zwischen dem Zugangsendgerät und dem Netz-Computer über einen Websocket-WebSocket-Server; oder
Aufbauen durch das Zugangsendgerät eines zweiten VDI-Kanals zwischen dem Zugangsendgerät und dem Netz-Computer; oder
Aufbauen durch das Zugangsendgerät eines Punkt-zu-Punkt-Datenkanals zwischen einem Browser in dem Zugangsendgerät und einem Browser in dem Netz-Computer durch Verwenden eines Datenkanalmechanismus in einer Browser-Web-Echtzeitkommunikations-Anwendung, Browser-WebRTC-Anwendung, des Zugangsendgeräts.

11. Verfahren zum Übertragen eines Medienstroms nach Anspruch 9 oder 10, wobei der erste Medienattributparameter ein Medienformat, das durch die Kommunikationsvorrichtung unterstützt wird, und eine IP-Adresse und eine Anschlussnummer, die verwendet werden, um Medien zu empfangen, umfasst; wobei das Ausführen durch das Zugangsendgerät über den Netz-Computer der Medienverhandlung Folgendes umfasst:
Bestimmen durch das Zugangsendgerät gemäß dem ersten Medienattributparameter eines zweiten Medienattributparameters, der durch das Zugangsendgerät unterstützt wird, wobei der zweite Medienattributparameter eine IP-Adresse und eine Anschlussnummer des Zugangsendgeräts, die verwendet werden, um Medien zu empfangen, und ein Medienformat, das durch sowohl das Zugangsendgerät als auch die Kommunikationsvorrichtung unterstützt wird und durch das Zugangsendgerät gemäß dem ersten Medienattributparameter bestimmt wird, umfasst; und
Senden durch das Zugangsendgerät des zweiten Medienattributparameters zu dem Netz-Computer über den Echtzeitzusammenarbeitskanal, um dem Netz-Computer zu ermöglichen, den zweiten Medienattributparameter zu der Kommunikationsvorrichtung weiterzuleiten; und
wobei das Übertragen durch das Zugangsendgerät des Medienstroms zu der Kommunikationsvorrichtung gemäß dem Medienattributparameter insbesondere Folgendes umfasst:
Senden durch das Zugangsendgerät erster Medien zu der Kommunikationsvorrichtung durch Verwenden der IP-Adresse und der Anschlussnummer der Kommunikationsvorrichtung, die verwendet werden, um Medien zu empfangen, und Empfangen zweiter Medien, die durch die Kommunikationsvorrichtung durch Verwenden der IP-Adresse und der Anschlussnummer des Zugangsendgeräts, die verwendet werden, um Medien zu empfangen, gesendet werden, wobei sowohl die ersten Medien als auch die zweiten Medien durch Einsetzen des in dem zweiten Medienattributparameter enthaltenen Medienformat codiert sind.

12. Verfahren zum Übertragen eines Medienstroms nach Anspruch 11, wobei das Bestimmen durch das Zugangsendgerät des zweiten Medienattributparameters gemäß dem ersten Medienattributparameter insbesondere Folgendes umfasst:
Aufrufen durch das Zugangsendgerät einer Funktion für eine neue Partnerverbindungsschnittstelle in einer Browser-Anwendungsprogrammierschnittstelle, Browser-API, des Zugangsendgeräts; und
Erzeugen durch das Zugangsendgerät einer Partnerverbindungsschnittstelle durch Verwenden der Funktion für eine neue Partnerverbindungsschnittstelle und Erhalten des zweiten Medienattributparameters durch Verwenden einer Antworterzeugungs-Funktion, die in der Partnerverbindungsschnittstelle enthalten ist.

13. Verfahren zum Übertragen eines Medienstroms, wobei das Verfahren Folgendes umfasst:
Aufbauen (610) durch einen Netz-Computer eines Echtzeitzusammenarbeitskanals zwischen dem Netz-Computer und einem Zugangsendgerät;
Empfangen (620) durch den Netz-Computer von einer Kommunikationsvorrichtung einer Verbindungsanforderung zum Rufen eines Anwenders, der dem Zugangsendgerät entspricht;
Erhalten durch den Netz-Computer durch Analysieren der Verbindungsanforderung eines ersten Medienattributparameters, der durch die Kommunikationsvorrichtung unterstützt wird;
Senden (630) durch den Netz-Computer gemäß der Verbindungsanforderung einer Echtzeitzusammenarbeitsnachricht zu dem Zugangsendgerät über den Echtzeitzusammenarbeitskanal, wobei die Echtzeitzusammenarbeitsnachricht den ersten Medienattributparameter umfasst und zum Anweisen des Zugangsendgeräts, eine Medienverhandlung mit der Kommunikationsvorrichtung gemäß dem ersten Medienattributparameter auszuführen, ausgelegt ist; und
Weiterleiten (640) durch den Netz-Computer zu dem Zugangsendgerät über den Echtzeitzusammenarbeitskanal von Informationen zum Ausführen der Medienverhandlung zwischen dem Zugangsendgerät und der Kommunikationsvorrichtung zum Bestimmen durch die Medienverhandlung eines Medienattributparameters zum Übertragen eines Medienstroms zwischen dem Zugangsendgerät und der Kommunikationsvorrichtung.

14. Verfahren zum Übertragen eines Medienstroms nach Anspruch 13, wobei das Aufbauen durch den Netz-Computer des Echtzeitzusammenarbeitskanals Folgendes umfasst:
Aufbauen durch den Netz-Computer eines WebSocket-Kanals zwischen dem Netz-Computer und dem Zugangsendgerät über einen Websocket-WebSocket-Server; oder Aufbauen durch den Netz-Computer eines zweiten VDI-Kanals zwischen dem Netz-Computer und dem Zugangsendgerät; oder
Aufbauen durch den Netz-Computer eines Punkt-zu-Punkt-Datenkanals zwischen einem Browser in dem Netz-Computer und einem Browser in dem Zugangsendgerät durch Verwenden eines Datenkanalmechanismus in einer Browser-Web-Echtzeitkommunikations-Anwendung, Browser-WebRTC-Anwendung, des Netz-Computers.

15. Verfahren zum Übertragen eines Medienstroms nach Anspruch 13 oder 14, wobei der erste Medienattributparameter ein Medienformat, das durch die Kommunikationsvorrichtung unterstützt wird, und eine IP-Adresse und eine Anschlussnummer, die verwendet werden, um Medien zu empfangen, umfasst; und das Weiterleiten durch den Netz-Computer der Informationen zum Ausführen der Medienverhandlung zwischen dem Zugangsendgerät und der Kommunikationsvorrichtung Folgendes umfasst:
Empfangen durch den Netz-Computer von dem Zugangsendgerät über den Echtzeitzusammenarbeitskanal eines zweiten Medienattributparameters, wobei der zweite Medienattributparameter eine IP-Adresse und eine Anschlussnummer des Zugangsendgeräts, die verwendet werden um, Medien zu empfangen, und ein Medienformat, das durch sowohl das Zugangsendgerät als auch die Kommunikationsvorrichtung unterstützt wird und durch das Zugangsendgerät gemäß dem ersten Medienattributparameter bestimmt wird, umfasst; und
Weiterleiten durch den Netz-Computer des zweiten Medienattributparameters zu der Kommunikationsvorrichtung.

16. Verfahren zum Übertragen eines Medienstroms nach Anspruch 15, das vor dem Weiterleiten durch den Netz-Computer des zweiten Medienattributparameters zu der Kommunikationsvorrichtung ferner Folgendes umfasst:
Aufrufen durch den Netz-Computer eines WebRTC-Signalisierungsnachricht-Protokollstack;
Ausführen durch den Netz-Computer von Einkapselungsverarbeitung auf dem zweiten Medienattributparameter durch Verwenden des Signalisierungsnachricht-Protokollstack, um eine Verbindungsantwort zu erzeugen; und
Senden durch den Netz-Computer der Verbindungsantwort zu der Kommunikationsvorrichtung, wobei die Verbindungsantwort den zweiten Medienattributparameter umfasst.

17. Einrichtung zum Übertragen eines Medienstroms, wobei die Einrichtung Folgendes umfasst:
eine Zusammenarbeitskanalaufbaueinheit (810), die konfiguriert ist, einen Echtzeitzusammenarbeitskanal zwischen der Einrichtung und einem Netz-Computer aufzubauen;
eine Sendeeinheit (820), die konfiguriert ist, zu dem Netz-Computer über einen ersten Kanal einer virtualisierten Desktop-Infrastruktur, VDI-Kanal, der zwischen der Einrichtung und dem Netz-Computer aufgebaut ist, eine Betriebsanweisung zu senden, die durch die Einrichtung von einer Anwenderanwendungsschnittstelle empfangen wird und ausgelegt ist, eine Einleitung einer Verbindung zu einer Kommunikationsvorrichtung anzuweisen;
eine Empfangseinheit (830), die konfiguriert ist, von dem Netz-Computer über den Echtzeitzusammenarbeitskanal eine Echtzeitzusammenarbeitsnachricht zu empfangen, die ausgelegt ist, die Einrichtung anzuweisen, eine Medienverhandlung mit der Kommunikationsvorrichtung, die gerufen werden soll, einzuleiten;
eine Verhandlungsbestimmungseinheit (840), die konfiguriert ist, die Medienverhandlung mit der Kommunikationsvorrichtung über den Echtzeitzusammenarbeitskanal auszuführen, um einen Medienattributparameter zu bestimmen; und
die Medienübertragungseinheit (850), die konfiguriert ist, den Medienstrom zu der Kommunikationsvorrichtung gemäß dem Medienattributparameter zu übertragen.

18. Einrichtung zum Übertragen eines Medienstroms nach Anspruch 17, wobei die Zusammenarbeitskanalaufbaueinheit insbesondere konfiguriert ist:
einen WebSocket-Kanal zwischen der Einrichtung und dem Netz-Computer über einen Websocket-WebSocket-Server aufzubauen; oder
einen zweiten VDI-Kanal zwischen der Einrichtung und dem Netz-Computer aufzubauen; oder
einen Punkt-zu-Punkt-Datenkanal zwischen einem Browser in der Einrichtung und einem Browser in dem Netz-Computer durch Verwenden eines Datenkanalmechanismus in einer Browser-Web-Echtzeitkommunikations-Anwendung, Browser-WebRTC-Anwendung, der Einrichtung aufzubauen.

19. Einrichtung zum Übertragen eines Medienstroms, wobei die Einrichtung Folgendes umfasst:
eine Zusammenarbeitskanalaufbaueinheit (1010), die konfiguriert ist, einen Echtzeitzusammenarbeitskanal zwischen der Einrichtung und einem Zugangsendgerät aufzubauen;
eine Empfangseinheit (1020), die konfiguriert ist, von dem Zugangsendgerät über einen ersten VDI-Kanal, der zwischen der Einrichtung und dem Zugangsendgerät aufgebaut ist, eine Betriebsanweisung zu empfangen, die ausgelegt ist, eine Einleitung einer Verbindung zu einer Kommunikationsvorrichtung anzuweisen; und
eine Sendeeinheit (1030), die konfiguriert ist: wenn bestimmt wird, dass die Betriebsanweisung eine Betriebsanweisung ist, die verwendet wird, um die Einleitung einer Verbindung anzuweisen, eine Echtzeitzusammenarbeitsnachricht zu dem Zugangsendgerät über den Echtzeitzusammenarbeitskanal zu senden, wobei die Echtzeitzusammenarbeitsnachricht ausgelegt ist, das Zugangsendgerät anzuweisen, eine Medienverhandlung mit der Kommunikationsvorrichtung, die gerufen werden, soll, einzuleiten, wobei
die Sendeeinheit ferner konfiguriert ist, zu dem Zugangsendgerät über den Echtzeitzusammenarbeitskanal Informationen für die Medienverhandlung zwischen dem Zugangsendgerät und der Kommunikationsvorrichtung und zum Bestimmen eines Medienattributparameters für eine Medienstromübertragung zwischen dem Zugangsendgerät und der Kommunikationsvorrichtung weiterzuleiten.

20. Einrichtung zum Übertragen eines Medienstroms nach Anspruch 19, wobei die Zusammenarbeitskanalaufbaueinheit insbesondere konfiguriert ist:
einen WebSocket-Kanal zwischen der Einrichtung und dem Zugangsendgerät über einen Websocket-WebSocket-Server aufzubauen; oder
einen zweiten VDI-Kanal zwischen der Einrichtung und dem Zugangsendgerät aufzubauen; oder
einen Punkt-zu-Punkt-Datenkanal zwischen einem Browser in der Einrichtung und einem Browser in dem Zugangsendgerät durch Verwenden eines Datenkanalmechanismus in einer Browser-Web-Echtzeitkommunikations-Anwendung, Browser-WebRTC-Anwendung, der Einrichtung aufzubauen.

21. Einrichtung zum Übertragen eines Medienstroms, wobei die Einrichtung Folgendes umfasst:
eine Zusammenarbeitskanalaufbaueinheit (1210), die konfiguriert ist, einen Echtzeitzusammenarbeitskanal zwischen der Einrichtung und einem Netz-Computer aufzubauen;
eine Empfangseinheit (1220), die konfiguriert ist, von dem Netz-Computer über den Echtzeitzusammenarbeitskanal eine Echtzeitzusammenarbeitsnachricht zu empfangen, wobei die Echtzeitzusammenarbeitsnachricht einen ersten Medienattributparameter, die durch eine Kommunikationsvorrichtung unterstützt wird und durch Analysieren einer Verbindungsanforderung der Kommunikationsvorrichtung erhalten wird, umfasst, und wobei die Echtzeitzusammenarbeitsnachricht ausgelegt ist, die Einrichtung anzuweisen, eine Medienverhandlung mit der Kommunikationsvorrichtung gemäß dem ersten Medienattributparameter, der durch die Kommunikationsvorrichtung unterstützt wird, auszuführen;
eine Verhandlungsbestimmungseinheit (1230), die konfiguriert ist, die Medienverhandlung mit der Kommunikationsvorrichtung über den Echtzeitzusammenarbeitskanal auszuführen, um einen Medienattributparameter zum Übertragen eines Medienstroms zu bestimmen; und
die Medienübertragungseinheit (1240), die konfiguriert ist, den Medienstrom zu der Kommunikationsvorrichtung gemäß dem Medienattributparameter zu übertragen.

22. Einrichtung zum Übertragen eines Medienstroms nach Anspruch 21, wobei die Zusammenarbeitskanalaufbaueinheit insbesondere konfiguriert ist:
einen WebSocket-Kanal zwischen der Einrichtung und dem Netz-Computer über einen Websocket-WebSocket-Server aufzubauen; oder
einen zweiten VDI-Kanal zwischen der Einrichtung und dem Netz-Computer aufzubauen; oder
einen Punkt-zu-Punkt-Datenkanal zwischen einem Browser in der Einrichtung und einem Browser in dem Netz-Computer durch Verwenden eines Datenkanalmechanismus in einer Browser-Web-Echtzeitkommunikations-Anwendung, Browser-WebRTC-Anwendung, der Einrichtung aufzubauen.

23. Einrichtung zum Übertragen eines Medienstroms, wobei die Einrichtung Folgendes umfasst:
eine Zusammenarbeitskanalaufbaueinheit (1410), die konfiguriert ist, einen Echtzeitzusammenarbeitskanal zwischen der Einrichtung und einem Zugangsendgerät aufzubauen; und
eine Empfangseinheit (1420), die konfiguriert ist, von einer Kommunikationsvorrichtung eine Verbindungsanforderung zum Rufen eines Anwenders, der dem Zugangsendgerät entspricht, zu empfangen, und konfiguriert ist, die Verbindungsanforderung zu einer Sendeeinheit zu übertragen;
wobei die Einrichtung konfiguriert ist, durch Analysieren der Verbindungsanforderung einen ersten Medienattributparameter, der durch die Kommunikationsvorrichtung unterstützt wird, zu erhalten; und
wobei die Einrichtung ferner Folgendes umfasst:
eine Sendeeinheit (1430), die konfiguriert ist, gemäß der Verbindungsanforderung eine Echtzeitzusammenarbeitsnachricht zu dem Zugangsendgerät über den Echtzeitzusammenarbeitskanal zu senden, wobei die Echtzeitzusammenarbeitsnachricht den ersten Medienattributparameter umfasst und zum Anweisen des Zugangsendgeräts, Medienverhandlung mit der Kommunikationsvorrichtung gemäß dem ersten Medienattributparameter auszuführen, ausgelegt ist; und
wobei die Sendeeinheit ferner konfiguriert ist, zu dem Zugangsendgerät über den Echtzeitzusammenarbeitskanal Informationen zum Ausführen einer Medienverhandlung zwischen dem Zugangsendgerät und der Kommunikationsvorrichtung zum Bestimmen durch die Medienverhandlung eines Medienattributparameters zum Übertragen eines Medienstroms zwischen dem Zugangsendgerät und der Kommunikationsvorrichtung weiterzuleiten.

24. Einrichtung zum Übertragen eines Medienstroms nach Anspruch 23, wobei die Zusammenarbeitskanalaufbaueinheit insbesondere konfiguriert ist:
einen WebSocket-Kanal zwischen der Einrichtung und dem Zugangsendgerät über einen Websocket-WebSocket-Server aufzubauen; oder
einen zweiten VDI-Kanal zwischen der Einrichtung und dem Zugangsendgerät aufzubauen; oder
einen Punkt-zu-Punkt-Datenkanal zwischen einem Browser in der Einrichtung und einem Browser in dem Zugangsendgerät durch Verwenden eines Datenkanalmechanismus in einer Browser-Web-Echtzeitkommunikations-Anwendung, Browser-WebRTC-Anwendung, der Einrichtung aufzubauen.

## Revendications

1. Procédé pour émettre un flux multimédia, le procédé comprenant les étapes consistant à :
établir (110), par un terminal d'accès, un canal de collaboration en temps réel entre le terminal d'accès et un ordinateur en réseau ;
recevoir, par le terminal d'accès, une instruction d'opération provenant d'une interface d'application d'utilisateur, ladite instruction d'opération étant agencée pour ordonner le lancement d'un appel destiné à un dispositif de communication ;
envoyer (120), par le terminal d'accès à l'ordinateur en réseau, l'instruction d'opération sur un premier canal d'infrastructure de bureau virtualisée, VDI, établi entre le terminal d'accès et l'ordinateur en réseau ;
recevoir (130), par le terminal d'accès sur le canal de collaboration en temps réel, un message de collaboration en temps réel provenant de l'ordinateur en réseau, le message de collaboration en temps réel étant agencé pour ordonner au terminal d'accès de lancer une négociation multimédia avec le dispositif de communication à appeler ;
effectuer (140), par le terminal d'accès au moyen de l'ordinateur en réseau, la négociation multimédia avec le dispositif de communication sur le canal de collaboration en temps réel pour déterminer un paramètre d'attribut multimédia ; et
émettre (150), par le terminal d'accès, le flux multimédia à destination du dispositif de communication selon le paramètre d'attribut multimédia.

2. Procédé pour émettre un flux multimédia selon la revendication 1, dans lequel l'étape consistant à établir, par le terminal d'accès, le canal de collaboration en temps réel comprend les étapes consistant à :
établir, par le terminal d'accès, un canal WebSocket entre le terminal d'accès et l'ordinateur en réseau au moyen d'un serveur WebSocket de prises web ; ou
établir, par le terminal d'accès, un deuxième canal VDI entre le terminal d'accès et l'ordinateur en réseau ; ou
établir, par le terminal d'accès, un canal de données point à point entre un navigateur situé dans le terminal d'accès et un navigateur situé dans l'ordinateur en réseau à l'aide d'un mécanisme de canal de données d'une application de communication en temps réel web de navigateur, WebRTC, du terminal d'accès.

3. Procédé pour émettre un flux multimédia selon la revendication 1 ou 2, dans lequel l'étape consistant à effectuer, par le terminal d'accès au moyen de l'ordinateur en réseau, la négociation multimédia comprend les étapes consistant à :
obtenir, par le terminal d'accès, un premier paramètre d'attribut multimédia pris en charge par le terminal d'accès, le premier paramètre d'attribut multimédia contenant un format multimédia pris en charge par le terminal d'accès, et une adresse IP et un numéro de port qui sont utilisés pour recevoir des éléments multimédia ;
envoyer, par le terminal d'accès, le premier paramètre d'attribut multimédia à l'ordinateur en réseau sur le canal de collaboration en temps réel, afin de permettre à l'ordinateur en réseau d'envoyer un message de demande de connexion transportant le premier paramètre d'attribut multimédia au dispositif de communication à appeler ; et
recevoir, par le terminal d'accès en provenance de l'ordinateur en réseau, sur le canal de collaboration en temps réel, un deuxième paramètre d'attribut multimédia, le deuxième paramètre d'attribut multimédia contenant une adresse IP et un numéro de port du dispositif de communication qui sont utilisés pour recevoir des éléments multimédia, et un format multimédia qui est pris en charge à la fois par le terminal d'accès et par le dispositif de communication et qui est déterminé par le dispositif de communication d'après le premier paramètre d'attribut multimédia ; et
l'étape consistant à émettre, par le terminal d'accès, le flux multimédia à destination du dispositif de communication selon le paramètre d'attribut multimédia comprend spécifiquement les étapes consistant à :
envoyer, par le terminal d'accès, un premier élément multimédia au dispositif de communication au moyen de l'adresse IP et du numéro de port du dispositif de communication qui sont utilisés pour recevoir des éléments multimédia, et recevoir un deuxième élément multimédia qui est envoyé par le dispositif de communication au moyen de l'adresse IP et du numéro de port du terminal d'accès qui sont utilisés pour recevoir des éléments multimédia, le premier élément multimédia et le deuxième élément multimédia étant tous deux codés par adoption du format multimédia contenu dans le deuxième paramètre d'attribut multimédia.

4. Procédé pour émettre un flux multimédia selon la revendication 3, dans lequel l'étape consistant à obtenir, par le terminal d'accès, le premier paramètre d'attribut multimédia pris en charge par le terminal d'accès comprend spécifiquement les étapes consistant à :
appeler, par le terminal d'accès, une nouvelle fonction d'interface de connexion d'homologue dans une interface de programmation d'application, API, de navigateur du terminal d'accès ; et
générer, par le terminal d'accès, une interface de connexion d'homologue à l'aide de la nouvelle fonction d'interface de connexion d'homologue, puis obtenir, à l'aide d'une fonction de création d'offre contenue dans l'interface de connexion d'homologue, le premier paramètre d'attribut multimédia pris en charge par le terminal d'accès.

5. Procédé pour émettre un flux multimédia, le procédé comprenant les étapes consistant à :
établir (410), par un ordinateur en réseau, un canal de collaboration en temps réel entre l'ordinateur en réseau et un terminal d'accès ;
recevoir (420), par l'ordinateur en réseau en provenance du terminal d'accès, sur un premier canal VDI établi entre l'ordinateur en réseau et le terminal d'accès, une instruction d'opération qui est agencée pour ordonner le lancement d'un appel à un dispositif de communication ;
lorsque l'ordinateur en réseau détermine que l'instruction d'opération est une instruction d'opération servant à ordonner le lancement de l'appel, envoyer (430), par l'ordinateur en réseau, un message de collaboration en temps réel au terminal d'accès sur le canal de collaboration en temps réel, le message de collaboration en temps réel étant agencé pour ordonner au terminal d'accès de lancer une négociation multimédia avec le dispositif de communication à appeler ; et
acheminer (440), par l'ordinateur en réseau à destination du terminal d'accès sur le canal de collaboration en temps réel, des informations pour la négociation multimédia entre le terminal d'accès et le dispositif de communication, afin de déterminer un paramètre d'attribut multimédia pour une émission de flux multimédia entre le terminal d'accès et le dispositif de communication.

6. Procédé pour émettre un flux multimédia selon la revendication 5, dans lequel l'étape consistant à établir, par l'ordinateur en réseau, le canal de collaboration en temps réel comprend spécifiquement les étapes consistant à :
établir, par l'ordinateur en réseau, un canal WebSocket entre l'ordinateur en réseau et le terminal d'accès au moyen d'un serveur WebSocket de prises web ; ou
établir, par l'ordinateur en réseau, un deuxième canal VDI entre l'ordinateur en réseau et le terminal d'accès ; ou
établir, par l'ordinateur en réseau, un canal de données point à point entre un navigateur situé dans l'ordinateur en réseau et un navigateur situé dans le terminal d'accès à l'aide d'un mécanisme de canal de données d'une application de communication en temps réel web de navigateur, WebRTC, de l'ordinateur en réseau.

7. Procédé pour émettre un flux multimédia selon la revendication 5 ou 6, dans lequel l'étape consistant à acheminer, par l'ordinateur en réseau, des informations pour la négociation multimédia entre le terminal d'accès et le dispositif de communication comprend spécifiquement les étapes consistant à :
recevoir, par l'ordinateur en réseau en provenance du terminal d'accès, sur le canal de collaboration en temps réel, un premier paramètre d'attribut multimédia qui est pris en charge par le terminal d'accès, le premier paramètre d'attribut multimédia contenant un format multimédia pris en charge par le terminal d'accès, et une adresse IP et un numéro de port qui sont utilisés pour recevoir des éléments multimédia ;
envoyer, par l'ordinateur en réseau, un message de demande de connexion au dispositif de communication selon l'instruction d'opération, le message de demande de connexion contenant le premier paramètre d'attribut multimédia ;
recevoir, par l'ordinateur en réseau en provenance du dispositif de communication, un message de réponse de connexion, le message de réponse de connexion contenant un deuxième paramètre d'attribut multimédia pris en charge par le dispositif de communication, et le deuxième paramètre d'attribut multimédia contenant une adresse IP et un numéro de port du dispositif de communication qui sont utilisés pour recevoir des éléments multimédia, et un format multimédia qui est pris en charge à la fois par le terminal d'accès et par le dispositif de communication et qui est déterminé par le dispositif de communication d'après le premier paramètre d'attribut multimédia ; et
envoyer, par l'ordinateur en réseau, le deuxième paramètre d'attribut multimédia au terminal d'accès sur le canal de collaboration en temps réel pour envoyer depuis le terminal d'accès un premier élément multimédia au dispositif de communication au moyen de l'adresse IP et du numéro de port du dispositif de communication qui sont utilisés pour recevoir des éléments multimédia, et pour recevoir par le terminal d'accès un deuxième élément multimédia provenant du dispositif de communication au moyen d'une adresse IP et d'un numéro de port du terminal d'accès qui sont utilisés pour recevoir des éléments multimédia, le premier élément multimédia et le deuxième élément multimédia étant tous deux codés par adoption du format multimédia contenu dans le deuxième paramètre d'attribut multimédia.

8. Procédé pour émettre un flux multimédia selon la revendication 7, le procédé, avant l'étape consistant à envoyer, par l'ordinateur en réseau, le message de demande de connexion au dispositif de communication selon l'instruction d'opération, comprenant également les étapes consistant à :
appeler, par l'ordinateur en réseau, une pile de protocoles de message de signalisation WebRTC ; et
effectuer, par l'ordinateur en réseau, un traitement d'encapsulation sur le premier paramètre d'attribut multimédia au moyen de la pile de protocoles de message de signalisation, afin de générer un message de demande de connexion, le message de demande de connexion contenant le premier paramètre d'attribut multimédia.

9. Procédé pour émettre un flux multimédia, le procédé comprenant les étapes consistant à :
établir (510), par un terminal d'accès, un canal de collaboration en temps réel entre le terminal d'accès et un ordinateur en réseau ;
recevoir (520), par le terminal d'accès en provenance de l'ordinateur en réseau, sur le canal de collaboration en temps réel, un message de collaboration en temps réel, le message de collaboration en temps réel contenant un premier paramètre d'attribut multimédia qui est pris en charge par un dispositif de communication et qui est obtenu par une analyse d'une demande d'appel du dispositif de communication, et le message de collaboration en temps réel étant agencé pour ordonner au terminal d'accès d'effectuer une négociation multimédia avec le dispositif de communication selon le premier paramètre d'attribut multimédia pris en charge par le dispositif de communication ;
effectuer (530), par le terminal d'accès au moyen de l'ordinateur en réseau, la négociation multimédia avec le dispositif de communication sur le canal de collaboration en temps réel afin de déterminer un paramètre d'attribut multimédia pour l'émission d'un flux multimédia ; et
émettre (540), par le terminal d'accès, le flux multimédia à destination du dispositif de communication selon le paramètre d'attribut multimédia.

10. Procédé pour émettre un flux multimédia selon la revendication 9, dans lequel l'étape consistant à établir, par le terminal d'accès, le canal de collaboration en temps réel comprend les étapes consistant à :
établir, par le terminal d'accès, un canal WebSocket entre le terminal d'accès et l'ordinateur en réseau au moyen d'un serveur WebSocket de prises web ; ou
établir, par le terminal d'accès, un deuxième canal VDI entre le terminal d'accès et l'ordinateur en réseau ; ou
établir, par le terminal d'accès, un canal de données point à point entre un navigateur situé dans le terminal d'accès et un navigateur situé dans l'ordinateur en réseau à l'aide d'un mécanisme de canal de données d'une application de communication en temps réel web de navigateur, WebRTC, du terminal d'accès.

11. Procédé pour émettre un flux multimédia selon la revendication 9 ou 10, dans lequel le premier paramètre d'attribut multimédia contient un format multimédia pris en charge par le dispositif de communication, et une adresse IP et un numéro de port qui sont utilisés pour recevoir des éléments multimédia ;
l'étape consistant à effectuer, par le terminal d'accès au moyen de l'ordinateur en réseau, la négociation multimédia comprend les étapes consistant à :
déterminer, par le terminal d'accès selon le premier paramètre d'attribut multimédia, un deuxième paramètre d'attribut multimédia pris en charge par le terminal d'accès, le deuxième paramètre d'attribut multimédia contenant une adresse IP et un numéro de port du terminal d'accès qui sont utilisés pour recevoir des éléments multimédia, et un format multimédia qui est pris en charge à la fois par le terminal d'accès et par le dispositif de communication et qui est déterminé par le terminal d'accès d'après le premier paramètre d'attribut multimédia ; et
envoyer, par le terminal d'accès, le deuxième paramètre d'attribut multimédia à l'ordinateur en réseau sur le canal de collaboration en temps réel, afin de permettre à l'ordinateur en réseau d'acheminer le deuxième paramètre d'attribut multimédia à destination du dispositif de communication ; et
l'étape consistant à émettre, par le terminal d'accès, le flux multimédia à destination du dispositif de communication selon le paramètre d'attribut multimédia comprend spécifiquement les étapes consistant à :
envoyer, par le terminal d'accès, un premier élément multimédia au dispositif de communication au moyen de l'adresse IP et du numéro de port du dispositif de communication qui sont utilisés pour recevoir des éléments multimédia, et recevoir un deuxième élément multimédia qui est envoyé par le dispositif de communication au moyen de l'adresse IP et du numéro de port du terminal d'accès qui sont utilisés pour recevoir des éléments multimédia, le premier élément multimédia et le deuxième élément multimédia étant tous deux codés par adoption du format multimédia contenu dans le deuxième paramètre d'attribut multimédia.

12. Procédé pour émettre un flux multimédia selon la revendication 11, dans lequel l'étape consistant à déterminer, par le terminal d'accès, le deuxième paramètre d'attribut multimédia selon le premier paramètre d'attribut multimédia comprend spécifiquement les étapes consistant à :
appeler, par le terminal d'accès, une nouvelle fonction d'interface de connexion d'homologue dans une interface de programmation d'application, API, de navigateur du terminal d'accès ; et
générer, par le terminal d'accès, une interface de connexion d'homologue à l'aide de la nouvelle fonction d'interface de connexion d'homologue, puis obtenir le deuxième paramètre d'attribut multimédia à l'aide d'une fonction de création de réponse contenue dans l'interface de connexion d'homologue.

13. Procédé pour émettre un flux multimédia, le procédé comprenant les étapes consistant à :
établir (610), par un ordinateur en réseau, un canal de collaboration en temps réel entre l'ordinateur en réseau et un terminal d'accès ;
recevoir (620), par l'ordinateur en réseau en provenance d'un dispositif de communication, une demande d'appel pour appeler un utilisateur correspondant au terminal d'accès ;
obtenir, par l'ordinateur en réseau, par une analyse de la demande d'appel, un premier paramètre d'attribut multimédia qui est pris en charge par le dispositif de communication ;
envoyer (630), par l'ordinateur en réseau selon la demande d'appel, un message de collaboration en temps réel au terminal d'accès sur le canal de collaboration en temps réel, le message de collaboration en temps réel contenant le premier paramètre d'attribut multimédia et étant agencé pour ordonner au terminal d'accès d'effectuer une négociation multimédia avec le dispositif de communication selon le premier paramètre d'attribut multimédia ; et
acheminer (640), par l'ordinateur en réseau à destination du terminal d'accès sur le canal de collaboration en temps réel, des informations pour l'exécution de la négociation multimédia entre le terminal d'accès et le dispositif de communication, afin de déterminer, au moyen de la négociation multimédia, un paramètre d'attribut multimédia pour l'émission d'un flux multimédia entre le terminal d'accès et le dispositif de communication.

14. Procédé pour émettre un flux multimédia selon la revendication 13, dans lequel l'étape consistant à établir, par l'ordinateur en réseau, le canal de collaboration en temps réel comprend les étapes consistant à :
établir, par l'ordinateur en réseau, un canal WebSocket entre l'ordinateur en réseau et le terminal d'accès en réseau au moyen d'un serveur WebSocket de prises web ; ou établir, par l'ordinateur en réseau, un deuxième canal VDI entre l'ordinateur en réseau et le terminal d'accès ; ou
établir, par l'ordinateur en réseau, un canal de données point à point entre un navigateur situé dans l'ordinateur en réseau et un navigateur situé dans le terminal d'accès à l'aide d'un mécanisme de canal de données d'une application de communication en temps réel web de navigateur, WebRTC, de l'ordinateur en réseau.

15. Procédé pour émettre un flux multimédia selon la revendication 13 ou 14, dans lequel le premier paramètre d'attribut multimédia contient un format multimédia pris en charge par le dispositif de communication, et une adresse IP et un numéro de port qui sont utilisés pour recevoir des éléments multimédia ; et
l'étape consistant à acheminer, par l'ordinateur en réseau, des informations pour l'exécution de la négociation multimédia entre le terminal d'accès et le dispositif de communication comprend les étapes consistant à :
recevoir, par l'ordinateur en réseau en provenance du terminal d'accès sur le canal de collaboration en temps réel, un deuxième paramètre d'attribut multimédia, le deuxième paramètre d'attribut multimédia contenant une adresse IP et un numéro de port du terminal d'accès qui sont utilisés pour recevoir des éléments multimédia, et un format multimédia qui est pris en charge à la fois par le terminal d'accès et par le dispositif de communication et qui est déterminé par le terminal d'accès d'après le premier paramètre d'attribut multimédia ; et
acheminer, par l'ordinateur en réseau, le deuxième paramètre d'attribut multimédia à destination du dispositif de communication.

16. Procédé pour émettre un flux multimédia selon la revendication 15, le procédé, avant l'étape consistant à acheminer, par l'ordinateur en réseau, le deuxième paramètre d'attribut multimédia au dispositif de communication, comprenant également les étapes consistant à :
appeler, par l'ordinateur en réseau, une pile de protocoles de message de signalisation WebRTC ;
effectuer, par l'ordinateur en réseau, un traitement d'encapsulation sur le deuxième paramètre d'attribut multimédia au moyen de la pile de protocoles de message de signalisation, afin de générer une réponse d'appel ; et
envoyer, par l'ordinateur en réseau, la réponse d'appel au dispositif de communication, la réponse d'appel contenant le deuxième paramètre d'attribut multimédia.

17. Appareil pour émettre un flux multimédia, l'appareil comprenant :
une unité d'établissement de canal de collaboration (810), conçue pour établir un canal de collaboration en temps réel entre l'appareil et un ordinateur en réseau ;
une unité d'envoi (820), conçue pour envoyer à l'ordinateur en réseau, sur un premier canal d'infrastructure de bureau virtualisée, VDI, établi entre l'appareil et l'ordinateur en réseau, une instruction d'opération reçue par l'appareil en provenance d'une interface d'application d'utilisateur et agencée pour ordonner le lancement d'un appel à un dispositif de communication ;
une unité de réception (830), conçue pour recevoir de l'ordinateur en réseau, sur le canal de collaboration en temps réel, un message de collaboration en temps réel agencé pour ordonner à l'appareil de lancer une négociation multimédia avec le dispositif de communication à appeler ;
une unité de détermination de négociation (840), conçue pour effectuer la négociation multimédia avec le dispositif de communication sur le canal de collaboration en temps réel pour déterminer un paramètre d'attribut multimédia ; et
l'unité d'émission multimédia (850), conçue pour émettre le flux multimédia à destination du dispositif de communication selon le paramètre d'attribut multimédia.

18. Appareil pour émettre un flux multimédia selon la revendication 17, dans lequel l'unité d'établissement de canal de collaboration est spécifiquement conçue pour :
établir un canal WebSocket entre l'appareil et l'ordinateur en réseau au moyen d'un serveur WebSocket de prises web ; ou
établir un deuxième canal VDI entre l'appareil et l'ordinateur en réseau ; ou
établir un canal de données point à point entre un navigateur situé dans l'appareil et un navigateur situé dans l'ordinateur en réseau à l'aide d'un mécanisme de canal de données d'une application de communication en temps réel web de navigateur, WebRTC, de l'appareil.

19. Appareil pour émettre un flux multimédia, l'appareil comprenant :
une unité d'établissement de canal de collaboration (1010), conçue pour établir un canal de collaboration en temps réel entre l'appareil et un terminal d'accès ;
une unité de réception (1020), conçue pour recevoir du terminal d'accès, par un premier canal VDI établi entre l'appareil et le terminal d'accès, une instruction d'opération qui est agencée pour ordonner le lancement d'un appel à un dispositif de communication ; et
une unité d'envoi (1030), conçue pour : lorsqu'il est déterminé que l'instruction d'opération est une instruction d'opération servant à ordonner le lancement de l'appel, envoyer un message de collaboration en temps réel au terminal d'accès sur le canal de collaboration en temps réel, le message de collaboration en temps réel étant agencé pour ordonner au terminal d'accès de lancer une négociation multimédia avec le dispositif de communication à appeler ;
l'unité d'envoi étant également conçue pour acheminer à destination du terminal d'accès, sur le canal de collaboration en temps réel, des informations pour la négociation multimédia entre le terminal d'accès et le dispositif de communication, et pour déterminer un paramètre d'attribut multimédia pour une émission de flux multimédia entre le terminal d'accès et le dispositif de communication.

20. Appareil pour émettre un flux multimédia selon la revendication 19, dans lequel l'unité d'établissement de canal de collaboration est spécifiquement conçue pour :
établir un canal WebSocket entre l'appareil et le terminal d'accès au moyen d'un serveur WebSocket de prises web ; ou
établir un deuxième canal VDI entre l'appareil et le terminal d'accès ; ou
établir un canal de données point à point entre un navigateur situé dans l'appareil et un navigateur situé dans le terminal d'accès à l'aide d'un mécanisme de canal de données d'une application de communication en temps réel web de navigateur, WebRTC, de l'appareil.

21. Appareil pour émettre un flux multimédia, l'appareil comprenant :
une unité d'établissement de canal de collaboration (1210), conçue pour établir un canal de collaboration en temps réel entre l'appareil et un ordinateur en réseau ;
une unité de réception (1220), conçue pour recevoir de l'ordinateur en réseau, sur le canal de collaboration en temps réel, un message de collaboration en temps réel, le message de collaboration en temps réel contenant un premier paramètre d'attribut multimédia qui est pris en charge par un dispositif de communication et qui est obtenu par une analyse d'une demande d'appel du dispositif de communication, et le message de collaboration en temps réel étant agencé pour ordonner à l'appareil d'effectuer une négociation multimédia avec le dispositif de communication selon le premier paramètre d'attribut multimédia pris en charge par le dispositif de communication ;
une unité de détermination de négociation (1230), conçue pour effectuer la négociation multimédia avec le dispositif de communication sur le canal de collaboration en temps réel afin de déterminer un paramètre d'attribut multimédia pour l'émission d'un flux multimédia ; et
l'unité d'émission multimédia (1240), conçue pour envoyer le flux multimédia au dispositif de communication selon le paramètre d'attribut multimédia.

22. Appareil pour émettre un flux multimédia selon la revendication 21, dans lequel l'unité d'établissement de canal de collaboration est spécifiquement conçue pour :
établir un canal WebSocket entre l'appareil et l'ordinateur en réseau au moyen d'un serveur WebSocket de prises web ; ou
établir un deuxième canal VDI entre l'appareil et l'ordinateur en réseau ; ou
établir un canal de données point à point entre un navigateur situé dans l'appareil et un navigateur situé dans l'ordinateur en réseau à l'aide d'un mécanisme de canal de données d'une application de communication en temps réel web de navigateur, WebRTC, de l'appareil.

23. Appareil pour émettre un flux multimédia, l'appareil comprenant :
une unité d'établissement de canal de collaboration (1410), conçue pour établir un canal de collaboration en temps réel entre l'appareil et un terminal d'accès ; et
une unité de réception (1420), conçue pour recevoir d'un dispositif de communication une demande d'appel pour appeler un utilisateur correspondant au terminal d'accès, et conçue pour émettre la demande d'appel à destination d'une unité d'envoi ;
l'appareil étant conçu pour obtenir, par une analyse de la demande d'appel, un premier paramètre d'attribut multimédia qui est pris en charge par le dispositif de communication ; et
l'appareil comprenant également :
l'unité d'envoi (1430), conçue pour envoyer, selon la demande d'appel, un message de collaboration en temps réel au terminal d'accès sur le canal de collaboration en temps réel, le message de collaboration en temps réel contenant le premier paramètre d'attribut multimédia et étant agencé pour ordonner au terminal d'accès d'effectuer une négociation multimédia avec le dispositif de communication selon le premier paramètre d'attribut multimédia ; et
l'unité d'envoi étant également conçue pour acheminer à destination du terminal d'accès, sur le canal de collaboration en temps réel, des informations pour l'exécution d'une négociation multimédia entre le terminal d'accès et le dispositif de communication, afin de déterminer, au moyen de la négociation multimédia, un paramètre d'attribut multimédia pour l'émission d'un flux multimédia entre le terminal d'accès et le dispositif de communication.

24. Appareil pour émettre un flux multimédia selon la revendication 23, dans lequel l'unité d'établissement de canal de collaboration est spécifiquement conçue pour :
établir un canal WebSocket entre l'appareil et le terminal d'accès au moyen d'un serveur WebSocket de prises web ; ou
établir un deuxième canal VDI entre l'appareil et le terminal d'accès ; ou
établir un canal de données point à point entre un navigateur situé dans l'appareil et un navigateur situé dans le terminal d'accès à l'aide d'un mécanisme de canal de données d'une application de communication en temps réel web de navigateur, WebRTC, de l'appareil.
